# EUROPEAN PATENT APPLICATION

(11) **EP 4 509 416 A1**
(43) Date of publication of application: **19.02.2025**
(21) Application number: 23788241.0
(22) Date of filing: 05.04.2023
(51) Int. Cl.: B65D 1/02, B29B 11/04, B29B 11/08, B29B 11/10, B29C 49/22, B65D 25/16, B65D 77/04, B65D 41/02, B65D 41/04, B65D 41/16, B65D 47/12, B65D 47/32, B65D 51/18

(54) **DUAL CONTAINER, REGENERATED RESIN PRODUCTION METHOD, PREFORM, AND METHOD FOR EXTRACTING INNER BAG OF DUAL CONTAINER**

(30) Priority: 11.04.2022 JP 2022065309; 21.04.2022 JP 2022070157; 06.09.2022 JP 2022141580; 09.09.2022 JP 2022143956; 14.09.2022 JP 2022146536; 20.09.2022 JP 2022148812; 22.09.2022 JP 2022150958; 27.09.2022 JP 2022153555
(71) Applicant: KYORAKU CO., LTD., Kyoto-shi, Kyoto 602-0912 (JP)
(72) Inventor: MUROYA, Yosuke, Yamato-shi, Kanagawa 242-0018 (JP); TARUNO, Shinsuke, Yamato-shi, Kanagawa 242-0018 (JP); OHMURA, Ippei, Yamato-shi, Kanagawa 242-0018 (JP); MORIOKA, Shun, Tokyo 103-0004 (JP); KUNIMORI, Kentaro, Yamato-shi, Kanagawa 242-0018 (JP)
(74) Representative: Gulde & Partner
(86) International application number: PCT/JP2023/014081
(87) International publication number: WO 2023/199822

(57) **Abstract**

The present invention provides a dual container with excellent recyclability. According to the present invention, there is provided a dual container, comprising a container body and a mouth portion attachment, wherein the container body includes an inner bag and an outer shell that is disposed to cover the inner bag, and the inner bag is configured to be extractable from the container body, and the mouth portion attachment is attached to a mouth portion of the inner bag and is configured to be removable from the mouth portion.

## Description

### BACKGROUND OF THE INVENTION

### Field of the Invention

The present invention pertains to a dual container, regenerated resin production method, preform, and method for extracting an inner bag of a dual container.

### Description of the Related Art

Conventionally, dual containers that comprise a container body having an outer shell and an inner bag are known. For example, Patent Literature 1 discloses a dual container formed by performing biaxial stretch blow molding while an outer shell preform and an inner bag preform are stacked on each other.

### Patent Literature

Patent Literature 1: JPA2019-10741

### SUMMARY OF THE INVENTION

### Technical Problem

### (First perspective)

If the outer shell and inner bag of such a dual container are each made of different materials, or if contents residue remains on the inner bag after use, it is desirable to separate the outer shell and inner bag to recycle the dual container.

Additionally, there could be a case where the outer shell and inner bag are separated while the cap is attached to the inner bag, and if the cap and inner bag are each made of different materials, it is desirable to separate the cap and inner bag as well.

The present invention has been created in view of these circumstances, and provides a dual container with excellent recyclability.

### (Second perspective)

There is a case where the inner bag is desirably formed thinner than the outer shell. In order to make the inner bag thinner, the wall thickness of the inner preform can be reduced. However, the thinner the inner preform becomes, the more difficult it becomes to mold the inner preform, and/or the more difficult it becomes to handle the inner preform. Hence, there is a limit to how thin the inner bag can be made by thinning the inner preform.

The present invention has been created in view of these circumstances, and provides a preform that enables the inner bag to become thinner.

### (Third perspective)

If the outer shell and inner bag of such a dual container are each made of different materials, or if contents residue remains on the inner bag after use, it is desirable to separate the outer shell and inner bag to recycle the dual container.

The outer shell and inner bag are intended to be separated by pulling the inner bag out of the container body. A potential way to simplify as much as possible the process of extracting the inner bag from the container body is to extract the inner bag by pulling a cap while the cap is axially engaged with the inner bag.

However, in order to prevent the contents of the inner bag from leaking, the cap is attached in such a way to seal the opening of the inner bag; if an attempt is made to extract the inner bag with the cap attached, extracting the inner bag 4 may become difficult as the inner bag 4 may not shrink due to the air inside the inner bag 4 not being able to escape.

The present invention has been created in view of these circumstances, and provides a dual container in which the inner bag is easily extractable from the container body.

### (4th, 5th and 7th perspectives)

If the outer shell and inner bag of such a dual container are each made of different materials, or if contents residue remains on the inner bag after use, it is desirable to separate the outer shell and inner bag to recycle the dual container.

It is assumed that the outer shell and inner bag can be separated by pulling the inner bag out of the container body, and it is desirable to make extracting the inner bag from the container body easier.

The present invention has been created in view of these circumstances, and provides a dual container in which the inner bag is easily extractable from the container body.

### (Sixth viewpoint)

If the outer shell and inner bag of such a dual container are each made of different materials, or if contents residue remains on the inner bag after use, it is desirable to separate the outer shell and inner bag to recycle the dual container.

It is assumed that the outer shell and inner bag can be separated by pulling the inner bag out of the container body, and it is desirable to make extracting the inner bag from the container body easier.

It can be made easy to extract the inner bag from the container body by rotating and twisting a mouth portion of the inner bag. However, if the inner bag is accidentally twisted while the inner bag has contents inside, the contents may overflow, which is a concern.

Hence, it is desirable to make extracting the inner bag from the container body easier and, at the same time, to prevent the inner bag from being twisted unexpectedly.

The present invention has been created in view of these circumstances, and provides a dual container in which the inner bag is easily extractable from the container body and, at the same time, the inner bag is prevented from being twisted unexpectedly.

### Solution to Problem

### (First perspective)

According to the present invention, the following perspectives are provided. The first perspective includes 1A and 1B perspectives.
(1) (1A perspective) A dual container, comprising a container body and a mouth portion attachment, wherein the container body includes an inner bag and an outer shell that is disposed to cover the inner bag, and the inner bag is configured to be extractable from the container body, and the mouth portion attachment is attached to a mouth portion of the inner bag and is configured to be removable from the mouth portion.
   In the dual container of the present invention, the mouth portion attachment is attached to the mouth portion of the inner bag and is configured to be removable from the mouth portion. Hence, it is easy to separate the inner bag and the mouth portion attachment. Moreover, the inner bag can be separated from the outer shell by extracting the inner bag from the container body. Thus, the dual container of the present invention has excellent recyclability.
(2) The dual container of (1), wherein the mouth portion attachment is attached to the mouth portion of the inner bag by pushing-in.
(3) The dual container of (1), wherein the mouth portion attachment includes an engaging portion that engages with the inner bag, and the mouth portion attachment is configured to be removable from the mouth portion by removing a portion having the engaging portion from the mouth portion attachment.
(4) A method for extracting an inner bag of the dual container of any one of (1) to (3), comprising a step of removing the mouth portion attachment from the mouth portion after extracting the inner bag from the container body.
(5) (1B perspective) A method for producing regenerated resin from a dual container as a raw material, comprising a regeneration step, wherein in the regeneration step, regenerated resin is produced by carrying out a regeneration treatment on a treatment target member, and the dual container includes a container body and a mouth portion attachment, and the container body includes an inner bag and an outer shell that is disposed to cover the inner bag, and the mouth portion attachment is attached to a mouth portion of the inner bag, and the treatment target member is a member in which the mouth portion attachment is attached to the inner bag.
(6) The method of (5), wherein main resin of the inner bag and main resin of the mouth portion attachment are similar resins.
(7) The method of (6), wherein a ratio of all different resins, calculated by [(Ac+Bc)/(A+B)], is 10% by mass or less, wherein A represents mass of the inner bag, Ac represents mass of different resins excluding the main resin in the inner bag, B represents mass of the mouth portion attachment, and Bc represents mass of different resins excluding the main resin in the mouth portion attachment.
(8) The method of (7), wherein a ratio of different resins in the inner bag, calculated by Ac/A, is 5% by mass or more.
(9) The method of (8), wherein the ratio of different resins in the inner bag is 10% by mass or more, and the ratio of all different resins is 5% by mass or less.
(10) The method of any one of (5) to (9), wherein main resin of the inner bag and main resin of the mouth portion attachment are polyolefin-based resins.

### (Second perspective)

According to the present invention, the following perspectives are provided. The second perspective includes 2A, 2B, and 2C perspectives.
(1) (2A perspective) A preform formed by covering an inner preform with an outer preform, wherein Di_{0.2}/Do_{0.2} is 0.70 or less, wherein Di_{0.2} represents an outer diameter of the inner preform at a position 0.2H from a lower end of the outer preform, H represents a total height of the outer preform, and Do_{0.2} represents an outer diameter of the outer preform.
   In the present invention, Di_{0.2}/Do_{0.2} is 0.70 or less; hence, during biaxial stretch blow molding, the inner preform is stretched to a greater extent than the outer preform near the bottom of the preform, thereby facilitating the reduction in thickness. Thus, according to the present invention, the inner bag can be made thinner.
(2) The preform of (1), wherein the inner preform includes an inwardly curved portion that curves so as to protrude inwardly.
(3) The preform of (2), wherein Hc/H is 0.10 or more, wherein Hc represents a height range of the inwardly curved portion.
(4) The preform of (2) or (3), wherein a gap between the inner preform and the outer preform is maximized at the inwardly curved portion within a range of 0.2H to 1.0H from the lower end of the outer preform.
(5) The preform of any one of (1) to (4), wherein Di_{0.2}/Di is 0.60 or less, wherein Di represents an outer diameter of the inner preform at an opening end of the outer preform.
(6) The preform of any one of (1) to (5), wherein Do_{0.2}/Do is 0.95 or less, wherein Do represents an outer diameter of the outer preform at an opening end of the outer preform.
(7) (2B perspective) A preform formed by covering an inner preform with an outer preform, wherein a mouth portion of the outer preform comprises a through hole, and an inner surface of the mouth portion of the outer preform comprises a protruding strip extending toward a bottom side of the outer preform.
(8) The preform of (7), wherein the outer preform is formed by injection molding, and the inner preform is formed by direct blow molding.
(9) The preform of (7) or (8), wherein a lower end of the protruding strip is positioned at 0.8H or less from a lower end of the outer preform, wherein H represents a total height of the outer preform.
(10) (2C perspective) A dual container, comprising a container body, wherein the container body includes an inner bag and an outer shell that is disposed to cover the inner bag, and the outer shell includes an outer shell main body and an engaging member that is connected to the outer shell main body, and the inner bag engages with the engaging member in an axial direction, and the outer shell main body is configured to be separable from the engaging member.
(11) The dual container of (10), wherein the engaging member is screwed to the outer shell main body.

### (Third perspective)

According to the present invention, the following perspectives are provided.
(1) A dual container, comprising a container body and a cap, wherein the container body includes an inner bag and an outer shell that is disposed to cover the inner bag, and the cap is attached to a mouth portion of the container body, and the cap includes an inner plug and a cap main body, and the inner plug is engaged with the inner bag in the axial direction of the mouth portion, and has an opening that communicates with an inside of the inner bag, and the cap main body is attached to the inner plug, and the cap is configured to be able to switch from a closed state to a released state while the cap main body is attached, by moving the cap main body relative to the inner plug in the axial direction, to the inner plug, and the closed state is a state in which closing of the opening is achieved by the cap main body, and the released state is a state in which the closing is released.
   The dual container of the present invention is configured in such a way that the closed state can be switched to the released state by moving the cap main body in the axial direction. Hence, by putting the cap main body in the released state, the air inside the inner bag can be smoothly released when the inner bag shrinks, allowing the inner bag to be easily deflated and extracted from the container body.
(2) The dual container of (1), wherein the inner plug is engaged with a mouth portion of the inner bag in a circumferential direction of the mouth portion, and the inner plug is configured to rotate integrally with the cap main body in the released state.
(3) The dual container of (2), wherein a cam mechanism is provided that displaces the inner bag so that the inner bag comes out of the container body when the inner bag is rotated with respect to the outer shell.
(4) The dual container of any one of (1) to (3), wherein the cap main body is attached to the inner plug by screwing, and rotating the cap main body with respect to the inner plug causes moving of the cap main body in the axial direction, and as a result of the moving, the closed state is switched to the released state.
(5) A dual container, comprising a container body and a mouth portion attachment, wherein the container body includes an inner bag and an outer shell that is disposed to cover the inner bag, and the mouth portion attachment is attached to a mouth portion of the inner bag, and the dual container is configured so as to allow air inside the inner bag to be discharged when the inner bag is extracted from the container body while the mouth portion attachment is attached to the mouth portion.
(6) A method for extracting an inner bag, comprising a step of extracting the inner bag, wherein extracting of the inner bag from a container body having the inner bag and an outer shell is performed in the step of extracting the inner bag, and the extracting is performed while a mouth portion attachment is attached to a mouth portion of the inner bag and air inside the inner bag is dischargeable.

### (Fourth perspective)

According to the present invention, the following perspectives are provided.
(1) A dual container, comprising a container body and a cap, wherein the container body includes an inner bag and an outer shell that is disposed to cover the inner bag, and the cap is attached to a mouth portion of the container body, and the inner bag in the mouth portion includes a protrusion that protrudes from the outer shell, and the cap includes a cam member and a cap trunk portion, and the cam member is engaged with the outer shell in a circumferential direction of the mouth portion, and the protrusion is configured to move outward in an axial direction of the mouth portion due to action of a cam mechanism between the cam member and the protrusion, when the protrusion is rotated with respect to the cam member, and the cap trunk portion engages with the protrusion in the axial direction and the circumferential direction.
(2) The dual container of (1), wherein the cam mechanism includes a first cam portion provided on the protrusion and a second cam portion provided on the cam member, and the first cam portion moves relative to the second cam portion in an axial direction when the protrusion is rotated with respect to the cam member, allowing the protrusion to move outward in the axial direction.
(3) The dual container of (2), wherein the second cam portion is located closer to an opening end of the protrusion than the first cam portion in an initial state before starting to extract the inner bag from the container body, and the second cam portion is pressed toward the first cam portion in the initial state.
(4) The dual container of (2) or (3), wherein the first cam portion is a male threaded portion, and the second cam portion is a female threaded portion.

In the dual container of the present invention, the inner bag is configured to move in an axial direction of the protrusion by action of the cam mechanism between the cam member provided on the cap and the protrusion of the inner bag. The cap trunk portion engages with the protrusion of the inner bag in the axial and circumferential directions. Hence, rotating the cap trunk portion during extracting the inner bag results in rotation of the protrusion of the inner bag, and this rotation causes the protrusion to move outward in the axial direction, and hence the inner bag moves outward in the axial direction while being twisted. After this, the inner bag is extractable by grasping and pulling the cap trunk portion. The force required to extract the inner bag tends to be large in an initial stage of the extraction, but in a configuration of the present invention, the inner bag moves axially outward while being twisted due to rotation of the protrusion of the inner bag, making it easy to extract the inner bag from the container body.

### (Fifth perspective)

According to the present invention, the following perspectives are provided. The fifth perspective includes 5A, 5B, and 5C perspectives.
(1) (5A perspective) A dual container, comprising a container body and a mouth portion attachment, wherein the mouth portion attachment is attached to a mouth portion of the container body, and the container body includes an inner bag and an outer shell that is disposed to cover the inner bag, and the inner bag includes a protrusion that protrudes from an opening end of the outer shell, and the protrusion is provided with a gripping portion having an anti-slip shape.
   In the dual container of the present invention, an anti-slip shape is provided on a peripheral surface of the protrusion of the inner bag, making it easy to grasp and extract the inner bag.
(2) The dual container of (1), wherein in the state where the mouth portion attachment is attached to the mouth portion, the anti-slip shape is not engaged with the mouth portion attachment in a circumferential direction, and the gripping portion is not covered by the mouth portion attachment.
(3) The dual container of (1) or (2), wherein the anti-slip shape is an uneven shape.
(4) The dual container of (1) or (2), wherein the anti-slip shape includes a protrusion that protrudes in a radial direction beyond an outer edge of an attachment portion that is a portion of the mouth portion attachment and is attached to the mouth portion.
(5) (5B perspective) A dual container, comprising a container body and a mouth portion attachment, wherein the mouth portion attachment includes an inner plug that is attached to a mouth portion of the container body, and an overcap that is attached to the inner plug, and the container body includes an inner bag and an outer shell that is disposed to cover the inner bag, and the mouth portion attachment is configured to be removable from the mouth portion, and a mouth portion of the inner bag and the overcap each comprise an engaging protrusion that allows the mouth portion of the inner bag to engage with the overcap in a circumferential direction.
(6) The dual container of (5), wherein the inner plug is attached to the mouth portion of the inner bag.
(7) (5C perspective) A method for extracting an inner bag of a dual container, wherein the dual container includes a container body and a mouth portion attachment, and the mouth portion attachment is attached to a mouth portion of the container body, and the container body includes an inner bag and an outer shell that is disposed to cover the inner bag, and the method includes a step of removing the mouth portion attachment and a step of extracting the inner bag, and in the step of removing the mouth portion attachment, the mouth portion attachment is removed from the mouth portion, and in the step of extracting the inner bag, the inner bag is removed while or after the inner bag is twisted by rotating a twisting jig while a mouth portion of the inner bag are engaged with the twisting jig in a circumferential direction.
(8) The method of (7), wherein the mouth portion attachment includes an inner plug that is attached to the mouth portion of the container body, and an overcap that is attached to the inner plug, and the twisting jig is the overcap.
(9) The method of (8), wherein the inner plug is attached to the mouth portion of the inner bag.

### (Sixth perspective)

According to the present invention, the following perspectives are provided.
(1) A dual container, comprising a container body and a mouth portion attachment, wherein the container body includes an inner bag and an outer shell that is disposed to cover the inner bag, and the mouth portion attachment is attached to a mouth portion of the container body, and restriction of rotation of a mouth portion of the inner bag with respect to the outer shell is performed by a locking mechanism or a rotation prevention seal, and the restriction is released by releasing lock of the locking mechanism or by removing or breaking the rotation prevention seal.
(2) The dual container of (1), wherein rotation of the mouth portion of the inner bag with respect to the outer shell is restricted by the locking mechanism, and the locking mechanism is an inner bag locking mechanism that restricts rotation of the mouth portion of the inner bag by circumferential engagement between the outer shell and the inner bag.
(3) The dual container of (2), wherein the inner bag locking mechanism is configured in such a way that lock by the inner bag locking mechanism is releasable by displacing the inner bag in an axial direction with respect to the outer shell.
(4) The dual container of any one of (1) to (3), wherein the mouth portion attachment engages with the inner bag in a circumferential direction, and rotation of the inner bag relative to the outer shell is restricted by the rotation prevention seal, and the rotation prevention seal is attached across the outer shell and the mouth portion attachment.

In the present invention, accidental twisting of the inner bag is prevented, since the rotation of the mouth portion of the inner bag with respect to the outer shell is restricted by the lock mechanism or the rotation prevention seal. Additionally, the mouth portion of the inner bag can be rotated relative to the outer shell by unlocking the lock mechanism, or by removing or breaking the rotation prevention seal. Hence, by rotating the mouth portion of the inner bag relative to the outer shell to twist the inner bag, the inner bag is easily extractable from the container body.

### (Seventh perspective)

According to the present invention, the following perspectives are provided. The seventh perspective includes 7A, 7B, and 7C perspectives.
(1) (7A perspective) A dual container, comprising a container body and a mouth portion attachment, wherein the mouth portion attachment is attached to a mouth portion of the container body, and the container body includes an inner bag and an outer shell that is disposed to cover the inner bag, and the inner bag includes a protrusion that protrudes from an opening end of the outer shell, and the dual container includes a biasing portion that applies a biasing force to the inner bag in a direction of coming out of the container body, and the dual container includes a restricting portion that restricts movement of the inner bag due to the biasing force.
   In the dual container of the present invention, releasing restriction by the restricting portion allows the inner bag to move in the direction of coming out of the container body due to the biasing force by the biasing portion. This movement causes the inner bag to float away from the outer shell, making it easy to extract the inner bag.
(2) The dual container of (1), wherein the inner bag includes an enlarged diameter portion facing the opening end of the outer shell, and the biasing portion is provided between the opening end of the outer shell and the enlarged diameter portion.
(3) The dual container of (1) or (2), wherein the restricting portion has an engaging portion by which the mouth portion attachment is engaged with the outer shell, and restriction by the restricting portion is released by releasing engagement between the mouth portion attachment and the outer shell.
(4) (7B perspective) A dual container, comprising a container body and a mouth portion attachment, wherein the mouth portion attachment is attached to a mouth portion of the container body, and the container body includes an inner bag and an outer shell that is disposed to cover the inner bag, and the inner bag or the mouth portion attachment comprises a hook portion having an annular portion.
(5) The dual container of (4), wherein the hook portion is provided on the inner bag.
(6) The dual container of (4) or (5), wherein the hook portion is provided on the mouth portion attachment.
(7) (7C perspective) A method for extracting an inner bag of a dual container, wherein the dual container includes a container body, and the container body includes an inner bag and an outer shell that is disposed to cover the inner bag, and the method includes a step of extracting the inner bag from the container body, and a twist angle of the inner bag during the extracting is 45 degrees or less.

### BRIEF DESCRIPTION OF THE DRAWINGS

(First perspective)
   FIG. 1 is a perspective view of a dual container 1 according to a first embodiment of a first perspective of the present invention. The dashed-dotted line in the figure represents the boundary line where the curvature of the surfaces constituting the surface geometry changes. The same applies to the other figures. FIG. 2 is an exploded perspective view of FIG. 1.
   FIG. 3 is an enlarged view of area A in FIG. 2.
   FIG. 4 is an exploded perspective view of FIG. 3.
   FIG. 5 is a longitudinal cross-sectional view, passing through the center of the mouth portion 5, of the overcap 27 and inner plug 26 of FIG. 2.
   FIG. 6 is a longitudinal cross-sectional view, passing through the center of the mouth portion 5, of the dual container 1 shown in FIG. 1, before opening the mouth portion attachment 8.
   FIGs. 7A and 7B are perspective views of the overcap 27 shown in FIG. 2, viewed from a higher position than in FIG. 2; FIGs. 7A and 7B respectively show the state before and after the hook portion 50 is erected.
   FIG. 8 is a perspective view showing a state in which the inner preform 14 and the outer preform 13 are separated.
   FIG. 9 is a perspective view of a dual container 1 according to a second embodiment of the first perspective of the present invention.
   FIG. 10 is an exploded perspective view of FIG. 9.
   FIG. 11 is an exploded perspective view of area A in FIG. 10, viewed from a higher position than in FIG. 10.
   FIG. 12 is a longitudinal cross-sectional view, passing through the center of the mouth portion 5, of the dual container 1 shown in FIG. 9, before opening the mouth portion attachment 8.
   FIG. 13 is a perspective view of a treatment target member 52, which is a mouth portion attachment 8 attached to an inner bag 4.
(Second perspective)
   FIG. 14 is a perspective view of the dual container 1 according to a first embodiment of a second perspective of the present invention. The dashed-dotted line in the figure represents the boundary line where the curvature of the surfaces constituting the surface geometry changes. The same applies to the other figures. FIG. 15 is an exploded perspective view of FIG. 14.
   FIG. 16 is an enlarged view of area A in FIG. 15.
   FIG. 17 is an exploded perspective view of FIG. 16.
   FIG. 18 is a perspective view of the vicinity of the open end 3a of the outer shell 3.
   FIG. 19 is a perspective view of the inner plug 26 viewed diagonally from below.
   FIG. 20 is a front view (partially a vertical sectional view passing through the center of the mouth portion 5) of the dual container 1 shown in FIG. 14.
   FIG. 21 is a perspective view showing a state in which the inner preform 14 and the outer preform 13 are separated.
   FIG. 22A is a perspective view of the outer preform 13 viewed diagonally from above. FIG. 22B is a longitudinal cross-sectional view of the outer preform 13. FIG. 22C is a sectional view taken along line C-C in FIG. 22C.
   FIG. 23 is an exploded perspective view corresponding to FIG. 17 of a second embodiment of the present invention.
   FIG. 24 is a perspective view of the vicinity of the open end of the outer shell 3 in FIG. 23.
   FIG. 25 is a perspective view, corresponding to FIG. 21, of a second embodiment of the present invention.
   FIG. 26 is a longitudinal cross-sectional view of the second embodiment of the second perspective of the present invention, with the inner preform 14 covered with the outer preform 13.
   FIG. 27 is an exploded perspective view, corresponding to FIG. 17, of a third embodiment of the second perspective of the present invention.
   FIG. 28 is a perspective view of the engaging member 34 shown in FIG. 27, viewed diagonally from below.
   FIG. 29A is a longitudinal sectional view of the container body 2 of FIG. 27 in an assembled state. FIG. 29B is an enlarged view of region B in FIG. 29A.
   FIG. 30 is a perspective view, corresponding to FIG. 21, of a third embodiment of the present invention.
   FIG. 31A and 31B are longitudinal cross-sectional views, corresponding to FIG. 29B, showing modifications 1 and 2 of the third embodiment of the present invention, respectively.
(Third perspective)
   FIG. 32 is a perspective view of the dual container 1 according to a first embodiment of a third perspective of the present invention. The dashed-dotted line in the figure represents the boundary line where the curvature of the surfaces constituting the surface geometry changes. The same applies to the other figures. FIG. 33 is a perspective view of the container body 2 shown in FIG. 32.
   FIG. 34 is an enlarged view of area A in FIG. 33.
   FIG. 35 is a perspective view of the inner bag 4 separated from the outer shell 3.
   FIG. 36 is a perspective view of the vicinity of the open end of the outer shell 3.
   FIG. 37 is an exploded perspective view of the cap 8a in FIG. 32.
   FIG. 38 is a perspective view of the cap 8a shown in FIG. 32, disassembled into a cap main body 87 and an inner plug 26, viewed from below.
   FIG. 39 is a cross-sectional perspective view of the cap trunk portion 88 in FIG. 38.
   FIGs. 40A-40C show a state in which the cap 8a is in a closed state; FIG. 40A is a vertical cross-sectional view passing through the center of the mouth portion 5, and FIGS. 40B and 40C are cross-sectional views taken along line B-B and C-C in FIG. 40A, respectively.
   FIGs. 41A and 41B show a state in which the cap 8a is in a released state; FIG. 41A is a vertical cross-sectional view passing through the center of the mouth portion 5, and FIG. 41B is a cross-sectional view taken along line B-B in FIG. 41A.
   FIG. 42 is an exploded perspective view of a cap 8a according to a second embodiment of the third perspective of the present invention.
   FIG. 43 is a longitudinal cross-sectional view, corresponding to FIG. 40A, showing a state in which the cap 8a of FIG. 42 is in a closed state.
   FIG. 44 is a longitudinal sectional view, corresponding to FIG. 41A, showing a state in which the cap 8a of FIG. 42 is in a released state.
(Fourth perspective)
   FIG. 45 is a perspective view of the dual container 1 according to a first embodiment of a fourth perspective of the present invention. The dashed-dotted line in the figure represents the boundary line where the curvature of the surfaces constituting the surface geometry changes. The same applies to the other figures. FIG. 46 is a perspective view of the container body 2 shown in FIG. 45.
   FIG. 47 is an enlarged view of area A in FIG. 46.
   FIG. 48 is a perspective view of the inner bag 4 separated from the outer shell 3.
   FIG. 49 is an exploded perspective view of the cap 8a in FIG. 45.
   FIG. 50 is a perspective view of the cap 8a shown in FIG. 45, disassembled into a cap main body 87 and a cam member 25, and viewed from below.
   FIG. 51A is a vertical cross-sectional perspective view of the cap trunk portion 88, FIG. 51B is a vertical cross-sectional perspective view with the cam member 25 held within the cap trunk portion 88, and FIG. 51C is an enlarged view of region C in FIG. 51B.
   FIG. 52 is a perspective view of the container body 2 with the cam member 25 attached thereto.
   FIG. 53A is a vertical cross-sectional view, passing through the center of the mouth portion 5, of the dual container 1 shown in FIG. 45, in a state before starting to extract the inner bag 4, and FIG. 53A shows a cross-sectional view taken along line B-B in FIG. 53A.
   FIG. 54 is a longitudinal sectional view corresponding to FIG. 53A, showing a state after the cap trunk portion 88 is rotated and the protrusion 4c is moved axially outward from the state of FIG. 53A.
(Fifth perspective)
   FIG. 55 is a perspective view of the dual container 1 according to a first embodiment of a fifth perspective of the present invention. The dashed-dotted line in the figure represents the boundary line where the curvature of the surfaces constituting the surface geometry changes. The same applies to the other figures.
   FIG. 56 is an exploded perspective view of FIG. 55.
   FIG. 57 is an enlarged view of area A in FIG. 56.
   FIG. 58 is an exploded perspective view of FIG. 57.
   FIG. 59 is a perspective view of the vicinity of the open end of the outer shell 3.
   FIG. 60 is a perspective view of the overcap 27 and the inner plug 26, seen diagonally from below.
   FIG. 61A shows a state in which the inner plug 26 is attached to the inner bag 4. The inner bag 4 is a perspective view showing the vicinity of the opening 5, and the inner plug 26 is a vertical cross-sectional perspective view.
   FIG. 61B is a vertical cross-sectional perspective view of the inner plug 26.
   FIG. 62 is a longitudinal cross-sectional view, passing through the center of the mouth portion 5, of the dual container 1 shown in FIG. 55, before opening the mouth portion attachment 8.
   FIG. 63 is a perspective view showing a state in which the inner preform 14 and the outer preform 13 are separated.
   FIG. 64 is a perspective view showing a preform 15 constructed by covering an inner preform 14 with an outer preform 13.
   FIG. 65 is a perspective view of a dual container 1 according to a second embodiment of the fifth perspective of the present invention.
   FIG. 66 is a plan view of the dual container 1 of FIG. 65.
   FIG. 67 shows a state in which the mouth portion attachment 8 is removed from the dual container 1 of FIG. 65.
   FIG. 68 is an exploded perspective view of area A in FIG. 67.
   FIG. 69 is a perspective view of a dual container 1 according to a third embodiment of the fifth perspective of the present invention.
   FIG. 70 is an exploded perspective view of FIG. 69.
   FIG.71 is an exploded perspective view of area A in FIG. 70.
   FIG. 72 is a perspective view of the overcap 27 and the inner plug 26 of the third embodiment, viewed diagonally from below.
   FIG. 73 is a longitudinal cross-sectional view, passing through the center of the mouth portion 5, of the inner plug 26 of FIG. 72.
   FIG. 74 is a longitudinal cross-sectional view, passing through the center of the mouth portion 5, of the dual container 1 shown in FIG. 55, before opening the mouth portion attachment 8.
   FIG. 75 is a sectional view corresponding to FIG. 74, showing a state in which the overcap 27 is engaged with the mouth portion 5 of the inner bag 4, after the mouth portion attachment 8 has been removed.
(Sixth perspective)
   FIG. 76 is a perspective view of the dual container 1 according to a first embodiment of a sixth perspective of the present invention. The dashed-dotted line in the figure represents the boundary line where the curvature of the surfaces constituting the surface geometry changes. The same applies to the other figures. FIG. 77 is an exploded perspective view of FIG. 76.
   FIG. 78A is an enlarged view of area A in FIG. 77. FIG. 78B shows a state after the inner bag 4 has been displaced in the axial direction and unlocked from the state shown in FIG. 78A.
   FIG. 79 is an exploded perspective view of FIG. 78; regarding the inner bag 4, only a portion near the open end 5c is shown.
   FIG. 80 is a perspective view of the vicinity of the open end of the outer shell 3.
   FIG. 81 is a perspective view showing a state in which the inner preform 14 and the outer preform 13 are separated.
   FIG. 82 is a perspective view showing a preform 15 constructed by covering an inner preform 14 with an outer preform 13.
(Seventh perspective)
   FIG. 83 is a perspective view of the dual container 1 according to a first embodiment of a seventh perspective of the present invention. The dashed-dotted line in the figure represents the boundary line where the curvature of the surfaces constituting the surface geometry changes. The same applies to the other figures. FIG. 84 is an exploded perspective view of FIG. 83.
   FIG. 85 is an enlarged view of area A in FIG. 84.
   FIG. 86 is an exploded perspective view of FIG. 85.
   FIG. 87 is a perspective view of the overcap 27 and the inner plug 26, seen diagonally from below.
   FIG. 88 is a longitudinal cross-sectional view, passing through the center of the mouth portion 5, of the inner plug 26 of FIG. 87.
   FIG.89 is a longitudinal cross-sectional view, passing through the center of the mouth portion 5, of the dual container 1 shown in FIG. 83, before opening the mouth portion attachment 8.
   FIG. 90 is a perspective view showing a state in which the inner preform 14 and the outer preform 13 are separated.

### DESCRIPTION OF THE PREFERRED EMBODIMENT

An embodiment of the present invention is described below. The features of the invention disclosed in the embodiment may be combined with one another. Further, each of the features may be regarded as an independent invention.

### (First perspective)

The first and second embodiments described below mainly relate to the 1A perspective. The invention from the 1B perspective is to be described later in "Description of the invention from the 1B perspective."

### 1. First embodiment

### 1-1. Configuration of the dual container 1

### <Basic configuration>

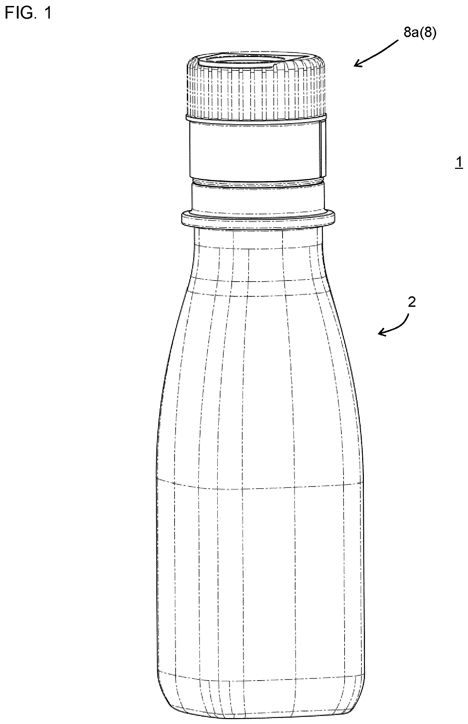

As shown in FIG. 1, the dual container 1 according to the first embodiment of the present invention includes a container body 2 and a mouth portion attachment 8.

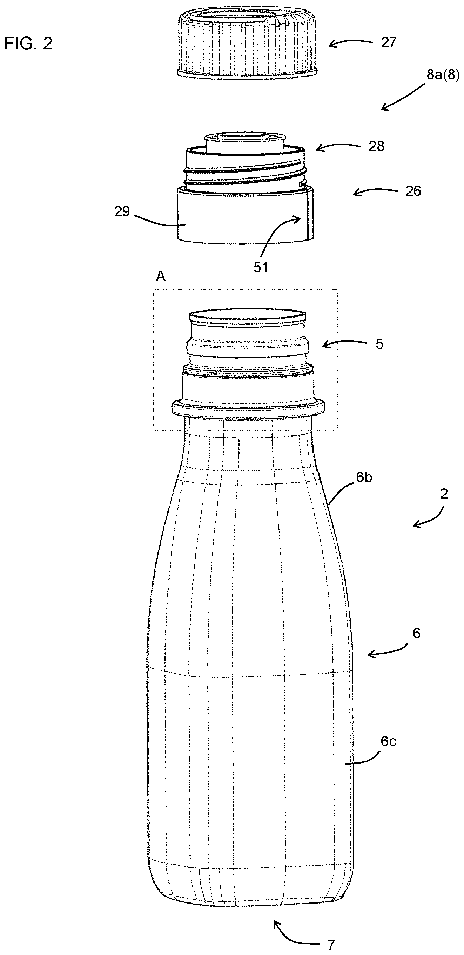

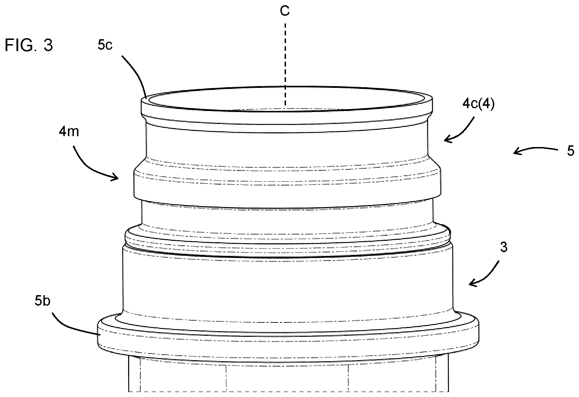

As shown in FIGs. 2 and 3, the container body 2 includes a mouth portion 5, a trunk portion 6, and a bottom portion 7. The mouth portion 5 is a cylindrical (preferably circular cylindrical) portion having an open end 5c. The mouth portion 5 includes an engaging portion 4m to which a mouth portion attachment 8 such as a cap or a pump can be attached. The mouth portion 5 is provided with a flange 5b. The flange 5b can be used to support the mouth portion 5, when the mouth portion attachment 8 is attached to the mouth portion 5. In the following description, "axial direction" and "circumferential direction" mean the axial direction and circumferential direction of the mouth portion 5, respectively, unless otherwise specified. Furthermore, in the following descriptions, the direction toward the bottom portion 7 will be referred to as "down", and the direction toward the mouth portion 5 will be referred to as "up". In addition, the direction in which the inner bag 4 comes out from the container body 2 is referred to as "outward".

The trunk portion 6 is disposed adjacent to the mouth portion 5 on a side further away from the opening end 5c than the mouth portion 5. The trunk portion 6 has a larger outer diameter (in this specification, "outer diameter" means an equivalent circle diameter when the cross section is not circular) than the mouth portion 5. The trunk portion 6 is cylindrical, and the bottom portion 7 is provided at the lower end of the trunk portion 6 and closes the lower end of the trunk portion 6. The trunk portion 6 includes a shoulder portion 6b whose outer diameter increases as the distance from the mouth portion 5 increases. Further, the trunk portion 6 includes a trunk portion main body 6c closer to the bottom portion 7 than the shoulder portion 6b. The trunk portion main body 6c has, for example, a shape in which the outer diameter is substantially constant toward the bottom portion 7, or a shape in which the diameter decreases toward the bottom portion 7.

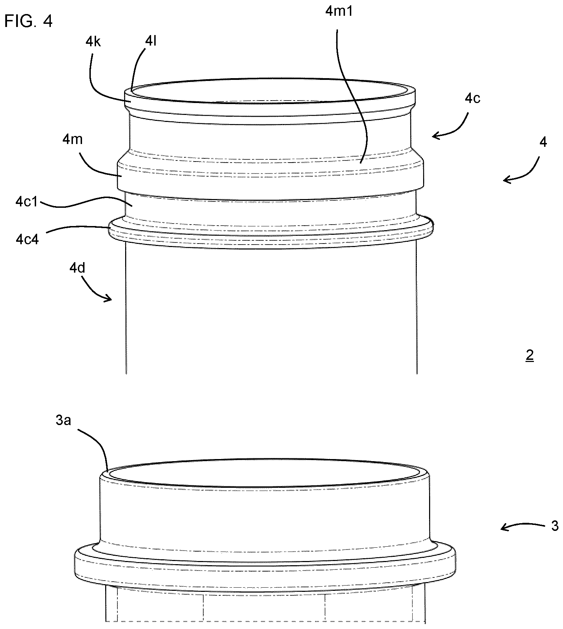

As shown in FIG. 4, the container body 2 includes an inner bag 4 and an outer shell 3 disposed to cover the inner bag 4. The inner bag main body 4d of the inner bag 4 is housed in the outer shell 3 except for the protrusion 4c. In the following descriptions, portions of the inner bag 4 corresponding to the mouth portion 5, trunk portion 6, and bottom portion 7 of the container body 2 will be referred to as the mouth portion 5, trunk portion 6, and bottom portion 7 of the inner bag 4, respectively. The same applies to the outer shell 3.

The average wall thickness of the outer shell 3 at the center of the trunk portion 6 in the height direction is, for example, 200 to 800 µm; a wall thickness between 250 and 500 µm is preferable. This wall thickness is, for example, 250, 300, 350, 400, 450, 500, 550, 600, 650, 700, 750, 800 µm; the wall thickness may also be set to an arbitrary value between any two of these exemplary values.

The average wall thickness of the inner bag 4 at the center of the trunk portion 6 in the height direction is, for example, 50 to 250 µm; a wall thickness between 50 and 100 µm is preferable. This wall thickness is, for example, 50, 60, 70, 80, 90, 100, 110, 120, 130, 140, 150, 160, 170, 180, 190, 200, 210, 220, 230, 240, 250 µm; the wall thickness may also be set to an arbitrary value between any two of these exemplary values. In this specification, the average wall thickness at a predetermined height position means the average value of the measured values at eight measurement points set at equal intervals in the circumferential direction at that height position.

If the mouth portion attachment 8 is not provided with a check valve, the inner bag 4 does not contract even after the contents of the inner bag 4 are discharged. On the other hand, if the mouth portion attachment 8 is provided with a check valve and an air introduction portion is provided between the outer shell 3 and the inner bag 4 to introduce outside air, the inner bag contracts as the contents are discharged. The present invention is applicable to either version. The technical significance of the force-reducing configuration is significant in the case where the inner bag 4 does not contract, because in such a case the force required to extract the inner bag 4 tends to be larger than the case where the inner bag 4 contracts.

The inner diameter of the mouth portion 5 of the outer shell 3 is, for example, 20 to 50 mm; a diameter between 25 and 40 mm is preferable. This diameter is, for example, 20, 25, 30, 35, 40, 45, 50 mm; the diameter may also be set to an arbitrary value between any two of these exemplary values. The length of the mouth portion 5 is, for example, 15 to 45 mm; a length between 15 and 35 mm is preferable. This length is, for example, 15, 20, 25, 30, 35, 40, 45 mm; the length may also be set to an arbitrary value between any two of these exemplary values.

### <Detailed structures of the outer shell 3 and inner bag 4>

As shown in FIGs. 3 and 4, the inner bag 4 includes a protrusion 4c that protrudes from the open end 3a of the outer shell 3. The protrusion 4c includes a protruding cylinder 4c1, an engaging portion 4m, and an abutting flange 4c4.

The engaging portion 4m engages with the mouth portion attachment 8 in the axial direction. The engaging portion 4m comprises an annular protrusion. In this specification, the "axial direction" is the direction in which the central axis C of the mouth portion 5 extends, or in other words, the direction in which the inner bag 4 is extracted from the container body 2. The "circumferential direction" is a direction in which the mouth portion 5 is rotated about the central axis C, or in other words, a direction in which the inner bag 4 is rotated with respect to the outer shell 3 in the mouth portion 5. Further, "upward" means upward in the axial direction, and "downward" means downward in the axial direction.

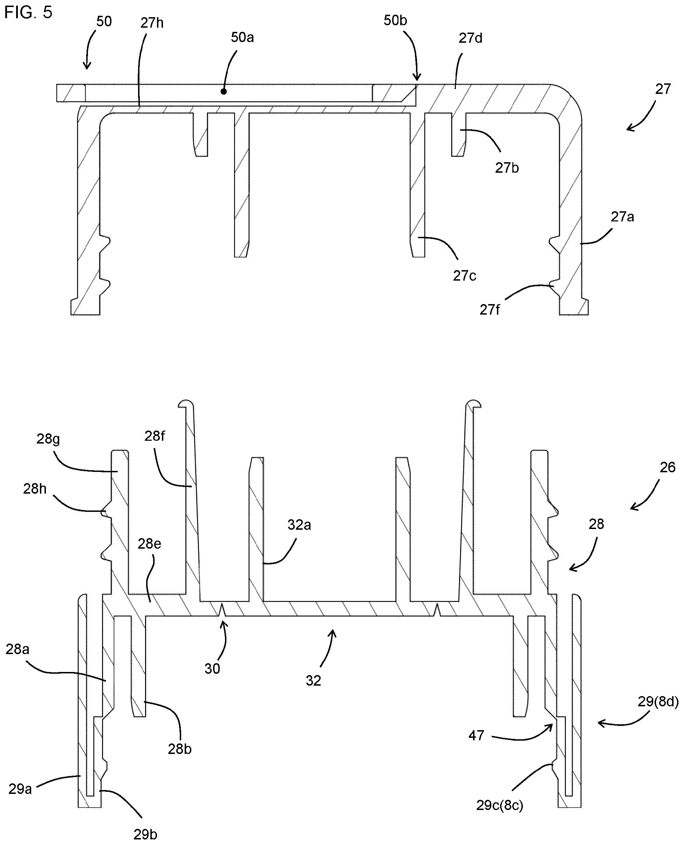

The engaging portion 4m is provided with a tapered surface 4m1 on the upper surface. This makes it easy for the annular protrusion 29c (shown in FIG. 5) of the mouth portion attachment 8 to get over the engaging portion 4m, as described later.

The abutting flange 4c4 is arranged at a position where it contacts the open end 3a. The abutting flange 4c4 is an annular portion whose diameter is larger than that of the protruding cylinder 4c1. As the abutting flange 4c4 is in contact with the open end 3a, the inner bag 4 is prevented from falling into the outer shell 3.

An enlarged diameter structure 4k is provided at the open end 4l of the inner bag 4. The enlarged diameter structure 4k increases the rigidity of the opening 5 of the inner bag 4 and suppresses deformation of the opening 5 of the inner bag 4.

<Detailed structure of the mouth portion attachment 8>

The mouth portion attachment 8 is preferably configured to be attachable to the mouth portion 5 of the inner bag 4 by pushing-in. The mouth portion attachment 8 can be engaged with and attached to the mouth portion 5 by pressing the mouth portion attachment 8, while it is placed over the mouth portion 5, in the direction toward the bottom portion 7. Since the push-in type mouth portion attachment 8 can be attached by simply pressing, it has the advantage that the step of attaching the mouth portion attachment 8 can be simplified on the line for filling the contents.

The mouth portion attachment 8 is configured to be removable from the mouth 5. In this embodiment, as shown in FIG. 5, the mouth portion attachment 8 is provided with an engaging portion 8c that engages with the inner bag 4, and by removing the portion 8d having the engaging portion 8c from the mouth portion attachment 8, the mouth portion attachment 8 is configured to be removable from the mouth 5.

As shown in FIG. 2, in this embodiment, the mouth portion attachment 8 is a cap 8a. The mouth portion attachment 8 includes an inner plug 26 and an overcap 27. The inner plug 26 is engaged with the opening 5 of the inner bag 4 in the axial direction by pushing-in. The overcap 27 is screwed onto the inner plug 26. The inner plug 26 may be engaged with the mouth portion 5 of the inner bag 4 in the circumferential direction and the axial direction by pushing-in.

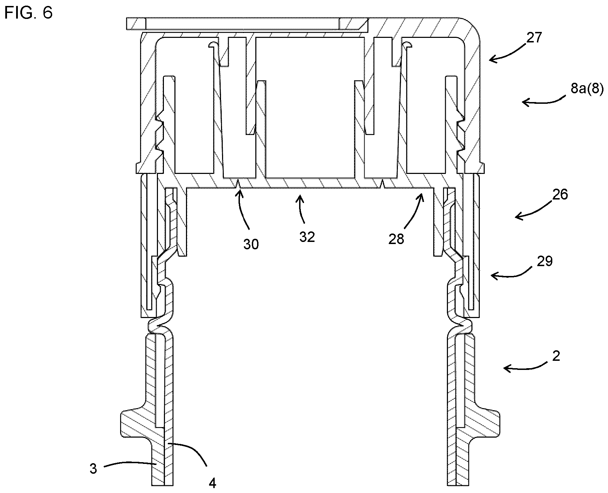

As shown in FIGs. 2 and 5 to 7, the overcap 27 includes an outer cylinder 27a, an intermediate cylinder 27b, an inner cylinder 27c, and a top plate 27d.

A knurl 27e is provided on the outer peripheral surface of the outer cylinder 27a, making it easy to grip and rotate the overcap 27. A female threaded portion 27f is provided on the inner peripheral surface of the outer cylinder 27a. The top plate 27d is provided on the upper surface of the outer cylinder 27a. The intermediate cylinder 27b and the inner cylinder 27c are provided on the lower surface of the top plate 27d. The intermediate cylinder 27b is a so-called inner ring that has a smaller diameter than the outer cylinder 27a and is arranged inside the outer cylinder 27a. The inner cylinder 27c has a smaller diameter than the intermediate cylinder 27b, and is arranged inside the intermediate cylinder 27b.

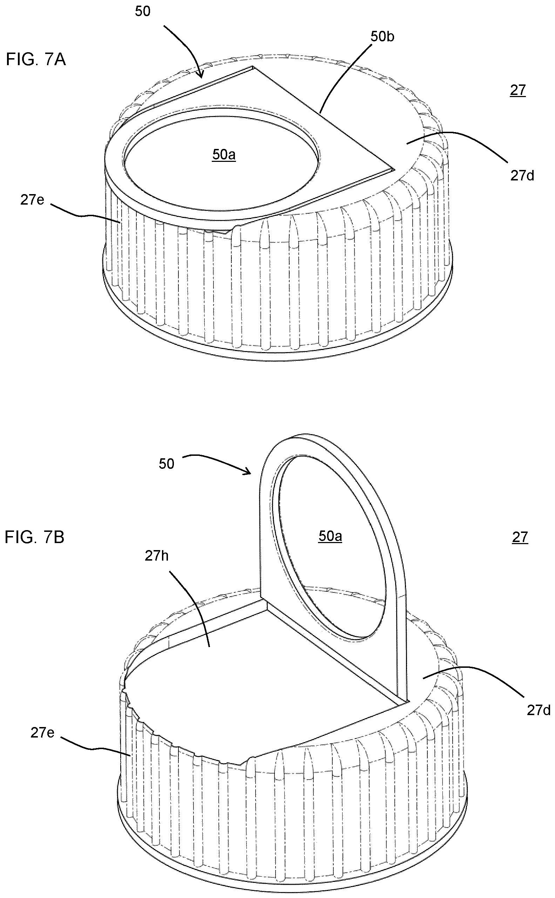

A hook portion 50 is provided on the top plate 27d of the overcap 27. The hook portion 50 is provided with an annular portion 50a; a finger, etc., can be hooked onto the annular portion 50a. The hook portion 50 is connected to the top plate 27d via a hinge 50b, and is rotatable about the hinge 50b. Hence, the hook portion 50 can be placed in a lying position as shown in FIG. 7A, or in an upright position as shown in FIG. 7B. A recess 27h capable of accommodating the hook 50 is provided on the upper surface of the top plate 27d; when using the dual container 1, the hook portion 50 can be kept out of the way by folding it down and storing it in the recess 27h. In a state where the hook portion 50 is housed in the recess 27h, it is preferable that the top surface of the hook portion 50 and the top surface of the top plate 27d are flush with each other.

As shown in FIGs. 2 and 5 to 6, the inner plug 26 includes a main body portion 28, a band portion 29, and an opening portion 32. The main body portion 28 and the band portion 29 are connected to each other via an easy-to-tear connecting portion 47. The main body portion 28 and the opening portion 32 are connected to each other via an easy-to-tear connecting portion 30.

The connecting portion 47 is configured to be able to be torn apart by applying force (shearing force, rotational force, etc.) between the main body portion 28 and the band portion 29. The connecting portion 47 is preferably thinner than the main body portion 28 and the band portion 29.

The band portion 29 engages with the mouth portion 5 of the inner bag 4 in the axial direction. Hence, movement of the band portion 29 in the axial direction with respect to the mouth portion 5 of the inner bag 4 is restricted. The band portion 29 may or may not engage the mouth portion 5 of the outer shell 3 in the circumferential direction.

The band portion 29 includes an outer cylinder 29a and an inner cylinder 29b. Inner cylinder 29b is arranged inside outer cylinder 29a. The outer cylinder 29a and the inner cylinder 29b are connected at the lower end of the band portion 29, and the inner cylinder 29b is connected to the main body portion 28 via the connecting portion 47. The inner cylinder 29b is arranged so as to surround the engaging portion 4m of the inner bag 4. An annular protrusion 29c extending in the circumferential direction is provided on the inner peripheral surface of the inner cylinder 29b. The annular protrusion 29c engages with the engaging portion 4m in the axial direction, so that the band portion 29 engages with the mouth portion 5 of the inner bag 4 in the axial direction. A tapered surface is provided on the lower side of the annular protrusion 29c, reducing the force required for the annular protrusion 29c to climb over the engaging portion 4m. Note that the band portion 29 having the annular protrusion 29c corresponds to the portion 8d having the above-mentioned engaging portion 8c.

The outer cylinder 29a of the band portion 29 is provided with a tear initiation portion 51. The tear initiation portion 51 comprises a thin wall portion, a notch, and a cut. The band portion 29 can be removed by tearing the connecting portion 47 after starting tearing at the tear initiation portion 51. Then, by removing the band portion 29, the mouth portion attachment 8 can be removed from the mouth portion 5.

The main body portion 28 includes an outer cylinder 28a, an inner cylinder 28b, a top plate 28e, a discharge cylinder 28f, and a mounting cylinder 28g. The opening portion 32 and the connecting portion 30 are arranged inside the discharge cylinder 28f and the inner cylinder 28b. The opening portion 32 is provided with an engaging cylinder 32a provided with an engaging portion (not shown), and the inner cylinder 27c and the engaging cylinder 32a are engaged in the circumferential direction and the axial direction. According to such a configuration, by rotating the overcap 27 with respect to the main body portion 28, it becomes possible to rotate the engaging cylinder 32a with respect to the main body portion and break the connecting portion 30. By breaking the connecting portion 30, the opening portion 32 is separated from the main body portion 28, and a flow hole is formed inside the discharge cylinder 28f and the inner cylinder 28b. The contents in the inner bag 4 can be discharged through this flow hole.

The top plate 28e is provided on the upper surface of the outer cylinder 28a. An inner cylinder 28b is provided on the lower surface of the top plate 28e. The inner cylinder 28b is a so-called inner ring that has a smaller diameter than the outer cylinder 28a and is arranged inside the outer cylinder 28a. When the inner plug 26 is attached to the inner bag 4, the inner cylinder 28b is inserted into the inner bag 4, and the outer peripheral surface of the inner cylinder 28b comes into close contact with the inner peripheral surface of the inner bag 4.

A discharge cylinder 28f and a mounting cylinder 28g are provided on the upper surface of the top plate 28e. The contents in the inner bag 4 are discharged through the discharge cylinder 28f. As shown in FIG. 5, a male threaded portion 28h is provided on the outer peripheral surface of the mounting cylinder 28g, and a female threaded portion 27f is provided on the inner peripheral surface of the outer cylinder 27a of the overcap 27; as the male threaded portion 28h engages with female threaded portion 27f, the overcap 27 is screwed onto the inner plug 26. In this case, the overcap 27 can be attached to and removed from the inner plug 26 by rotating the overcap 27 relative to the inner plug 26. When the overcap 27 is attached to the inner plug 26, the intermediate cylinder 27b is inserted into the discharge cylinder 28f, and the outer peripheral surface of the intermediate cylinder 27b is brought into close contact with the inner peripheral surface of the discharge cylinder 28f. The upper side of the discharge cylinder 28f is closed by the overcap 27.

### <Method for extracting the inner bag 4>

In this embodiment, the inner bag 4 is extractable from the container main body 2 by placing the hook portion 50 in an upright state as shown in FIG. 7B and hooking a finger on the annular portion 50a and pulling it. Since the mouth portion attachment 8 is not engaged with the outer shell 3, the inner bag 4 is extractable without performing an operation to release the engagement between the mouth portion attachment 8 and the outer shell 3. The inner bag 4 may be extracted after or while being twisted, or may be extracted without being twisted. If the inner bag 4 is not twisted, the force required to extract the inner bag 4 tends to be large, but by hooking a finger on the annular portion 50a, it is easy to apply a strong force to the inner bag 4. After the inner bag 4 is extracted from the container body 2, the band portion 29 can be removed to remove the mouth portion attachment 8 from the inner bag 4. Hence, it is easy to separate the inner bag 4 and the mouth portion attachment 8.

Although the mouth portion attachment 8 may be removed from the inner bag 4 before the inner bag 4 is extracted, it is preferably removed from the inner bag 4 after the inner bag 4 is extracted, because in the latter case, the mouth portion attachment 8 can be used to twist or pull the inner bag 4.

According to this embodiment, since the dual container 1 can be separated into the outer shell 3, the inner bag 4, and the mouth portion attachment 8, each member can be recycled in an appropriate manner, which renders the dual container 1 excellent recyclability.

### 1-2. Method for manufacturing dual container 1

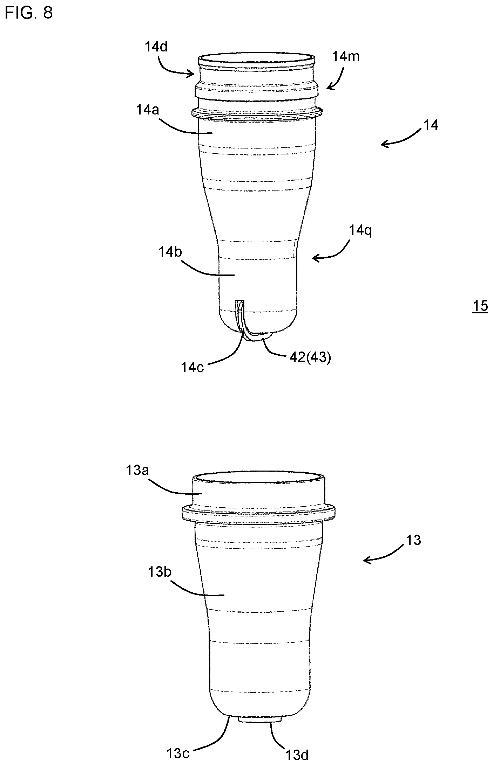

As shown in FIG. 8, the container body 2 can be formed by heating a preform 15 and performing biaxial stretch blow molding.

### <Configurations of the inner preform 14, outer preform 13, and preform 15>

In one example, the preform 15 can be constructed by covering an inner preform 14, which will become the inner bag 4, with an outer preform 13, which will become the outer shell 3.

The inner preform 14 has a bottomed cylindrical shape and includes a mouth portion 14a, a trunk portion 14b, and a bottom portion 14c. A protrusion 14d is provided at the open end of the mouth 14a. The protrusion 14d does not deform during molding and becomes the protrusion 4c in its original shape. Hence, the descriptions of the protrusion 4c also apply to the protrusion 14d. The protrusion 14d is provided with an engaging portion 14m. The engaging portion 14m becomes the engaging portion 4m after molding. The bottom portion 14c is provided to close the lower end of the trunk portion 14b. A positioning pin (not shown) may be provided on the bottom portion 14c.

The outer preform 13 has a bottomed cylindrical shape and includes a mouth portion 13a, a trunk portion 13b, and a bottom portion 13c. The bottom portion 13c is provided to close the lower end of the trunk portion 13b. The bottom portion 13c is provided with an annular protrusion 13d and a positioning hole (not shown).

The preform 15 can be formed by covering the inner preform 14 with the outer preform 13. If the inner preform 14 is provided with a positioning pin, this positioning pin can be inserted into the positioning hole of the outer preform 13 to position the inner preform 14 and the outer preform 13 relative to each other. In the preform 15, the opening 14a and the opening 13a face each other, and the trunk portion 14b and the trunk portion 13b face each other.

The mouth portions 13a and 14a become the mouth portion of the preform 15, the trunk portions 13b and 14b become the trunk portion of the preform 15, and the bottom portions 13c and 14c become the bottom portion of the preform 15. The trunk portion and bottom portion of the preform 15 are mainly stretched in biaxial stretch blow molding.

### <Materials and methods for manufacturing the inner preform 14, outer preform 13, and preform 15>

The inner preform 14 and the outer preform 13 can be formed by direct blow molding, injection molding, or the like of a thermoplastic resin such as polyester (e.g., PET) or polyolefin (e.g., polypropylene, polyethylene). In one example, the inner preform 14 is made of polyolefin (e.g., polypropylene) and the outer preform 13 is made of PET. The polyolefin used for the inner preform 14 is preferably polypropylene rather than polyethylene. This is because the temperature at which polypropylene is suitable for biaxial stretch blow molding is closer to that of PET than polyethylene.

The preform 15 may be constructed by separately manufacturing the inner preform 14 and the outer preform 13 and then covering the inner preform 14 with the outer preform 13, or may be manufactured by multilayer injection molding or two-color molding. By either method, a preform 15 constructed by laminating an inner preform 14 and an outer preform 13 can be obtained.

In multilayer injection molding, a multilayer preform 15 having layers corresponding to the inner preform 14 and the outer preform 13 can be manufactured in a single injection molding step.

In two-color molding, one of the inner preform 14 and the outer preform 13 is molded in the first molding step, and the other of the inner preform 14 and the outer preform 13 is molded in the second molding step. The first molding step may be direct blow molding or injection molding. The second molding step is preferably injection molding.

### <Manufacture of the inner preform 14 by direct blow molding>

The inner preform 14 is preferably formed by direct blow molding using a molten cylindrical parison. Since it is easier to reduce wall thickness and to use multiple layers in direct blow molding than in injection molding, forming the inner preform 14 in direct blow molding enables to make the inner bag 4 thinner and to form the inner bag 4 with a multi-layer structure.

### <Protruding seal portion 42>

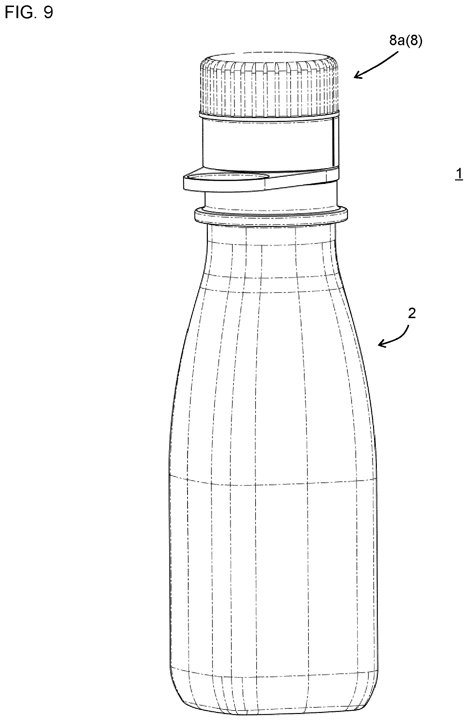

Because seal portions formed by welding the inner surfaces of the cylindrical parison together may not have sufficient strength, it is preferable that the seal portion 43 is made to protrude from the main body portion 14q of the inner preform 14 to form a protruding seal portion 42, as shown in FIG. 9. The protruding seal portion 42 is formed by welding the inner surfaces of a cylindrical parison together, and protrudes from the main body portion 14q of the inner preform 14. The main body portion 14q refers to a portion of the inner preform 14 other than the protruding seal portion 42. As shown in FIG. 9, protruding the seal portion 43 to form the protruding seal portion 42 increases the area of the sealing surface, which increases the sealing strength of the seal portion 43.

### 1-3. Modifications

The present invention can also be implemented in the following forms:
- In the above embodiment, the mouth portion attachment 8 is engaged only with the inner bag 4, but the mouth portion attachment 8 may be engaged with both the outer shell 3 and the inner bag 4; and
- The mouth portion attachment 8 may be attached to the mouth 5 by screwing.

### 2. Second embodiment

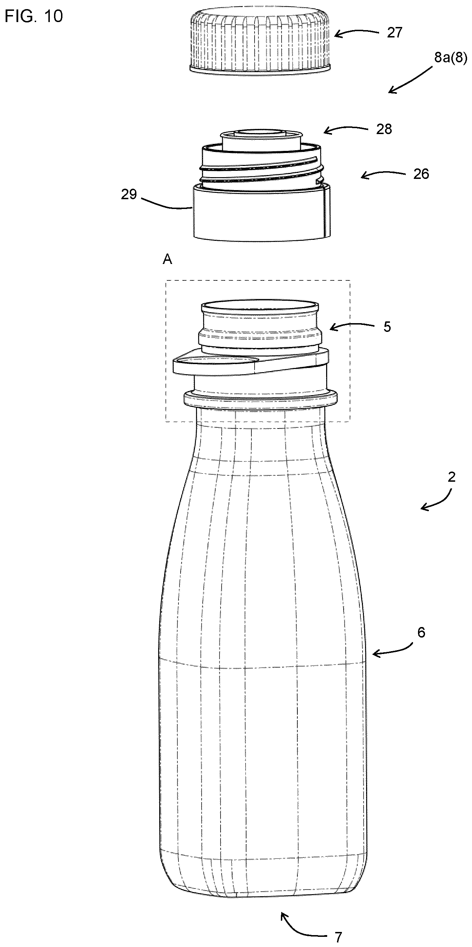

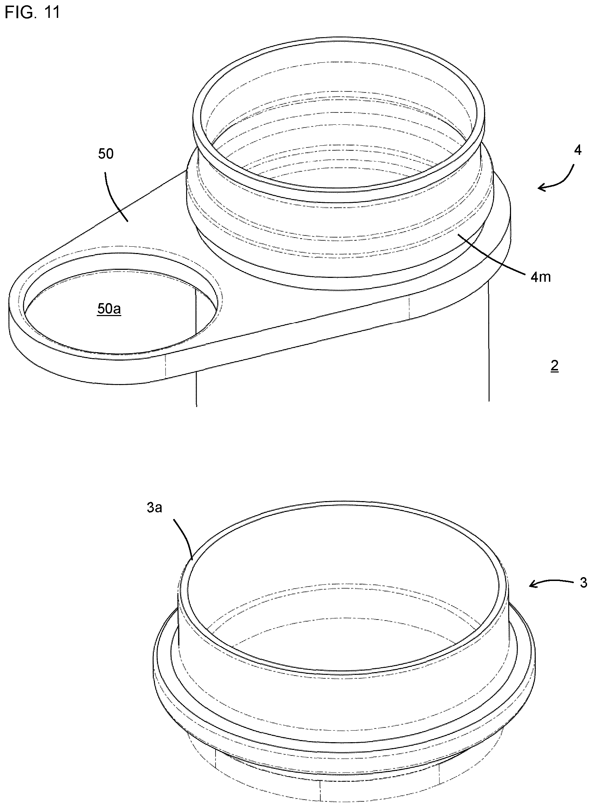

A second embodiment of the present invention will be described using FIGs. 9 to 11. The main difference between this embodiment and the first embodiment is that the inner bag 4 is provided with a hook portion 50 having an annular portion 50a. The differences are mainly explained below.

### <Structure of the container body 2>

In this embodiment, a hook portion 50 is provided on the protrusion 4c of the inner bag 4. The hook portion 50 is provided with an annular portion 50a, and a finger or the like can be hooked onto the annular portion 50a. The hook portion 50 is provided at a position facing the open end 3a of the outer shell 3, and the inner bag 4 is positioned in the axial direction with respect to the outer shell 3 by the hook portion 50 coming into contact with the open end 3a. In this embodiment, the engaging portion 4m of the inner bag 4 is constituted by an annular protrusion.

### <Method for extracting the inner bag 4>

In this embodiment, the inner bag 4 is extractable from the container body 2 by hooking a finger on the annular portion 50a and pulling it. The inner bag 4 may be extracted after or while being twisted, or may be extracted without being twisted. Since the mouth portion attachment 8 is not engaged with the outer shell 3, the inner bag 4 is extractable without performing an operation to release the engagement between the mouth portion attachment 8 and the outer shell 3. If the inner bag 4 is not twisted, the force required to extract the inner bag 4 tends to be large, but by hooking a finger on the annular portion 50a, it is easy to apply a strong force to the inner bag 4.

The mouth portion attachment 8 can be removed from the inner bag 4 by removing the band portion 29. The mouth portion attachment 8 may be removed before or after the inner bag 4 is extracted. According to this embodiment, since the dual container 1 can be separated into the outer shell 3, the inner bag 4, and the mouth portion attachment 8, each member can be recycled in an appropriate manner, which renders the dual container 1 excellent recyclability.

### 3. Description of the invention from the 1B perspective

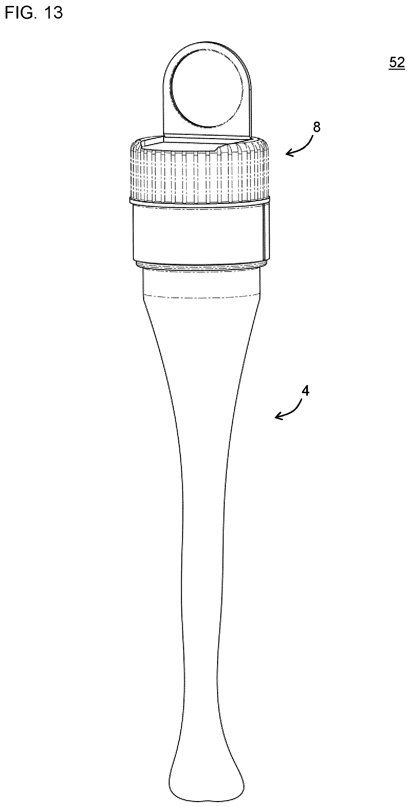

From the 1A perspective, recyclability is improved by making the mouth portion attachment 8 removable from the inner bag 4. On the other hand, from the 1B perspective, as shown in FIG. 13, the inner bag 4 is removed from the container body 2 with the mouth portion attachment 8 attached to the inner bag 4. Then, without removing the mouth portion attachment 8 from the inner bag 4, regenerated resin is produced by carrying out a regeneration treatment on the treatment target member 52, which is the mouth portion attachment 8 attached to the inner bag 4. Hence, from the 1B perspective, the mouth portion attachment 8 does not need to be configured to be removable from the inner bag 4. Regarding other features, the explanations of the invention according to the 1A perspective are applicable to the 1B perspective, and vice versa, unless doing so contradicts the scope of the descriptions.

The regeneration treatment includes, for example, a crushing treatment, a cleaning treatment, a deodorizing treatment, and a pelletizing treatment. Although these treatments are preferably performed in this order, the cleaning treatment may be performed after the deodorizing treatment. Further, one or both of the deodorizing treatment and the cleaning treatment may be omitted if unnecessary. The regenerated resin is preferably in the form of pellets. The regenerated resin may be used for manufacturing the dual container 1, or may be used for other purposes. The regenerated resin may be used alone or in combination with an unused virgin resin.

The main resin of the inner bag 4 and the main resin of the mouth portion attachment 8 are preferably similar resins, and preferably the same resin. The main resin of the inner bag 4 is a resin that accounts for 51% by mass or more of all the resins constituting the inner bag 4. The main resin of the mouth portion attachment 8 is a resin that accounts for 51% by mass or more of all the resins constituting the mouth portion attachment 8. The proportion of the main resin in the inner bag 4 or the mouth portion attachment 8 is, for example, 51 to 100% by mass; a proportion between 80 and 100% is preferable. This proportion is, for example, 51, 55, 60, 65, 70, 75, 80, 85, 90, 95, 100% by mass; the proportion may also be set to an arbitrary value between any two of these exemplary values.

The proportion of the main resin in the inner bag 4 and the proportion of the main resin in the mouth portion attachment 8 may be the same or different.

Similar resins are resins in which 80% by mass (preferably 85, 90, or 95% by mass) or more of monomer units are common. Examples of similar resins include polyolefin-based resins such as polypropylene-based resins and polyethylene-based resins. Examples of polypropylene-based resins include propylene homopolymers, propylene copolymers that are copolymers of propylene and other olefins (such as ethylene), and acid-modified polypropylene. Examples of polypropylene copolymers include random copolymers and block copolymers of propylene and ethylene.

Examples of polyethylene-based resins include ethylene homopolymers, ethylene copolymers that are copolymers of ethylene and other olefins (e.g., α-olefins such as 1-butene), and acid-modified polyethylene. Examples of the ethylene homopolymer include high density polyethylene (HDPE) and low-density polyethylene (LDPE). Examples of ethylene copolymers include linear low-density polyethylene (LLDPE). The proportion of other olefin units in the propylene copolymer or ethylene copolymer is, for example, 1 to 20% by mass. This proportion is, for example, 1, 2, 3, 4, 5, 6, 7, 8, 9, 10, 15, 20% by mass; the proportion may also be set to an arbitrary value between any two of these exemplary values.

The same resin means resins in which the monomers constituting the resins are the same. For example, in the case of propylene homopolymers or ethylene homopolymers, they are the same resin even if their molecular weights and branched structures are different. Further, in the case of propylene copolymers, for example, a random copolymer and a block copolymer of propylene and ethylene are the same resin. On the other hand, a propylene homopolymer and a propylene copolymer do not have the same monomer; hence, although they are similar resins, they are not the same resin.

The total different resin ratio calculated by [(Ac+Bc)/(A+B)] is preferably 10% by mass or less, and more preferably 5% by mass, wherein A is the mass of the inner bag 4, Ac is the mass of the different resin other than the main resin in the inner bag 4, B is the mass of the mouth portion attachment 8, and Bc is the mass of the different resin other than the main resin in the mouth portion attachment 8. The total different resin ratio means the proportion of the total mass of the different resins in the inner bag 4 and the different resins in the mouth portion attachment 8 to the total mass of the inner bag 4 and the mouth portion attachment 8, which is equivalent to the different resin ratio in the regenerated resin. The different resin of the inner bag 4 or the mouth portion attachment 8 means a resin other than the main resin of the inner bag 4 or the mouth portion attachment 8. The lower the total different resin ratio is, the higher the quality of the regenerated resin becomes, and the easier it is for the regenerated resin to be recognized as a monomaterial. Specifically, the total different resin ratio is, for example, 0, 1, 2, 3, 4, 5, 6, 7, 8, 9, 10% by mass; the ratio may also be set to an arbitrary value between any two of these exemplary values.

The inner bag different resin ratio calculated by Ac/A is preferably 5% by mass or more, and more preferably 10% by mass or more. Although it becomes more difficult for the regenerated resin to be recognized as a monomaterial as the inner bag different resin ratio increases, the technical significance of applying the invention of this perspective becomes more remarkable as the inner bag different resin ratio increases, because in the invention of this perspective, the total different resin ratio can be reduced by carrying out a regeneration treatment on the inner bag 4 and the mouth portion attachment 8 together. The inner bag different resin ratio is, for example, 5 to 49% by mass, specifically, for example, 5, 10, 15, 20, 25, 30, 35, 40, 45, 49% by mass; the ratio may also be set to an arbitrary value between any two of these exemplary values.

The different resin for the inner bag 4 is preferably a gas barrier resin with excellent gas barrier properties such as EVOH or polyamide. It is preferable that the inner bag 4 includes a gas barrier layer made of a gas barrier resin. This improves the gas barrier properties of the inner bag 4.

The proportion of different resins in the mouth portion attachment calculated by Bc/B is preferably 20% by mass or less, more preferably 10% by mass or less. Since the mouth portion attachment 8 is not normally provided with a gas barrier layer, the mouth portion attachment 8 can be made of only the main resin. From the viewpoint of making regenerated resin into a monomaterial, it is preferable that the mouth portion attachment 8 is made of only the main resin. The proportion of different resins in the mouth portion attachment is, for example, 0 to 20% by mass, and specifically, for example, 0, 1, 2, 3, 4, 5, 10, 15, and 20% by mass; the proportion may also be set to an arbitrary value between any two of these exemplary values.

The ratio of the sum of the mass A of the inner bag 4 and the mass B of the mouth portion attachment 8 to the mass A of the inner bag 4 is expressed by a dilution ratio calculated as [(A+B)/A]. The dilution ratio is preferably 2 or more, more preferably 3 or more. The dilution ratio is, for example, 2 to 20, specifically, for example, 2, 3, 4, 5, 6, 7, 8, 9, 10, 11, 12, 13, 14, 15, 16, 17, 18. , 19, 20; the ratio may also be set to an arbitrary value between any two of these exemplary values. The larger the dilution ratio is, the higher the degree to which the different resin that may be contained in the inner bag 4 is diluted with the main resin of the mouth portion attachment 8, and the easier it is to make the regenerated resin into a monomaterial.

If the proportion of different resins in the mouth portion attachment is lower than the proportion of different resins in the inner bag, and if the goal is to make the regenerated resin into a monomaterial, the allowable proportion of different resins in the inner bag becomes higher as the dilution ratio increases. For example, if the different resin ratio of the mouth portion attachment is 0, the maximum allowable different resin ratio of the inner bag can be calculated as dilution ratio multiplied by the maximum value of the total different resin ratio. For example, if the goal is to make regenerated resin into a monomaterial, and if the maximum value of the total different resin ratio is 5% by mass and the dilution ratio is 3, then the maximum allowable different resin ratio of the inner bag is 15% by mass. In this case, by controlling the different resin ratio of the inner bag to 15% by mass or less, it is possible to make the regenerated resin into a monomaterial. If only the inner bag 4 is to be put through a regeneration treatment, the different resin ratio of the inner bag needs to be 5% by mass or less, but it can be seen that by carrying out a regeneration treatment on the mouth portion attachment 8 and the inner bag 4 together, the ratio of different resins that can be included in the inner bag 4 is significantly increased. The maximum value of the total different resin ratio may be set to a value necessary to achieve monomaterialization of the regenerated resin, and may be set to 10% by mass, for example.

### (Second perspective)

The first embodiment shown below mainly relates to the 2B perspective, the second embodiment mainly relates to the 2A perspective, and the third embodiment mainly relates to the 2C perspective. The descriptions of the first to third embodiments are mutually applicable unless doing so contradicts the scope of the descriptions. The descriptions provided in relation to the 2A to 2C perspectives are mutually applicable unless doing so contradict the scope of the descriptions.

### 1. First embodiment

### 1-1. Configuration of the dual container 1

### <Basic configuration>

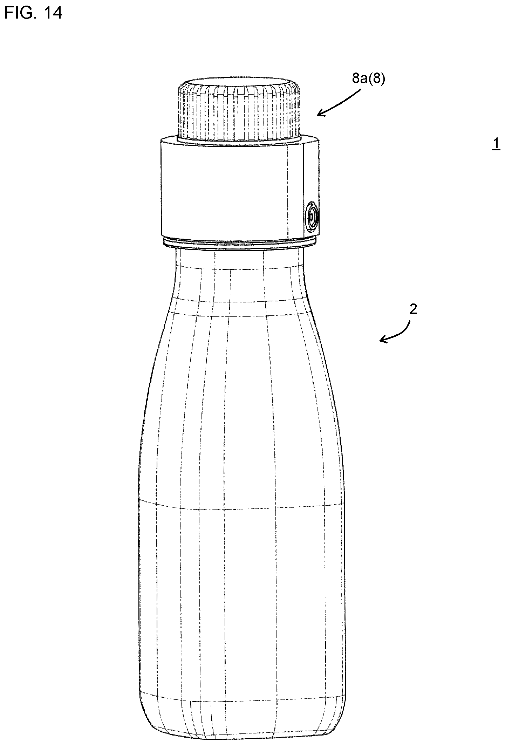

The dual container 1 of this embodiment has a structure shown in FIGs. 14 to 20. Regarding the dual container 1, the descriptions of the first embodiment of the first perspective also apply to this embodiment unless doing so contradicts the scope of the descriptions. The differences are mainly explained below.

### <Shrinkage of the inner bag 4 due to discharge of contents of the inner bag 4>

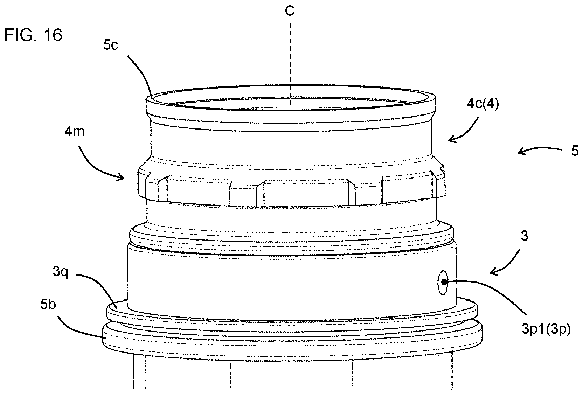

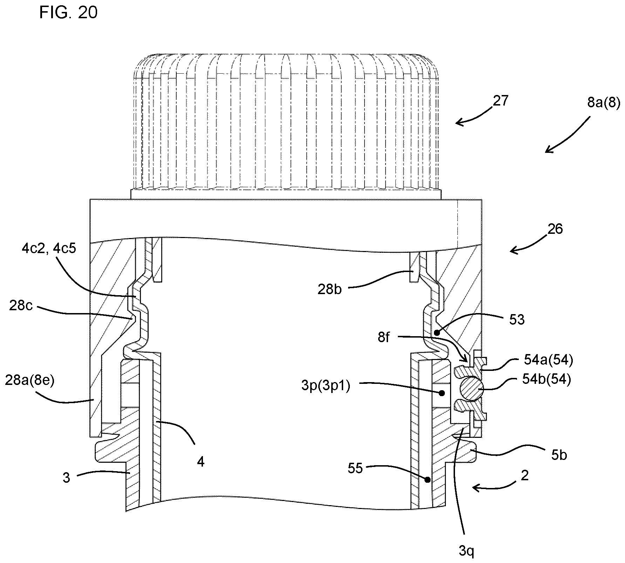

The mouth portion attachment 8 is provided with a check valve (not shown), which allows the contents of the inner bag 4 to be discharged, but restricts the inflow of outside air into the inner bag 4. Also, as shown in FIGs. 16 and 20, the outer shell 3 is provided with an air introduction portion 3p, and the outside air enters the intermediate space 55 between the inner bag 4 and the outer shell 3 through the air introduction portion 3p. As a result, the inner bag 4 is configured to contract away from the outer shell 3 as the contents of the inner bag 4 decrease.

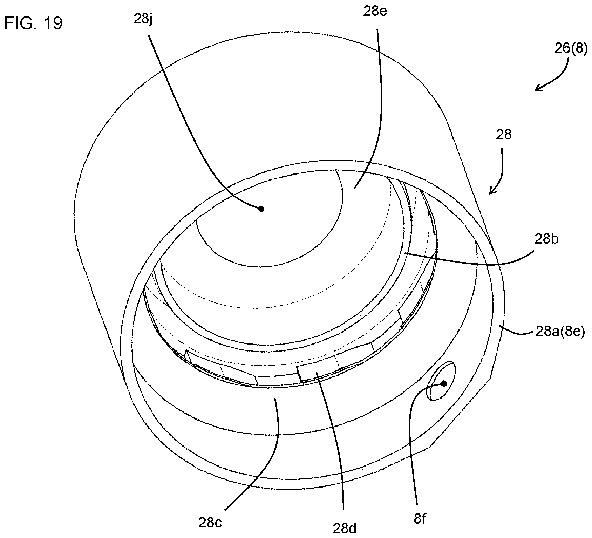

In this embodiment, the air introducing portion 3p is constituted by through holes 3p1 provided in the mouth portion 5 of the outer shell 3. As shown in FIG. 20, the outer shell 3 is provided with a sealing flange 3q at a position closer to the open end 3a than the flange 5b; a sealed space 53 surrounded by the container body 2 and the mouth portion attachment 8 is formed by the inner surface of the cylindrical portion 8e of the mouth portion attachment 8 coming into close contact with the outer periphery of the sealing flange 3q. The closed space 53 communicates with the intermediate space 55 through the outside air introducing portion 3p. The air introduction portion 3p is arranged within the closed space 53. As shown in FIG. 19, the cylindrical portion 8e of the mouth portion attachment 8 is provided with a through hole 8f. As shown in FIGs. 19 and 20, a valve member 54 is attached to the through hole 8f. The through hole 8f is provided to communicate the closed space 53 with the outside of the dual container 1. The valve member 54 is configured to be able to control the flow of air through the through hole 8f. When the outer shell 3 is compressed as the contents are discharged, the valve member 54 closes, the closed space 53 and the intermediate space 55 are pressurized, and the compressive force applied to the outer shell 3 is transmitted to the inner bag 4. When the outer shell 3 is decompressed, the valve member 54 opens and outside air is introduced into the intermediate space 55, thereby restoring the outer shell 3 to its original shape.

In this embodiment, the valve member 54 includes a cylindrical body 54a and a movable body 54b, and is configured to be openable and closable as the movable body 54b moves relative to the cylindrical body 54a. The movable body 54b is preferably spherical.

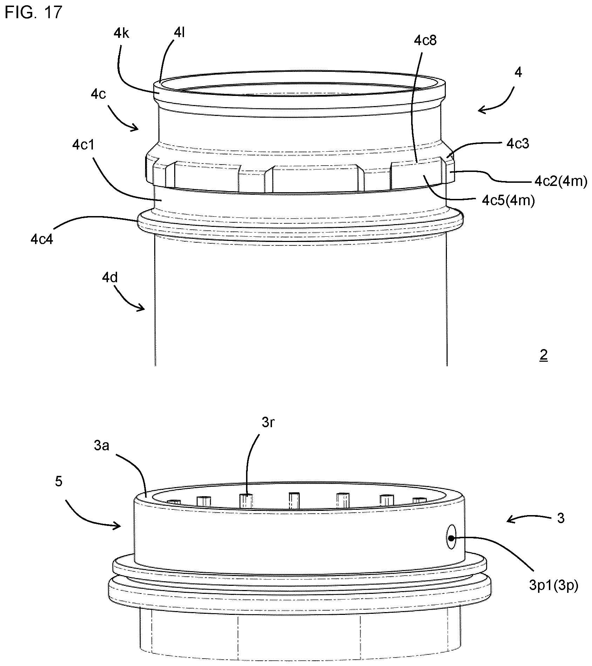

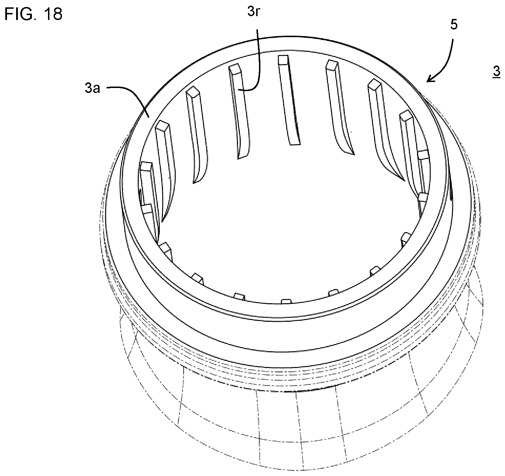

If the through holes 3p1 are provided in the mouth portion 5 of the outer shell 3, and if the outer shell 3 and the inner bag 4 are in close contact with each other at the mouth portion 5, it is not easy for outside air to enter the trunk portion 6 of the container body 2, and the contractibility of the inner bag 4 tends to deteriorate. Hence, in this embodiment, as shown in FIGs. 17 and 18, protruding strips 3r extending toward the bottom portion 7 side of the outer shell 3 are provided. By providing the protruding strips 3r, a gap is formed between the outer shell 3 and the inner bag 4, making it easy for outside air to enter the trunk portion 6 of the container body 2. It is preferable that the protruding strips 3r extend toward the bottom portion 7 side of the outer shell 3, starting from a height position where the through holes 3p1 are provided or a position higher than that. It is preferable that the protruding strips 3r are positioned adjacent to the through holes 3p1. Moreover, it is preferable that a plurality of protruding strips 3r are positioned so as to sandwich the through holes 3p1. The number of the protruding strips 3r is, for example, 1 to 40, preferably 2 to 30 (18 in this embodiment). Specifically, this number is, for example, 1, 2, 3, 4, 5, 6, 7, 8, 9, 10, 15, 18, 20, 25, 30, 35, 40; this number may also be set to an arbitrary value between any two of these exemplary values. It is preferable that the protruding strips 3r are provided at positions closer to the bottom portion 7 than the flange 5b. Each of the width and height of the protruding strips 3r is, for example, 0.2 to 3 mm, preferably 0.5 to 2 mm.

### <Detailed structures of the outer shell 3 and inner bag 4>

As shown in FIGs. 16 and 17, the inner bag 4 includes a protrusion 4c that protrudes from the open end 3a of the outer shell 3. The protrusion 4c includes a protruding cylinder 4c1, engaging protrusions 4c2, annular protrusions 4c5, and an abutting flange 4c4.

The annular protrusions 4c5 engage with the mouth portion attachment 8 in the axial direction. The engaging protrusions 4c2 engage with the mouth portion attachment 8 in the circumferential direction. In this specification, the "axial direction" is the direction in which the central axis C of the mouth portion 5 extends, or in other words, the direction in which the inner bag 4 is extracted from the container body 2. The "circumferential direction" is a direction in which the mouth portion 5 is rotated about the central axis C, or in other words, a direction in which the inner bag 4 is rotated with respect to the outer shell 3, in the mouth portion 5. Moreover, "upward direction" means upward in the axial direction, and "downward direction" means downward in the axial direction.

It is preferable that the engaging protrusions 4c2 are provided at a plurality of locations (eight locations in this embodiment) spaced apart in the circumferential direction. The engaging protrusions 4c2 are arranged on the annular protrusions 4c5, and is arranged so as to protrude radially outward from the annular protrusion 4c5. The annular protrusions 4c5 and the engaging protrusions 4c2 are provided with tapered surfaces 4c8 and 4c3 on their upper surfaces. This makes it easy for the annular protrusions 28c (shown in FIGs. 19 and 20) of the mouth portion attachment 8 to climb over the annular protrusions 4c5 and the engaging protrusions 4c2, as described later.

The abutting flange 4c4 is an annular portion disposed at a position abutting the open end 3a and having a diameter larger than that of the protruding cylinder 4c1. By abutting the abutting flange 4c4 against the open end 3a, the inner bag 4 is prevented from falling into the outer shell 3.

An enlarged diameter structure 4k is provided at the open end 4l of the inner bag 4. The enlarged diameter structure 4k increases the rigidity of the opening 5 of the inner bag 4 and suppresses deformation of the opening 5 of the inner bag 4. In this embodiment, since the inner bag 4 is extracted using the engaging portion 4m (more specifically, the annular protrusions 4c5 and the engaging protrusions 4c2) provided on the inner bag 4, there are cases where a high load is applied to the inner bag 4. In such cases, it may become difficult to extract the inner bag 4 if the opening end 4l of the inner bag 4 is easily deformed. In this embodiment, however, the inner bag 4 is smoothly extractable since the deformation of the open end 4l of the inner bag 4 is suppressed.

### <Detailed structure of the mouth portion attachment 8>

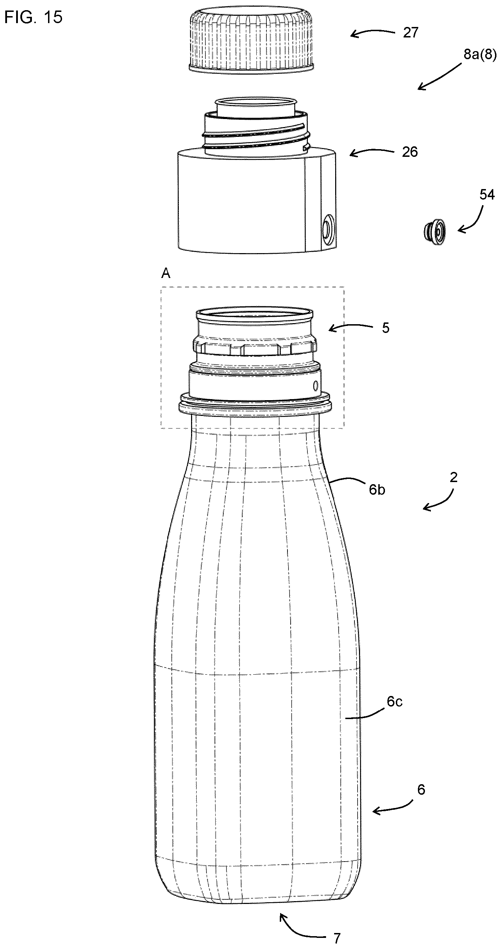

As shown in FIG. 15, in this embodiment, the mouth portion attachment 8 is a cap 8a, and includes an inner plug 26, an overcap 27, and a valve member 54. The inner plug 26 is engaged, by pushing-in, with the opening 5 of the inner bag 4 in the circumferential direction and the axial direction. The overcap 27 is removably attached to the inner plug 26, and by removing the overcap 27, the contents can be discharged through the mouth portion attachment 8.

As shown in FIGs. 15 and 19 to 21, the inner plug 26 includes a main body portion 28. The main body portion 28 includes an outer cylinder 28a, an inner cylinder 28b, an annular protrusion 28c, an engaging protrusion 28d, a top plate 28e, and a flow hole 28j.

The flow hole 28j is provided in the top plate 28e, and the contents inside the inner bag 4 can be discharged through the flow hole 28j. The top plate 28e is provided on the upper surface of the outer cylinder 28a. An inner cylinder 28b is provided on the lower surface of the top plate 28e. The inner cylinder 28b is a so-called inner ring that has a smaller diameter than the outer cylinder 28a and is arranged inside the outer cylinder 28a. When the inner plug 26 is attached to the mouth portion 5, the inner cylinder 28b is inserted into the inner bag 4, and the outer peripheral surface of the inner cylinder 28b comes into close contact with the inner peripheral surface of the inner bag 4.

The annular protrusions 28c are annular protrusions provided on the inner peripheral surface of the outer cylinder 28a in such a way to extend in the circumferential direction. When the annular protrusions 28c engage with the engaging protrusions 4c2 in the axial direction, the main body portion 28 engages with the mouth portion 5 of the inner bag 4 in the axial direction. It is preferable that the engaging protrusions 28d are provided at a plurality of locations (eight locations in this embodiment) spaced apart in the circumferential direction. The engaging protrusions 28d are disposed on the annular protrusion 28c, and are arranged so as to protrude radially inward from the annular protrusions 28c. The engaging protrusions 28d are arranged between the adjacent engaging protrusions 4c2, so that the main body portion 28 engages with the mouth portion 5 of the inner bag 4 in the circumferential direction.

### <Pulling out the inner bag 4>

The mouth portion attachment 8 is engaged with the mouth portion 5 of the inner bag 4 in the circumferential direction and the axial direction, and the mouth portion 5 of the inner bag 4 is configured to rotate with respect to the outer shell 3 as the mouth portion attachment 8 rotates. Therefore, by rotating the mouth portion attachment 8, the inner bag 4 can be twisted. In addition, the inner bag 4 is extractable by grasping and pulling the mouth portion attachment 8. In this embodiment, although the inner bag 4 is deflated after the contents are used up, it becomes significantly easy to extract the inner bag 4 by twisting the inner bag 4.

### 1-2. Method for manufacturing dual container 1

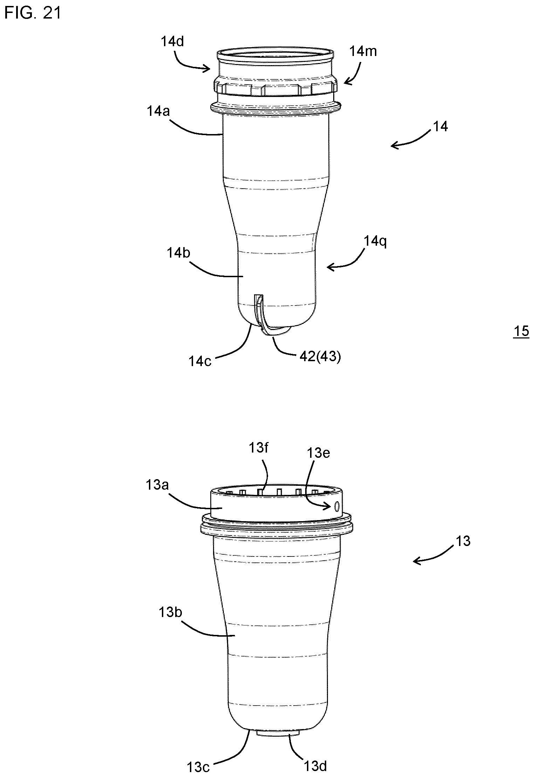

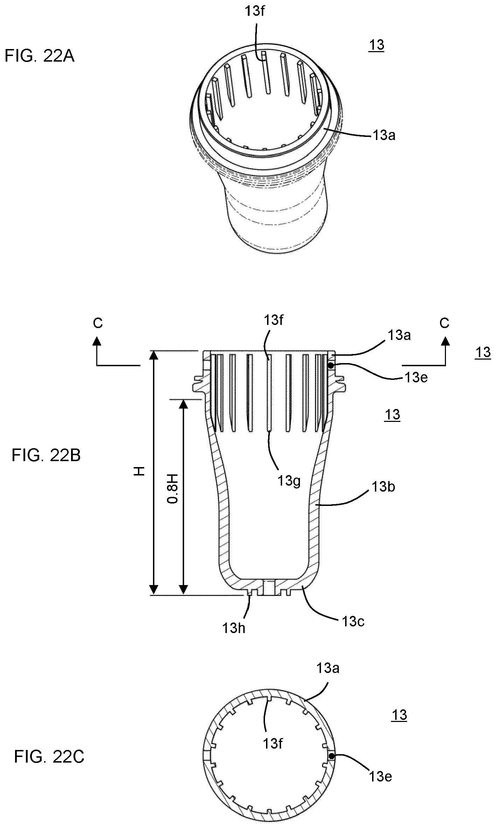

As shown in FIGs. 21 and 22, the container body 2 can be formed by heating a preform 15 and performing biaxial stretch blow molding. With respect to the preform 15, the descriptions of the first embodiment of the first perspective also apply to this embodiment unless doing so contradicts the scope of the descriptions. The differences are mainly explained below.

### <Configurations of the inner preform 14, outer preform 13, and preform 15>

Through holes 13e are provided in the mouth portion 13a of the outer preform 13. Since the mouth portion 13a is hardly deformed during biaxial stretch blow molding, the through holes 13e become the through holes 3p1 of the outer shell 3. As shown in FIG. 22A, the inner surface of the mouth portion 13a of the outer preform 13 is provided with protruding strips 13f extending toward the bottom side of the outer preform 13. It is preferable that the protruding strips 13f are provided in such a way to extend toward the bottom side of the outer preform 13 starting from a height position where the through holes 13e are provided or a position higher than that. The protruding strips 13f become the protruding strips 3r of the outer shell 3 after biaxial stretch blow molding. The protruding strips 13f are preferably provided across the mouth portion 13a and the trunk portion 13b. The portions of the protruding strips 13f provided at the mouth portion 13a are hardly deformed during biaxial stretch blow molding, and the portion provided on the trunk portion 13b is stretched together with the trunk portion 13b.

As shown in FIG. 22B, assuming that the total height of the outer preform 13 is H, the position of the lower ends 13g of the protruding strips 13f is preferably 0.8H or less from the lower end 13h of the outer preform 13. As a result, the protruding strips 3r become sufficiently long, making it easy for outside air to be introduced into the trunk portion 6. The position of the lower ends 13g of the protruding strips 13f is, for example, 0.1H to 0.8H from the lower end 13h of the outer preform 13, preferably 0.4H to 0.8H, and specifically, for example, 0.1H, 0.2H, 0.3H, 0.4H, 0.5H, 0.6H, 0.7H, and 0.8H; this number may also be set to an arbitrary value between any two of these exemplary values or an arbitrary value below any of these exemplary values. As shown in FIG. 22C, the protruding strips 13f are preferably positioned adjacent to the through holes 13e. Moreover, it is preferable that a plurality of protruding strips 13f are positioned so as to sandwich the through holes 13e. The number of protruding strips 13f is, for example, 1 to 40, preferably 2 to 30 (18 in this embodiment). Specifically, this number is, for example, 1, 2, 3, 4, 5, 6, 7, 8, 9, 10, 15, 18, 20, 25, 30, 35, 40; this number may also be set to an arbitrary value between any two of these exemplary values. Each of the width and height of the protruding strips 13f is, for example, 0.2 to 3 mm, preferably 0.5 to 2 mm.

Preferably, the outer preform 13 is manufactured by injection molding and the inner preform 14 is manufactured by direct blow molding. Since objects manufactured by direct blow molding has lower shape accuracy than those manufactured by injection molding, trying to provide a protruding strip on the outer surface of the inner preform 14, which is manufactured by direct blow molding, could decrease the shape accuracy of the protruding strip and make it difficult to introduce outside air into the trunk portion 6 after biaxial stretch blow molding. On the other hand, in injection molding, the shape accuracy of manufactured objects is high, so trying to provide the protruding strips 13f on the inner surface of the outer preform 13, which is manufactured by injection molding, is unlikely to decrease the shape accuracy of the protruding strips 13f and prevents the above problem.

### <Modifications of the first embodiment>

This embodiment can also be implemented in the following forms:
- The mouth portion attachment 8 may be attached to the mouth 5 by screwing;
- The valve member 54 may be attached to the outer shell 3. For example, it may be installed by inserting the valve member 54 into a through hole 3p1;
- The mouth portion attachment 8 may be engaged only with the outer shell 3 without engaging with the inner bag 4;
- The valve member 54 may be a valve of another type, such as a flap valve;
- Valve member 54 is optional. In the case of a pump-type container, the contents can be discharged without any problem without the valve member 54. In the case of a squeeze-type container, even without the valve member 54, the compressive force applied to the outer shell 3 can be transmitted to the inner bag 4 by closing the through holes 3p1 with fingers or the like; and
- The inner bag 4 may be extracted without using the mouth portion attachment 8. For example, the inner bag 4 may be extracted by directly pulling the inner bag 4 after the mouth portion attachment 8 is first removed.

### 2. Second embodiment

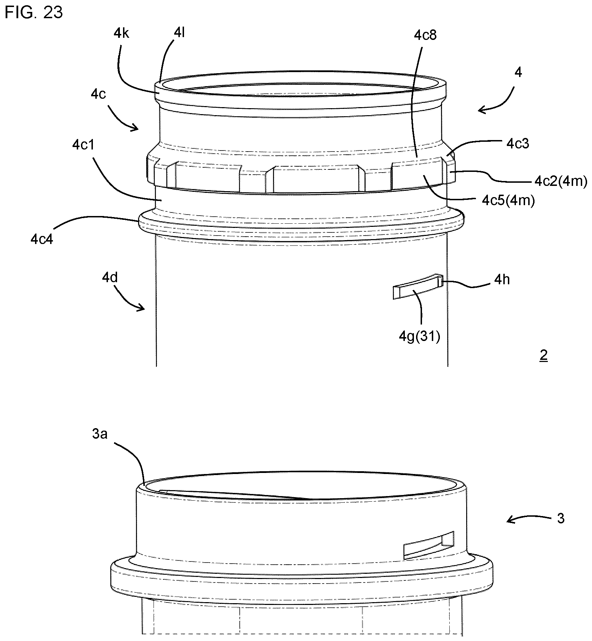

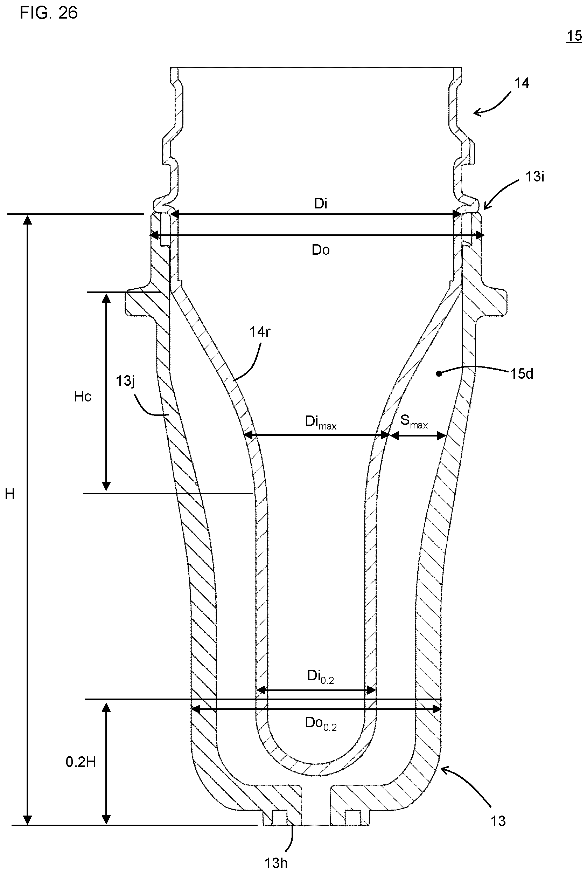

A second embodiment of the present invention is described using FIGs. 23 to 26. The dual container 1 of this embodiment is similar to the first embodiment, and the differences are mainly described below.

### 2-1. Configuration of the dual container 1

Although it was assumed that the inner bag 4 would shrink as the contents of the inner bag 4 decreased in the first embodiment, the dual container 1 of this embodiment may be implemented in such a manner that the inner bag 4 contracts as the contents of the inner bag 4 decrease, or may be implemented in a manner in which the inner bag 4 does not contract.. **In** the latter case, there is no need to introduce outside air into the intermediate space 55 between the outer shell 3 and the inner bag 4, so the air introduction portion 3p is not necessary. Moreover, there is no need to provide the valve member 54. **In** addition, there is no need to provide the mouth portion attachment 8 with a check valve that allows the contents of the inner bag 4 to be discharged while restricting the inflow of outside air into the inner bag 4.

On the other hand, the dual container 1 of this embodiment assumes that the inner bag 4 is extracted from the container body 2 after the contents of the inner bag 4 are used up, and in order to facilitate the extracting of the inner bag 4, the configuration shown below is provided.

That is, as shown in FIG. 23, cam protrusions 4g and engaging protrusions 4h are provided on the outer peripheral surface of the inner bag body 4d. The engaging protrusions 4h are provided on the cam protrusions 4g. The lower surfaces of the cam protrusions 4g and the engaging protrusions 4h are respectively inclined so as to approach the open end 5c as they proceed counterclockwise, when viewed from the open end 5c side of the mouth portion 5.

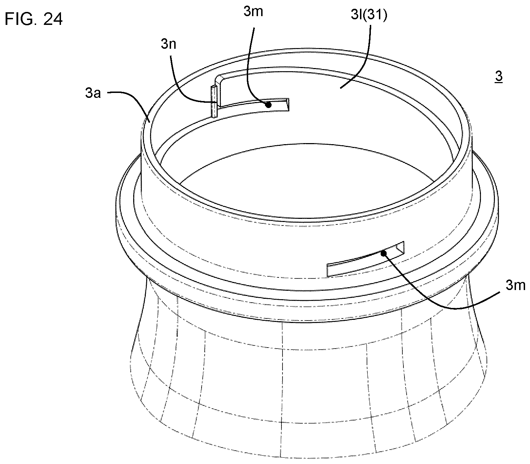

As shown in FIG. 24, the inner peripheral surface of the outer shell 3 is provided with cam rails 3l, engaging recesses 3m, and engaging protrusions 3n. The engaging recesses 3m are provided such that the lower surfaces of the engaging recesses 3m are continuous with the upper surfaces of the cam rails 3l. The upper surfaces of the cam rails 31 and the lower surfaces of the engaging recesses 3m are inclined so as to approach the opening end 3a as they proceed counterclockwise, when viewed from the opening end 3a side. The engaging protrusions 3n are positioned adjacent to the engaging recesses 3m.

Before the inner bag 4 is extracted from the container body 2, the engaging protrusions 4h are disposed within the engaging recesses 3m, and the lower surfaces of the cam protrusions 4g are in contact with the upper surfaces of the cam rails 3l. A cam mechanism 31 is constituted by the cam protrusions 4g and the cam rails 3l. **In** this embodiment, the engaging recesses 3m are through holes, but may be non-through holes.

Trying to rotate the inner bag 4 counterclockwise results in the engaging protrusions 4h coming into contact with the engaging protrusions 3n, restricting the rotation. This restriction is not strong, and when a strong torque is applied to the inner bag 4, the engaging protrusions 4h climb over the engaging protrusions 3n, and the inner bag 4 becomes freely rotatable relative to the outer shell 3. Then, when the inner bag 4 is further rotated counterclockwise, the inner bag 4 moves in the direction of coming out of the container body 2 by the action of the cam mechanism 31. At this time, the inner bag 4 is twisted to reduce its diameter. **In** this way, the inner bag 4 is reduced in diameter and moved in the direction of coming out of the container body 2, making it easy to extract the inner bag 4.

The engagement structure between the inner bag 4 and the mouth portion attachment 8 is similar to that in the first embodiment, and by rotating the mouth portion attachment 8, the inner bag 4 can be twisted.

### 2-2. Method for manufacturing dual container 1

The same method as in the first embodiment is applicable to the dual container 1 of this embodiment, except that the shape of the preform 15 is different.

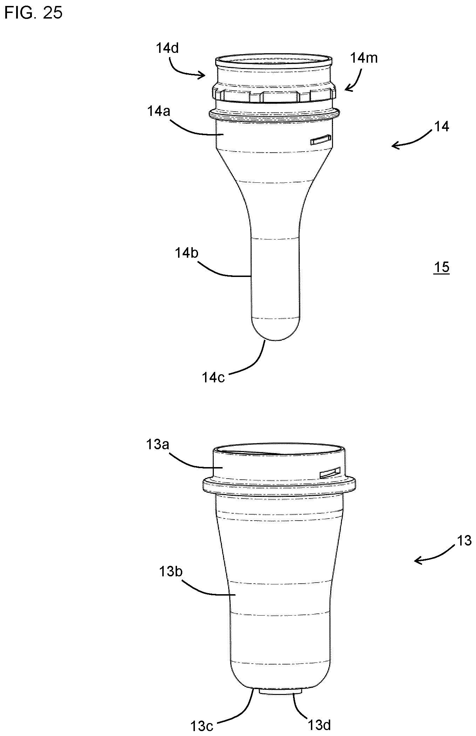

The preform 15 of this embodiment has the shape shown in FIGs. 25 to 26. Di_{0.2}/Do_{0.2} is preferably 0.70 or less wherein H is the total height of the outer preform 13, Di₀₂; is the outer diameter of the inner preform 14 at a position 0.2H from the lower end 13h of the outer preform 13, and Do_{0.2} is the outer diameter of the outer preform 13. If Di_{0.2}/Do_{0.2} is 0.70 or less, the inner preform 14 is stretched to a greater extent than the outer preform 13 near the bottom of the preform 15 during biaxial stretch blow molding, reducing the thickness. Hence, the inner bag 4 can be made particularly thin. The value of Di_{0.2}/Do_{0.2} is, for example, 0.10 to 0.70, specifically, for example, 0.10, 0.15, 0.20, 0.25, 0.30, 0.35, 0.40, 0.45, 0.50, 0.55, 0.60, 0.65, 0.70; the value of Di_{0.2}/Do_{0.2} may also be set to an arbitrary value between any two of these exemplary values.

The thickness of the inner preform 14 at the 0.2H position is, for example, 0.5 to 2.0 mm, specifically, for example, 0.5, 0.6, 0.7, 0.8, 0. 9, 1.0, 1.1, 1.2, 1.3, 1.4, 1.5, 1.6, 1.7, 1.8, 1.9, 2.0mm; this thickness may also be set to an arbitrary value between any two of these exemplary values. The thickness of the outer preform at the 0.2H position is, for example, 1.5 to 4.0 mm, specifically, for example, 1.5, 2.0, 2.5, 3.0, 3..5, 4.0mm; this thickness may also be set to an arbitrary value between any two of these exemplary values. The value of [thickness of outer preform 13/thickness of inner preform 14] at the position of 0.2H is, for example, 1.0 to 3.0, specifically, for example, 1.0, 1.1, 1.2, 1.3, 1.4, 1.5, 1.6, 1.7, 1.8, 1.9, 2.0, 2.1, 2.2, 2. 3, 2.4, 2.5, 2.6, 2.7, 2.8, 2.9, 3.0, and may also be set to an arbitrary value between any two of these exemplary values.

The value of Di_{0.2} is, for example, 6 to 20 mm, preferably 8 to 16 mm. Specifically, this value is, for example, 6, 7, 8, 9, 10, 11, 12, 13, 14, 15, 16, 17, 18, 19, 20 mm, and may also be set to an arbitrary value between any two of these exemplary values. The value of Do_{0.2} is, for example, 12 to 40 mm, preferably 18 to 32 mm. Specifically, this value is, for example, 12, 13, 14, 15, 16, 17, 18, 19, 20, 21, 22, 23, 24, 25, 26, 27, 28, 29, 30, 31, 32, 33, 34, 35, 36, 37, 38, 39, 40mm, and may also be set to an arbitrary value between any two of these exemplary values.

The value of Di_{0.2}/Di is preferably 0.60 or less, wherein Di is the outer diameter of the inner preform 14 at the open end 13i of the outer preform 13. In this case, since the diameter of the inner preform 14 is greatly reduced near the bottom of the preform 15, the thickness of the inner bag 4 is noticeably thinned near the bottom portion 7 of the inner bag 4. The value of Di_{0.2}/Di is, for example, 0.10 to 0.60, specifically, for example, 0.10, 0.15, 0.20, 0.25, 0.30, 0.35, 0.40, 0.45, 0.50, 0.55, 0.60, and may also be set to an arbitrary value between any two of these exemplary values.

The inner preform 14 includes an inwardly curved portion 14r that curves so as to be inwardly convex. In this case, the diameter of the inner preform 14 is significantly reduced at the inwardly curved portion 14r. The inwardly curved portion 14r is preferably provided at a portion that becomes the shoulder portion 6b of the container body 2 after biaxial stretch blow molding. Since the shoulder portion 6b tends to have a large resistance force when the inner bag 4 is extracted from the container body 2, it may be particularly desirable to make the shoulder portion 6b thinner. Providing the inwardly curved portion 14r tends to increase the blow ratio during biaxial stretch blow molding, enabling the shoulder portion 6b to become thinner.

The value of H_{c}/H is preferably 0.10 or more, wherein H_{c} is the height range of the inwardly curved portion 14r (that is, the distance in the vertical direction between the upper and lower ends of the inwardly curved portion 14r). By providing the inwardly curved portion 14r over a wide range in the height direction, the inner bag 4 can be thinned over a wide range. The value of H_{c}/H is, for example, 0.10 to 0.60, specifically, for example, 0.10, 0.15, 0.20, 0.25, 0.30, 0.35, 0.40, 0.45, 0.50, 0.55, 0.60, and may also be set to an arbitrary value between any two of these exemplary values.

Within a range of 0.2H to 1.0H from the lower end 13h of the outer preform 13, the gap 15d between the inner preform 14 and the outer preform 13 is preferably maximized at the inwardly curved portion 14r. In biaxial stretch blow molding, the inner preform 14 usually expands before the outer preform 13; hence, if there is a gap between the inner preform 14 and the outer preform 13, the inner preform 14 first expands to eliminate this gap, and then the inner preform 14 and the outer preform 13 expand together, to form the container body 2. At the time of initial expansion, the inner preform 14 is stretched more and thinner in a region where the gap 15d is larger. Hence, by maximizing the gap 15d at the inwardly curved portion 14r, the portion (e.g., the shoulder portion 6b) formed by the inwardly curved portion 14r can be made even thinner.

The value of Sₘₐₓ/Dᵢₘₐₓ is, for example, 0.20 to 0.80, specifically, for example, 0.20, 0.25, 0.30, 0.35, 0.40, 0.45, 0.50, 0.55, 0.60, 0.65, 0.70, 0.75, 0.80, and may also be set to an arbitrary value between any two of these exemplary values, wherein Sₘₐₓ is the size of the gap 15d at the height position where the gap 15d is maximized, and Dᵢₘₐₓ is the outer diameter of the inner preform 14 at that height position.

In order to increase the gap 15d at the inwardly curved portion 14r, it is preferable that the outer preform 13 is curved so that a portion or all of the portion 13j facing the inwardly curved portion 14r is convex toward the outside.

The value of Do_{0.2}/Do is 0.95 or less, wherein Do is the outer diameter of the outer preform 13 at the open end 13i of the outer preform 13. This prevents the gap 15d near the bottom from becoming too large, making it easy for the inner preform 14 to selectively expand at the inwardly curved portion 14r. The value of Do_{0.2}/Do is, for example, 0.50 to 0.95, specifically, for example, 0.50, 0.55, 0.60, 0.65, 0.70, 0.75, 0 .80, 0.85, 0.90, 0.95, and may also be set to an arbitrary value between any two of these exemplary values.

In this embodiment, the inner preform 14 is preferably formed by injection molding. Although injection molding has the advantage of easily improving shape accuracy, it is more difficult to reduce wall thickness than direct blow molding. This embodiment is also based on the idea that the thickness of the inner bag 4 is reduced by reducing the diameter of the inner preform 14 without making the inner preform 14 thinner, and the technical significance is particularly significant when the inner preform 14 is formed by injection molding.

### 3. Third embodiment

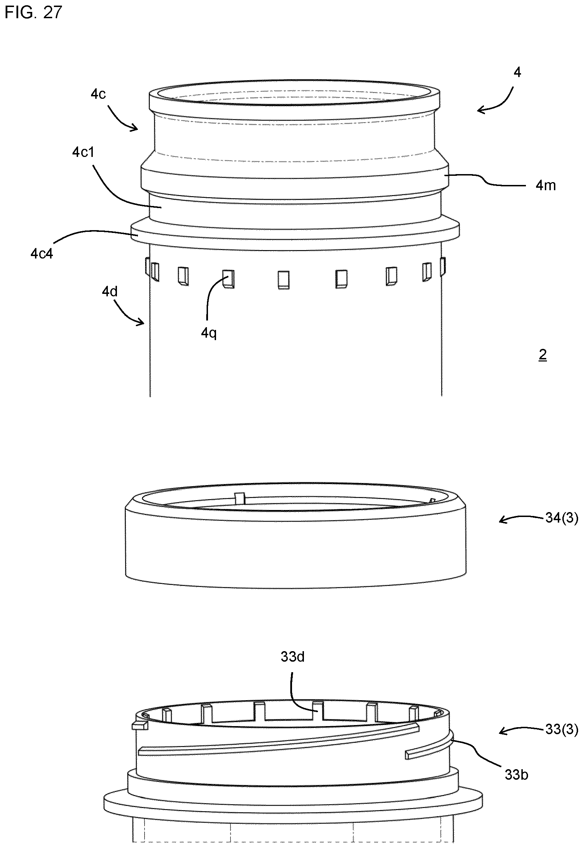

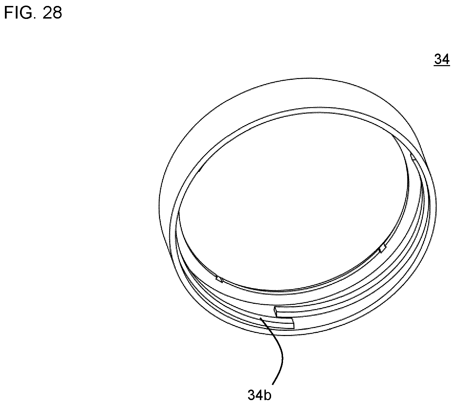

A third embodiment of the present invention is described using FIGs. 27 to 31. The dual container 1 of this embodiment is similar to the second embodiment, and the differences are mainly described below.

### 3-1. Configuration of the dual container 1

Similar to the second embodiment, the dual container 1 of this embodiment assumes that the inner bag 4 is extracted from the container body 2 after the contents of the inner bag 4 are used up, and in order to make it easy to extract the inner bag 4, the configuration shown below is provided.

As shown in FIGs. 27 to 29, in this embodiment, the outer shell 3 includes an outer shell main body 33 and an engaging member 34 that can be connected to the outer shell main body 33. The connection mechanism between the outer shell main body 33 and the engaging member 34 is not limited as long as the outer shell main body 33 is separable from the engaging member 34. In one example, the outer shell main body 33 and the engaging member 34 are screwed together at the male threaded portion 33b of the outer shell main body 33 and the female threaded portion 34b of the engaging member 34, and the two are rotated relative to each other in the unscrewing direction. This allows the outer shell main body 33 to be separated from the engaging member 34.

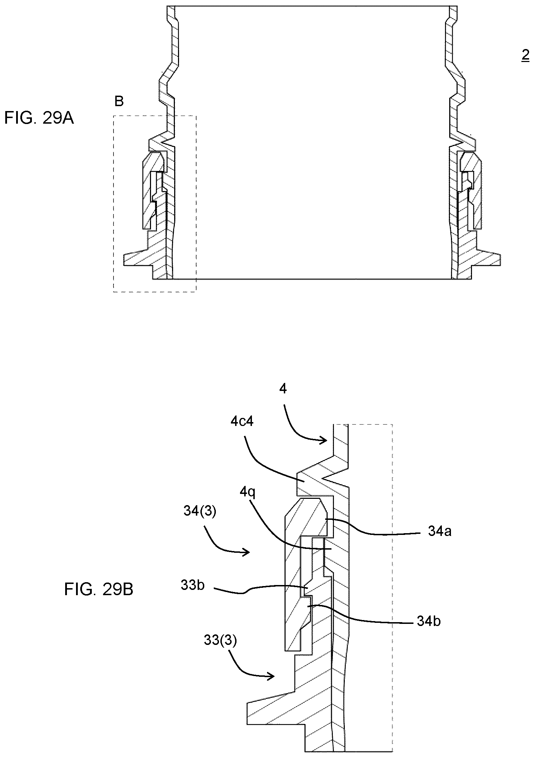

As shown in FIG. 29B, when the outer shell main body 33 and the engaging member 34 are connected, the protrusion 34a of the engaging member 34 protrudes further toward the inside of the container body 2 than the outer shell main body 33. The inner bag main body 4d of the inner bag 4 is provided with an engaging protrusion 4q, and when the engaging protrusion 4q engages with the protrusion 34a, the inner bag 4 engages with the engaging member 34 in the axial direction.

As shown in FIG. 27, an engaging protrusion 33d that can engage with the engaging protrusion 4q is provided on the inner surface of the mouth portion 5 of the outer shell main body 33, and relative rotation of the inner bag 4 with respect to the outer shell 3 is restricted by the engagement of the engaging protrusion 4q and the engaging protrusion 33d in the circumferential direction. Note that a plurality of engaging protrusions 4q and a plurality of engaging protrusions 33d are provided, so that the relative rotational play between the outer shell 3 and the inner bag 4 is reduced. Note that if there is no need to restrict relative rotation between the outer shell 3 and the inner bag 4, the engaging protrusion 33d is unnecessary. Moreover, the engaging protrusion 4q may be formed in an annular shape.

After the contents of the inner bag 4 are used up, the outer shell main body 33 can be separated from the container body 2 by separating the outer shell main body 33 from the engaging member 34. If the outer shell main body 33 and the engaging member 34 are screwed together, the outer shell main body 33 can be separated from the engaging member 34 by relatively rotating the outer shell main body 33 and the engaging member 34 in the unscrewing direction. The engaging member 34 is in contact with the abutting flange 4c4 of the inner bag 4, and when the outer shell main body 33 is separated from the engaging member 34, a force is generated in the direction in which the engaging member 34 pushes up the abutting flange 4c4, making it easy to extract the inner bag 4. Moreover, since the inner bag 4 and the outer shell main body 33 are engaged only in the circumferential direction, the resistance force when separating the inner bag 4 and the outer shell main body 33 is unlikely to become large.

### 3-2. Method for manufacturing dual container 1

The same method as in the first embodiment is applicable to the dual container 1 of this embodiment, except that the shape of the preform 15 is different.

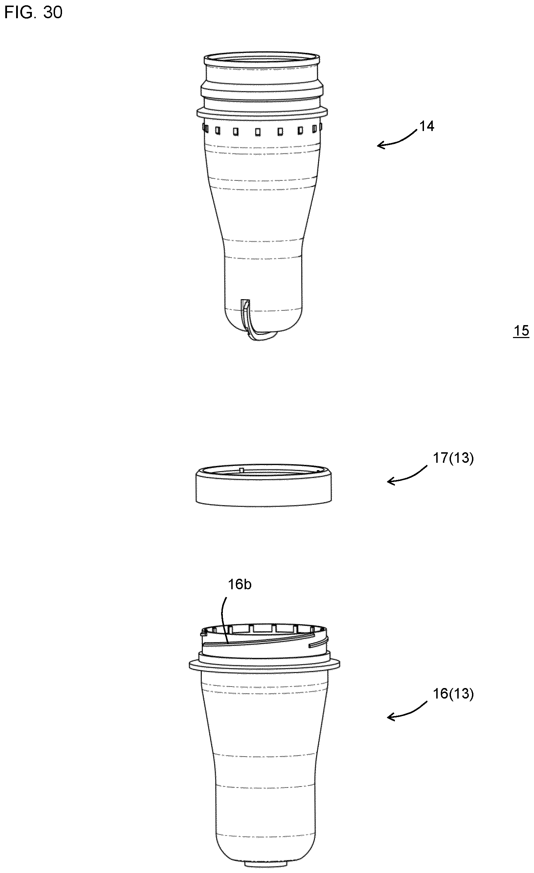

In this embodiment, as shown in FIG. 30, the outer preform 13 includes an outer preform main body 16 and an engaging member 17. The outer preform main body 16 and the engaging member 17 become an outer shell main body 33 and an engaging member 34, respectively, after biaxial stretch blow molding. The outer preform main body 16 includes a male threaded portion 16b corresponding to the male threaded portion 33b, and is capable of being screwed into engagement with the engaging member 17. By covering the inner preform 14 with the outer preform 13 obtained by screwing together the outer preform main body 16 and the engaging member 17, a preform 15 used for biaxial stretch blow molding can be obtained.

### <Modifications>

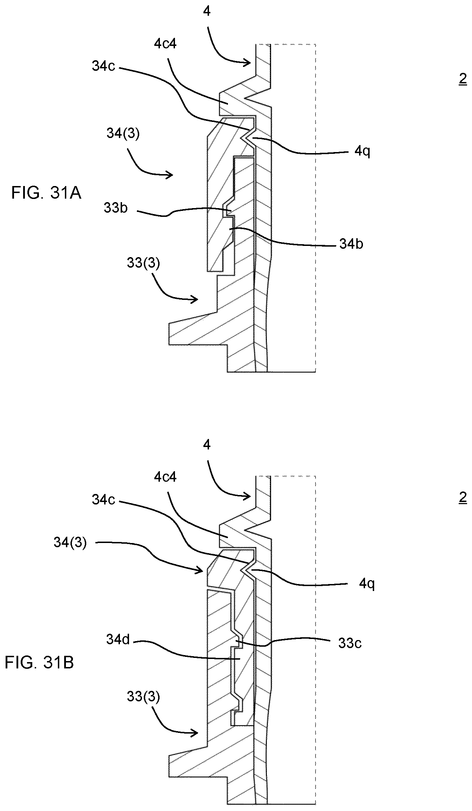

As in Modification 1 shown in FIG. 31A, by engaging the engaging protrusion 4q provided on the inner bag 4 with the recess 34c provided on the engaging member 34, the inner bag 4 may be engaged with the engaging member 34 in the axial direction. Also, as in Modification 2 shown in FIG. 31B, the outer shell main body 33 and the engaging member 34 may be screwed together at the female threaded portion 33c provided on the outer shell main body 33 and at the male threaded portion 34d provided on the engaging member 34.

### (Third perspective)

The third perspective of the present invention includes the 3A and 3B perspectives.

### 1. First embodiment

### 1-1. Configuration of the dual container 1

### <Basic configuration>

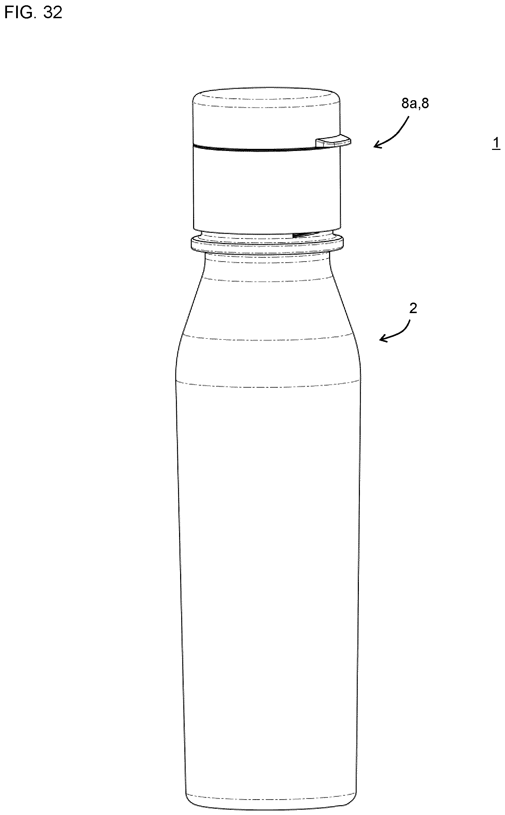

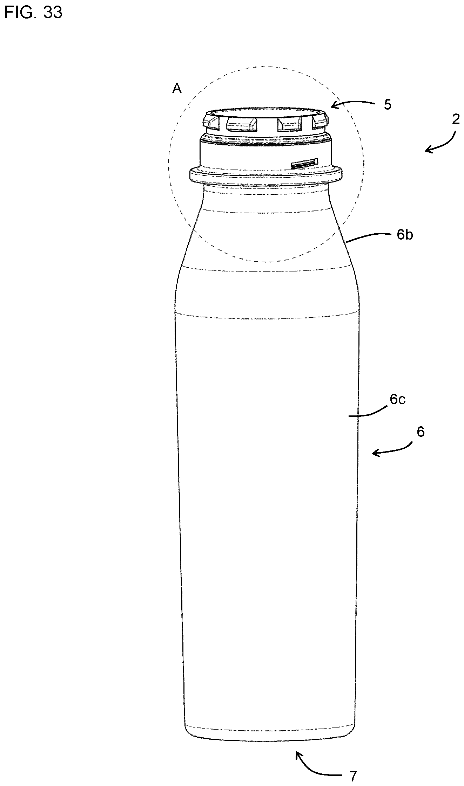

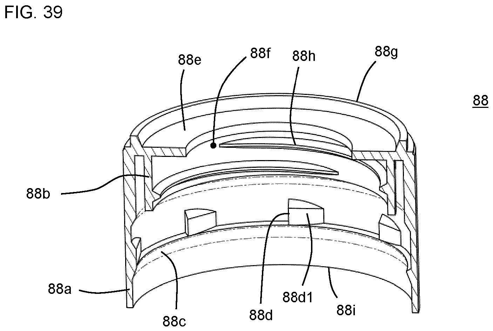

The dual container 1 of the first embodiment, according to the 3A perspective of the present invention, has the structure shown in FIGs. 32 to 41. Regarding the dual container 1, the descriptions of the first embodiment of the first perspective also apply to this embodiment unless doing so contradicts the scope of the descriptions. In this embodiment, the mouth portion attachment 8 is a cap 8a.

### <Details of the structures of the inner bag 4 and outer shell 3>

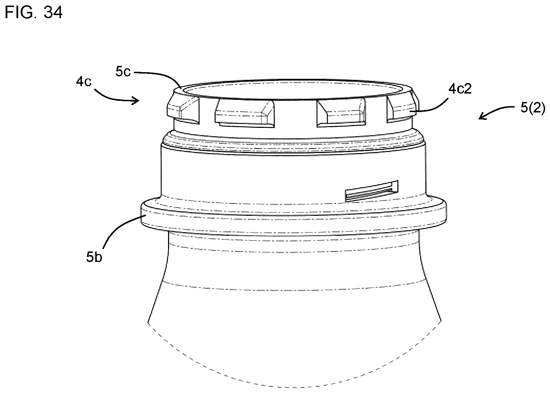

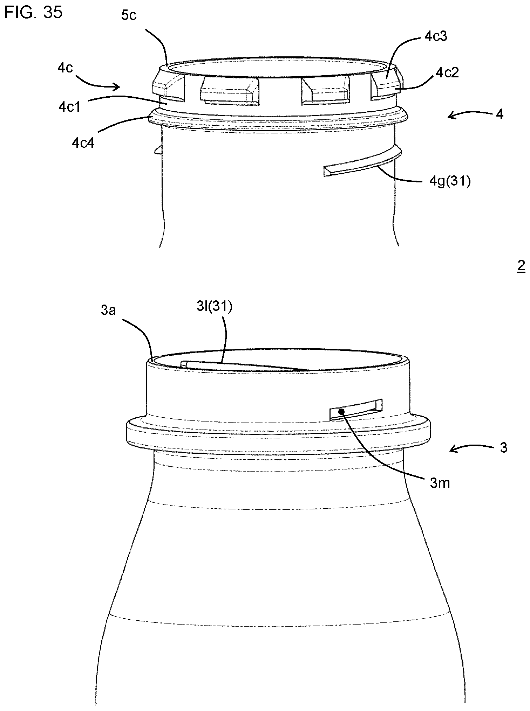

As shown in FIGs. 34 and 35, the inner bag 4 includes a protrusion 4c that protrudes from the open end 3a of the outer shell 3. The protrusion 4c includes a protruding cylinder 4c1, an engaging protrusion 4c2, and an abutting flange 4c4.

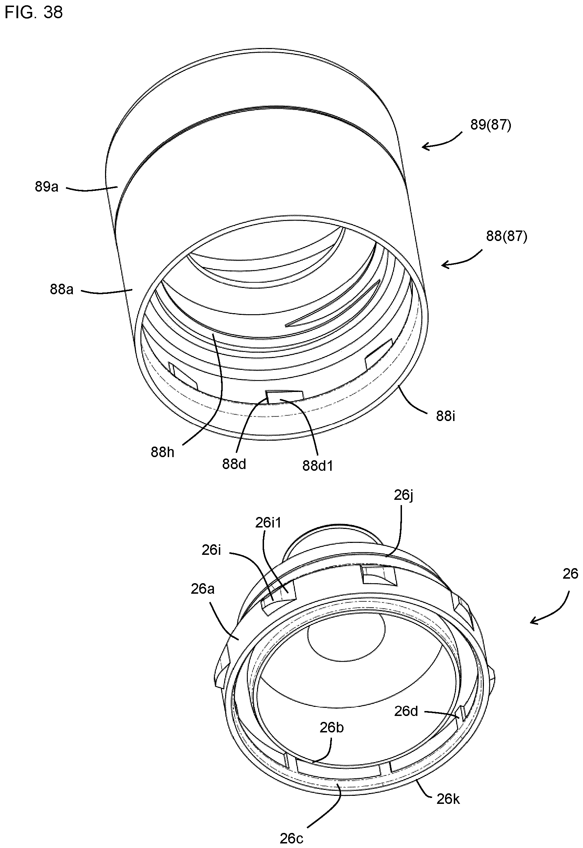

The engaging protrusions 4c2 protrude radially outward from the outer peripheral surface of the protruding cylinder 4c1. The engaging protrusions 4c2 are provided at a plurality of locations (eight locations in this embodiment) spaced apart in the circumferential direction. Each engaging protrusion 4c2 is provided with a tapered surface 4c3 on the upper surface. This allows the annular protrusion 26c (shown in FIG. 38) of the inner plug 26 to easily climb over the engaging protrusions 4c2, as described later.

The abutting flange 4c4 is an annular portion disposed at a position abutting the open end 3a and having a diameter larger than that of the protruding cylinder 4c1. By abutting the abutting flange 4c4 against the open end 3a, the inner bag 4 is prevented from falling into the outer shell 3.

As shown in FIG. 35, cam protrusions 4g are provided on the outer peripheral surface of the inner bag 4. The lower surfaces of the cam protrusions 4g are inclined so as to approach the opening end 5c as the lower surface proceeds counterclockwise (that is, toward upper right in FIG. 35), when viewed from the open end 5c side of the mouth portion 5 (hereinafter, unless otherwise specified, the rotation direction means the direction viewed from the open end 5c side of the mouth portion 5).

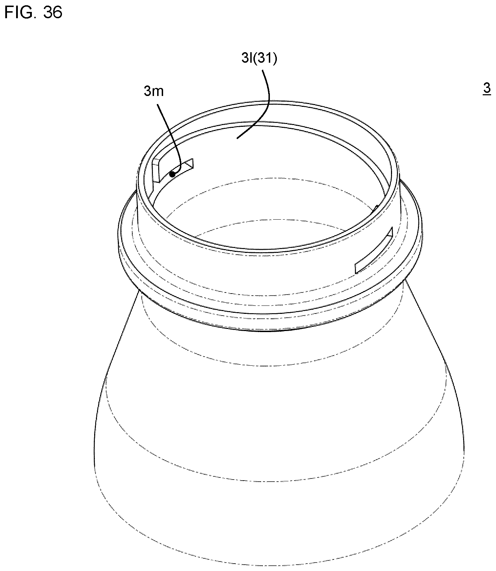

As shown in FIGs. 35 and 36, the inner peripheral surface of the outer shell 3 is provided with a cam rail 31 and an engaging recess 3m. The engaging recesses 3m are arranged in such a way that the lower surfaces of the engaging recesses 3m are continuous with the upper surfaces of the cam rails 3l. The upper surfaces of the cam rails 31 and the lower surfaces of the engaging recesses 3m are inclined so as to approach the opening end 3a as they proceed counterclockwise, when viewed from the opening end 3a side. A cam mechanism 31 is constituted by the cam protrusions 4g and the cam rails 3l. The cam mechanism 31 is configured to displace the inner bag 4 so as to let the inner bag 4 come out of the container body 2, when the inner bag 4 is rotated relative to the outer shell 3. Before the inner bag 4 is extracted from the container body 2, the cam protrusions 4g are disposed within an engaging recess 3m, so that the inner bag 4 does not come off from the container body 2. When the inner bag 4 is rotated counterclockwise, the engagement between the cam protrusions 4g and the engaging recesses 3m is released, and the cam protrusions 4g move along the cam rails 3l. As a result, the inner bag 4 moves along the axial direction of the mouth portion 5 and partially comes out of the container body 2.

### <Details of the structure of the cap 8a>

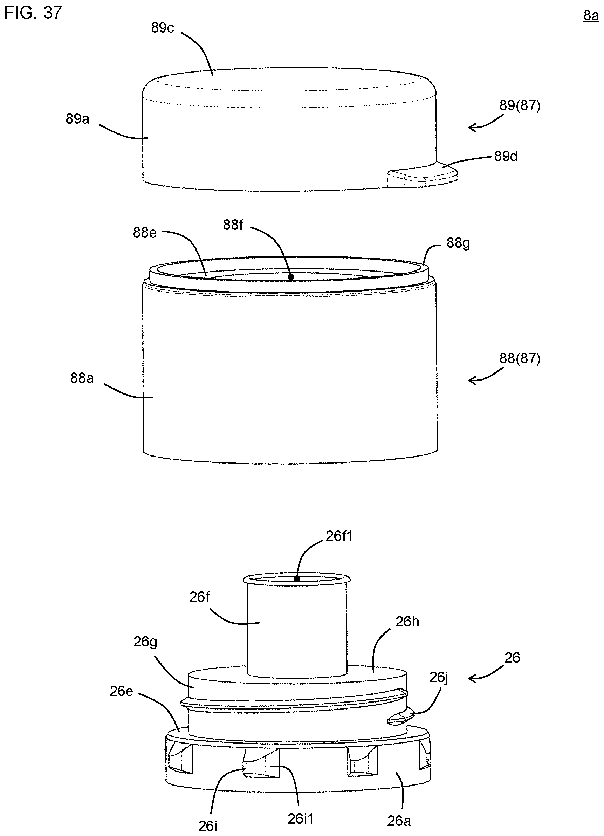

As shown in FIG. 37, the cap 8a includes an inner plug 26 and a cap main body 87.

### - Inner plug 26

As shown in FIGs. 37 and 38, the inner plug 26 includes an outer cylinder 26a, an inner ring 26b, an annular protrusion 26c, an engaging protrusion 26d, a first top plate 26e, a nozzle 26f, and an upper cylinder 26g, a second top plate 26h, an engaging protrusion 26i, and a male threaded portion 26j.

The first top plate 26e is provided on the upper surface of the outer cylinder 26a. An inner ring 26b is provided on the lower surface of the first top plate 26e. The inner ring 26b has a smaller diameter than the outer cylinder 26a, and is arranged inside the outer cylinder 26a. The outer peripheral surface of the inner ring 26b is in close contact with the inner peripheral surface of the inner bag 4. An upper cylinder 26g is provided on the upper surface of the first top plate 26e. A male threaded portion 26j is provided on the outer peripheral surface of the upper cylinder 26g. The second top plate 26h is provided on the upper surface of the upper cylinder 26g, and the second top plate 26h is provided with a nozzle 26f. The nozzle 26f is provided with an opening 26f1. When the inner plug 26 is attached to the inner bag 4, the opening 26f1 communicates with the inside of the inner bag 4, and the contents in the inner bag 4 are discharged through the opening 26f1 of the nozzle 26f.

The annular protrusion 26c is an annular protrusion provided on the inner peripheral surface of the outer cylinder 26a so as to extend in the circumferential direction. When the annular protrusion 26c engages with the engaging protrusions 4c2 in the axial direction, the inner plug 26 engages with the mouth portion 5 of the inner bag 4 in the axial direction. The engaging protrusions 26d are provided on the inner peripheral surface of the outer cylinder 26a at a plurality of locations (eight locations in this embodiment) spaced apart in the circumferential direction. The engaging protrusion 26d is located further away from the lower end 26k of the inner plug 26 than the annular protrusion 26c. The engaging protrusion 26d is arranged between the adjacent engaging protrusions 4c2, so that the inner plug 26 engages with the mouth portion 5 of the inner bag 4 in the circumferential direction.

The engaging protrusions 26i are provided on the outer peripheral surface of the outer cylinder 26a at a plurality of locations (eight locations in this embodiment) spaced apart in the circumferential direction. The engaging protrusion 26i is provided with a tapered surface 26i1.

### - Cap body 87

As shown in FIGs. 37 and 38, the cap main body 87 includes a cap trunk portion 88 and a cap lid portion 89. The cap main body 87 can be switched between an engaged state shown in FIG. 32 and a separated state shown in FIG. 37. In the engaged state, the cap lid portion 89 is engaged with and integrated with the cap trunk portion 88. In the separated state, the cap lid portion 89 is separated from the cap trunk portion 88. In the separated state, the cap lid 89 may be completely separated from the cap trunk portion 88 or may be connected by a hinge or the like. By bringing the cap main body 87 into the engaged state, the contents within the inner bag 4 can be prevented from leaking, and by bringing the cap main body 87 into the separated state, the contents within the inner bag 4 can be discharged.

### - Cap trunk portion 88

As shown in FIGs. 37 to 39, the cap trunk portion 88 includes an outer cylinder 88a, an inner cylinder 88b, an annular protrusion 88c, an engaging protrusion 88d, a top plate 88e, an opening 88f, an engaging protrusion 88g, and a female screw portion 88h.

The top plate 88e is provided on the upper surface of the outer cylinder 88a. An inner cylinder 88b is provided on the lower surface of the top plate 88e. The inner cylinder 88b has a smaller diameter than the outer cylinder 88a, and is arranged inside the outer cylinder 88a. A female threaded portion 88h is provided on the inner peripheral surface of the inner cylinder 88b. The female threaded portion 88h can be screwed into the male threaded portion 26j.

An opening 88f and an engaging protrusion 88g are provided on the upper surface of the top plate 88e. The nozzle 26f is inserted into the opening 88f. The engaging protrusion 88g engages with the cap lid portion 89 to bring the cap main body 87 into an engaged state.

The annular protrusion 88c is an annular protrusion provided on the inner peripheral surface of the outer cylinder 88a so as to extend in the circumferential direction. By engaging the annular protrusion 88c with the engaging protrusion 26i in the axial direction, the inner plug 26 is unlikely to fall off from the cap trunk portion 88. The engaging protrusions 88d are provided at a plurality of locations (eight locations in this embodiment) spaced apart in the circumferential direction. The engaging protrusion 88d is located further away from the lower end 88i of the cap trunk portion 88 than the annular protrusion 88c. The engaging protrusion 88d is provided with a tapered surface 88d1.

### - Cap lid portion 89

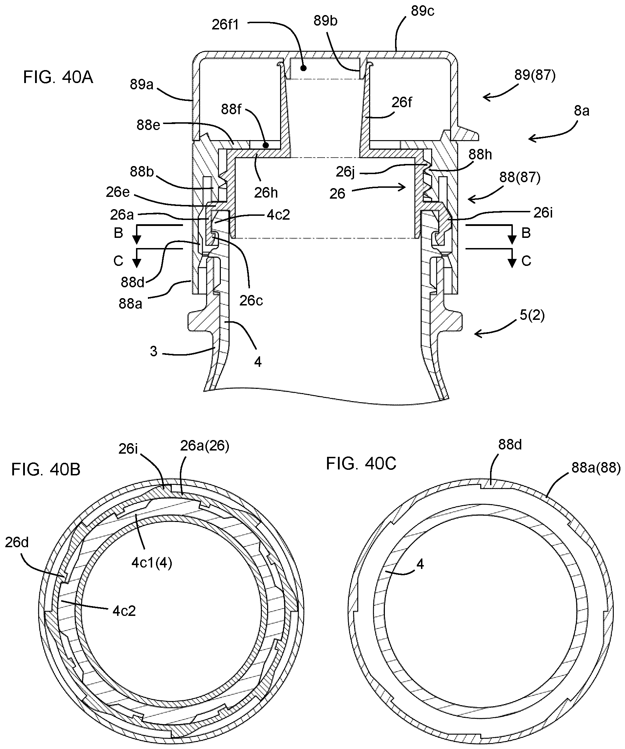

As shown in FIGs. 37 and 40, the cap lid portion 89 includes an outer cylinder 89a, an inner ring 89b, a top plate 89c, and a knob 89d.

The top plate 89c is provided on the upper surface of the outer cylinder 89a. An inner ring 89b is provided on the lower surface of the top plate 89c. The inner ring 89b has a smaller diameter than the outer cylinder 89a, and is arranged inside the outer cylinder 89a. The inner ring 89b is configured such that when the cap main body 87 is attached to the inner plug 26, the outer peripheral surface of the inner ring 89b comes into contact with the inner peripheral surface of the nozzle 26f to close the opening 26f1. The knob 89d is provided on the outer peripheral surface of the outer cylinder 89a, and can be used to separate the cap lid portion 89 from the cap trunk portion 88 by hooking a finger on the knob 89d.

### <Method for assembling the cap 8a>

It is preferable to assemble the cap 8a before attaching the cap 8a to the mouth portion 5, because doing so can simplify the step of attaching the cap 8a on the line for filling the contents. The assembly method is explained in detail below.

First, as shown in FIG. 38, the inner plug 26 is inserted into the cap trunk portion 88 from below the cap trunk portion 88, and while the cap trunk portion 88 is being grasped, the inner plug 26 is rotated clockwise, viewed from below the cap trunk portion 88, to screw the male threaded portion 26j into the female threaded portion 88h. At this time, the engaging protrusion 26i and the engaging protrusion 88d contact in the circumferential direction, but since the tapered surface 26i1 and the tapered surface 88d1 are provided on the abutting side, the inner plug 26 is able to rotate relative to the cap trunk portion 88 as the engaging portion 26i climbs over the engaging portion 88d. When the inner plug 26 is further rotated, the inner plug 26 cannot be further rotated once the first top plate 26e comes into contact with the inner cylinder 88b or once the second top plate 26h comes into contact with the top plate 88e, as shown in FIG. 40.

At this point, the nozzle 26f protrudes above the cap trunk portion 88 through the opening 88f. The cap lid portion 89 is attached to the cap trunk portion 88 before or after the cap trunk portion 88 is attached to the inner plug 26. When the outer peripheral surface of the inner ring 89b of the cap lid portion 89 comes into close contact with the inner peripheral surface of the nozzle 26f, the opening 26f1 is closed by the cap main body 87, resulting in a closed state.

Through the above steps, the cap 8a in which the cap main body 87 is attached to the inner plug 26 is obtained.

### <Method for attaching the cap 8a>

The cap 8a is of a push-in type; if the cap 8a is placed over the mouth 5 and an axial force is applied to the cap 8a to press the cap 8a against the mouth 5, the annular protrusion 26c climbs over the engaging protrusions 4c2 and engages in the axial direction, resulting in the cap 8a being attached to mouth portion 5,

### <Method for extracting the inner bag 4>

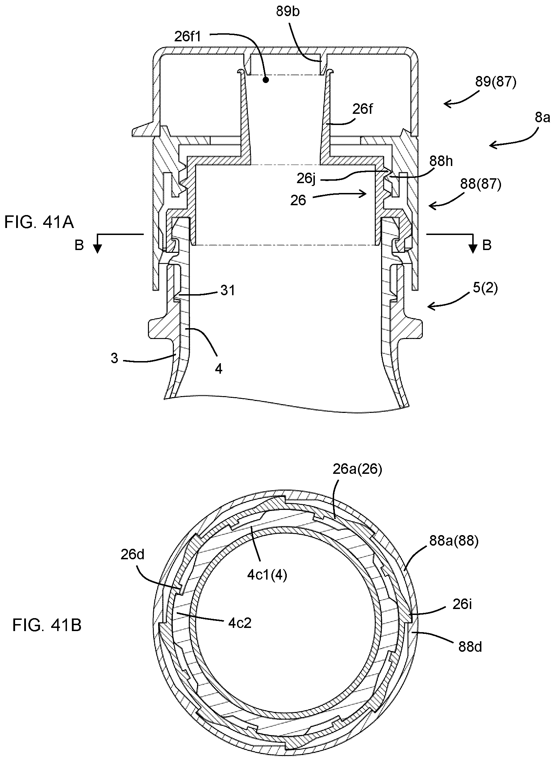

As shown in FIG. 40, before starting to extract the inner bag 4, the cap 8a is in a closed state in which the opening 26f1 is closed by the cap main body 87. In this state, the inner bag 4 does not deflate when the inner bag 4 is extracted, and it is not easy to extract the inner bag 4, since the air inside the inner bag 4 cannot be released. On the other hand, the cap 8a can be switched from a closed state in which the opening 26f1 is closed to a released state in which the opening 26f1 is unblocked, as shown in FIG. 41, while the cap main body 87 is attached to the inner plug 26, by moving the cap main body 87 relative to the inner plug 26 in the axial direction. Hence, the inner bag 4 is easily extractable by extracting the inner bag 4 after the cap 8a is released.

Switching from the closed state to the released state can be done by rotating the cap main body 87 with respect to the inner plug 26. As shown in FIG. 40, before starting to extract the inner bag 4, the engaging protrusion 88d is located below the engaging protrusion 26i. In this state, the engaging protrusion 88d and the engaging protrusion 26i are not engaged with each other. Hence, when the container body 2 is gripped and the cap main body 87 is rotated counterclockwise, viewed from above, only the cap main body 87 rotates. At this time, the cap main body 87 is moved upward in the axial direction by screw feeding, as the male threaded portion 26j and the female threaded portion 88h are unscrewed.

As the cap main body 87 moves, the engaging protrusion 88d approaches the engaging protrusion 26i, and at a certain point, as shown in FIG. 41, the engaging protrusion 88d and the engaging protrusion 26i engage in the circumferential direction. At this point, the threaded engagement between the male threaded portion 26j and the female threaded portion 88h is not completely released and is in a partially threaded state. In addition, as the cap main body 87 moves, the inner ring 89b moves in the direction of coming out of the nozzle 26f, and at the time when the engaging protrusion 88d and the engaging protrusion 26i engage in the circumferential direction, the cap 8a is in a released state where the closing of the opening 26f1 is released.

When the cap main body 87 is further rotated while the engaging protrusion 88d and the engaging protrusion 26i are engaged, the inner plug 26 rotates together with the cap main body 87. Hence, the threaded engagement between the male threaded portion 26j and the female threaded portion 88h is not further released. In addition, since the inner plug 26 is engaged with the opening 5 of the inner bag 4 in the circumferential direction (more specifically, since the engaging protrusion 26d is engaged with the engaging protrusions 4c2 in the circumferential direction), the opening 5 of the inner bag 4 rotates as the inner plug 26 rotates. Since the trunk portion 6 of the inner bag 4 is less likely to be rotated than the mouth 5, the inner bag 4 is twisted and reduced in diameter as the mouth 5 of the inner bag 4 rotates. At this point, as the cap 8a is already in the released state, the air inside the inner bag 4 is smoothly released when the inner bag 4 contracts.

Also, as the opening 5 of the inner bag 4 rotates, the inner bag 4 is displaced to come out of the container body 2 by the action of the cam mechanism 31. This displacement causes at least a portion of the shoulder portion 6b of the inner bag 4 to move to the mouth 5 of the outer shell 3. Since the shoulder portion 6b of the inner bag 4 has an enlarged diameter and a large wall thickness, resistance is likely to be generated when the inner bag 4 is extracted, but the resistance generated while extracting the shoulder portion 6b of the inner bag 4 is reduced, as the shoulder portion 6b of the inner bag 4 moves to the mouth 5 of the outer shell 3,

Hence, the cap main body 87 is pulled in a direction to extract the inner bag 4 (i.e., an axial force is applied). Since the female threaded portion 88h and the male threaded portion 26j are partially screwed together, the axial force applied to the cap main body 87 is transmitted to the inner plug 26. Moreover, since the annular protrusion 26c and the engaging protrusions 4c2 are engaged in the axial direction, the axial force applied to the inner plug 26 is transmitted to the inner bag 4. Hence, by pulling the cap main body 87, the inner bag 4 is extractable from the container body 2 via the inner plug 26.

As described above, according to the present embodiment, the inner bag 4 is easily extractable by simply rotating and then pulling the cap main body 87, which is a simple and intuitive operation. Also, since the cap 8a can be attached by pushing-in, it can be attached smoothly on the line for filling the contents.

### 1-2. Method for manufacturing dual container 1

The dual container 1 can be manufactured by attaching the cap 8a to the container body 2. The container body 2 can be formed by blow molding a parison. Blow molding may be direct blow molding or injection blow molding. In direct blow molding, the container body 2 is manufactured by sandwiching a molten cylindrical (preferably circular cylindrical) parison extruded from an extruder between a pair of split molds and blowing air into the parison. In injection blow molding, a test cylinder-shaped parison with a bottom called a preform is formed by injection molding, and blow molding is performed using this parison. In injection blow molding, the inner bag 4 is unlikely to come into close contact with the outer shell 3, and the inner bag 4 is likely to be easily extracted; hence, it is preferable to form the container body 2 by injection blow molding.

### 2. Second embodiment

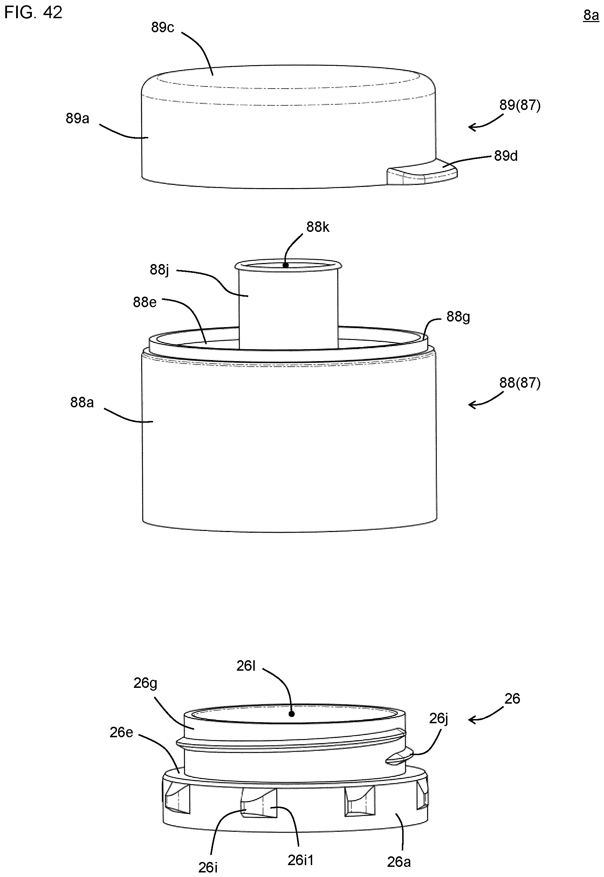

A second embodiment of the present invention is described using FIGs. 42 to 44. This embodiment is similar to the first embodiment, and the main difference is the shape of the cap 8a. The differences are mainly explained below.

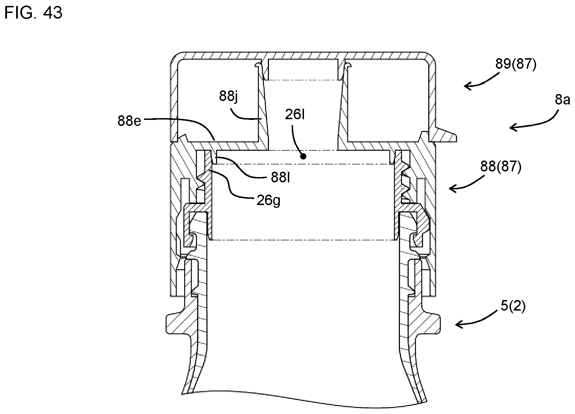

As shown in FIGs. 42 and 43, in this embodiment, the inner plug 26 does not include the second top plate 26h and the nozzle 26f, and the entire upper side of the upper cylinder 26g is an opening 26l. In addition, a nozzle 88j, instead of the opening 88f, is provided on the top plate 88e of the cap trunk portion 88, and the nozzle 88j is provided with an opening 88k. Moreover, an inner ring 881 is provided below the top plate 88e, and the outer peripheral surface of the inner ring 881 is configured to be in close contact with the inner peripheral surface of the upper cylinder 26g.

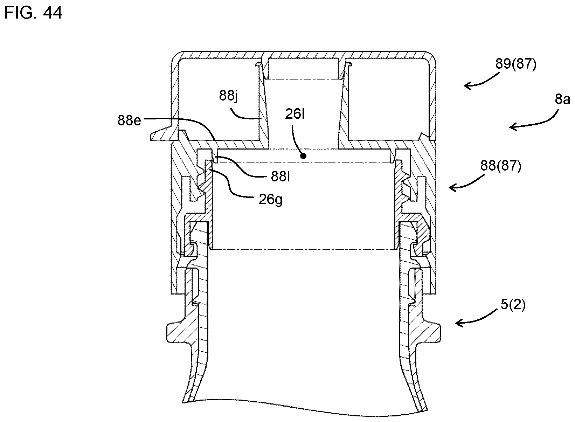

In this embodiment, as shown in FIG. 43, before starting to extract the inner bag 4, the cap 8a is in a closed state in which the opening 26l is closed, by the inner ring 881 coming into close contact with the upper cylinder 26g. In addition, when the cap main body 87 is rotated, the inner ring 881 moves upward due to the same action as in the first embodiment, as shown in FIG. 44, and the tight contact between the inner ring 881 and the upper cylinder 26g is released, resulting in a released state in which the closing of the opening 26l is released.

### 3. Other embodiments

- The structure for raising the inner bag 4 from the container body 2 by relative rotation of the inner bag 4 and the outer shell 3 can be omitted.
- The inner plug 26 does not have to engage the opening 5 of the inner bag 4 in the circumferential direction. In this case, the inner bag 4 is extractable by pulling the inner bag 4 without twisting it.
- In the above embodiment, the closed state is switched to the released state by screw feeding, but for example, the closed state may be switched to the released state by pulling the cap main body 87 in the axial direction.

### 4. Invention from other perspectives

In the 3B perspective of the present invention, a dual container 1 including a container body 2 and a mouth portion attachment 8 is provided, wherein the container body 2 includes an inner bag 4 and an outer shell 3 that is disposed to cover the inner bag 4, and wherein the mouth portion attachment 8 is attached to the opening 5 of the inner bag 4 and is configured to allow the air inside the inner bag 4 to be discharged when the inner bag 4 is extracted from the container body 2 with the mouth portion attachment 8 attached to the opening 5. The descriptions of the 3A perspective of the present invention can also be applied to the present perspective of the invention, unless doing so does not contradict the scope of the descriptions.

The problem that "extracting the inner bag 4 becomes difficult as the inner bag 4 does not shrink due to the air inside the inner bag 4 not being able to escape" can also be solved by such a dual container 1, which provides an advantage that the inner bag 4 is easily extractable from the container body 2.

In the present perspective of the invention, the mouth portion attachment 8 is attached to the mouth portion 5. The mouth portion attachment 8 is a member that is attached to the mouth 5, and examples include a cap 8a and a pump. The mouth portion attachment 8 communicates with the inside of the inner bag 4, and the contents inside the inner bag 4 can be discharged through the mouth portion attachment 8.

The configuration of the mouth portion attachment 8 is not limited to that described in "1. First embodiment" above, and another configuration may be used to allow air to be removed from the inner bag 4. Example of such a configuration include one in which the mouth portion attachment 8 is deformed before or during extracting the inner bag 4, or one that allows the space inside the inner bag 4 to communicate with the outside of the dual container 1 by changing the relative positions of a plurality of members constituting the mouth portion attachment 8. Moreover, one that allows air to be vented without removing the cap lid portion 89 from the cap trunk portion 88 is preferable for such a configuration.

According to a third perspective of the present invention, there is provided a method for extracting an inner bag 4, comprising a step of extracting the inner bag, wherein extracting of the inner bag 4 from a container body 2 having the inner bag 4 and an outer shell 3 is performed in the step of extracting the inner bag, and the extracting is performed while a mouth portion attachment 8 is attached to a mouth portion 5 of the inner bag 4 and air inside the inner bag 4 is dischargeable. The descriptions of the 3A or 3B perspective of the present invention can also be applied to the present perspective of the invention, unless doing so contradicts the scope of the descriptions.

According to the present perspective of the invention, it is possible to vent air from inside the inner bag 4, and the inner bag 4 is easily extractable from the container body 2. In addition to the configuration described in the first or second perspective, configurations that allow air to be removed from the inner bag 4 include a configuration in which the cap lid portion 89 is removed from the cap trunk portion 88. Such a configuration allows portions of the mouth portion attachment 8 other than the cap lid portion 89 to remain attached to the mouth portion 5 of the inner bag 4, making it possible to extract the inner bag 4 from the container body 2 while the mouth portion attachment 8 is attached to the mouth portion 5 of the inner bag 4.

### (Fourth perspective)

### 1. First embodiment

### 1-1. Configuration of the dual container 1

### <Basic configuration>

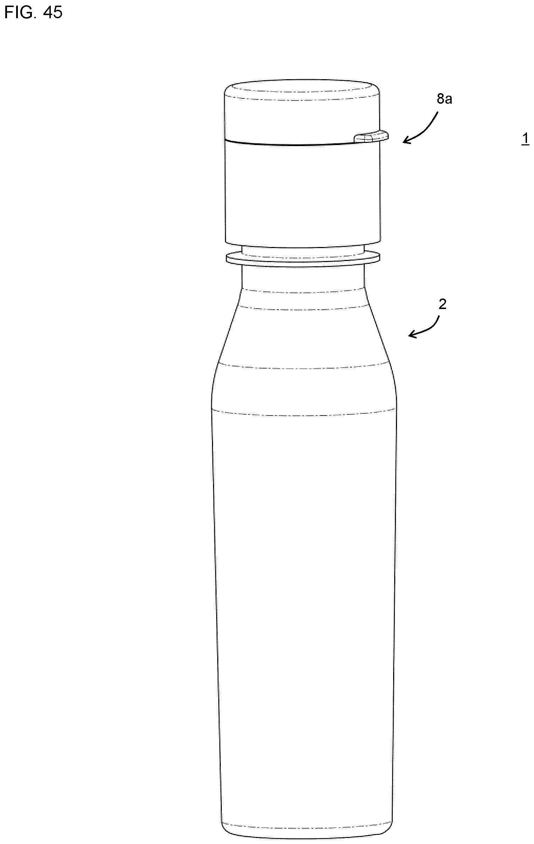

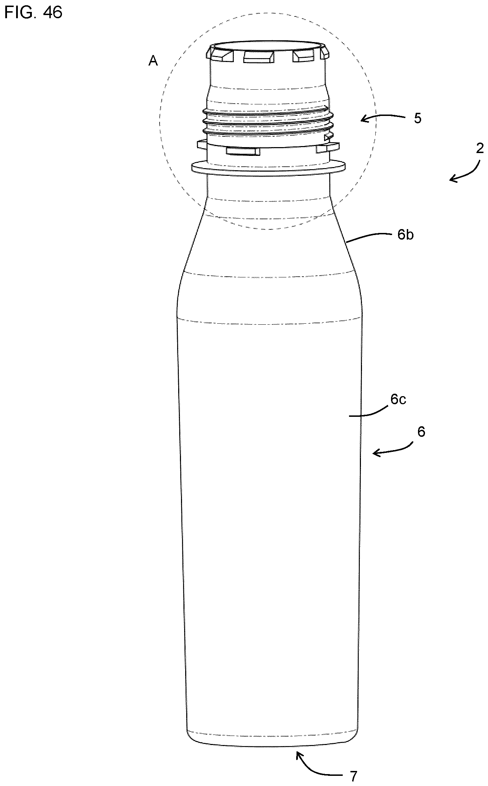

The dual container 1 of this embodiment has a structure shown in FIGs. 45 to 54. Regarding the dual container 1, the descriptions of the first embodiment of the first perspective also apply to this embodiment unless doing so contradicts the scope of the descriptions. In this embodiment, the mouth portion attachment 8 is a cap 8a.

### <Details of the structures of the inner bag 4 and outer shell 3>

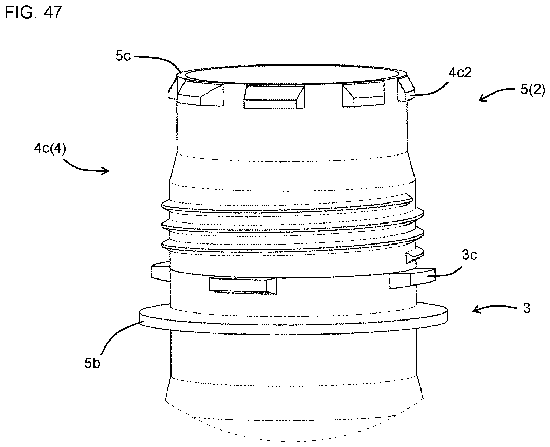

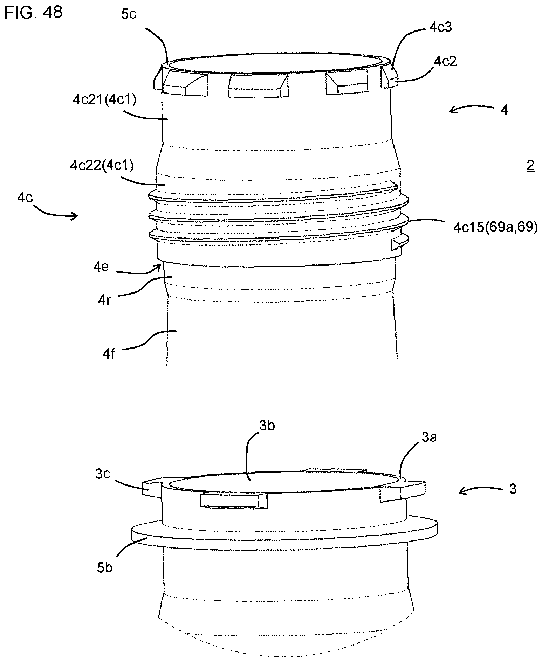

As shown in FIGs. 47 and 48, the inner bag 4 includes a protrusion 4c that protrudes from the open end 3a of the outer shell 3. The protrusion 4c includes a protruding cylinder 4c1, an engaging protrusion 4c2, and a male screw portion 4c15. The open end of the protrusion 4c corresponds to the open end 5c.

The protruding cylinder 4c1 includes a lower cylinder 4c21 and an upper cylinder 4c22. The upper cylinder 4c22 is arranged closer to the open end 5c than the lower cylinder 4c21. The upper cylinder 4c22 has a smaller outer diameter than the lower cylinder 4c21. The engaging protrusions 4c2 are provided on the upper cylinder 4c22, and the male threaded portion 4c15 is provided on the lower cylinder 4c21. Note that, instead of providing a plurality of cylinders having different outer diameters, the entire outer diameter may be identical.

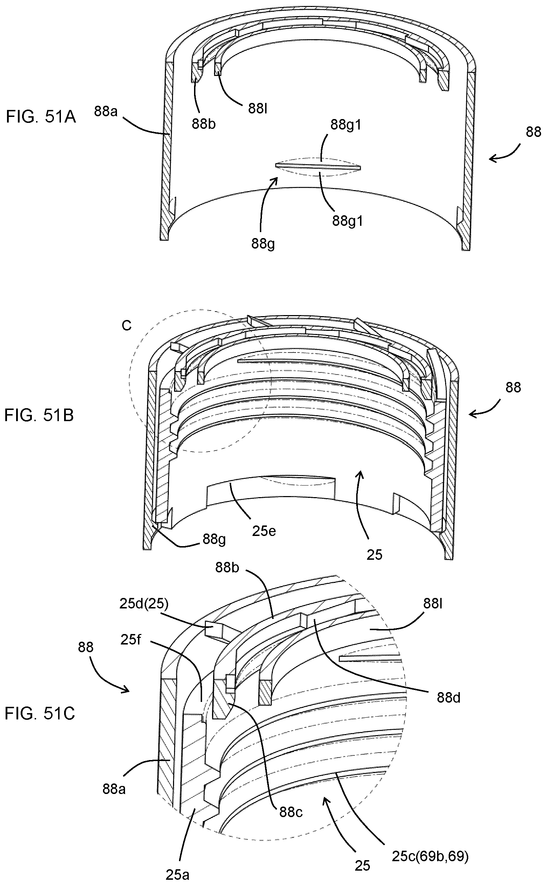

The engaging protrusions 4c2 protrude radially outward from the outer peripheral surface of the protruding cylinder 4c1. The engaging protrusions 4c2 are provided at a plurality of locations (eight locations in this embodiment) spaced apart in the circumferential direction. Each engaging protrusion 4c2 is provided with a tapered surface 4c3 on the upper surface. This allows the annular protrusion 88c (shown in FIG. 51) of the cap trunk portion 88 to easily climb over the engaging protrusion 4c2, as described later. The male threaded portion 4c15 is provided on the protruding cylinder 4c1.

The inner bag 4 includes a fitting portion 4r at a position adjacent to the bottom portion 7 side of the protruding cylinder 4c1. The fitting portion 4r is inserted into the outer shell 3 and fitted into the outer shell 3. The outer diameter of the fitting portion 4r is smaller than that of the protruding cylinder 4c1, and a step 4e is provided between the fitting portion 4r and the protruding cylinder 4c1. At the step 4e, the lower surface of the protruding cylinder 4c1 comes into contact with the open end 3a, whereby the inner bag 4 is positioned with respect to the outer shell 3.

The outer diameter of the fitting portion 4r is slightly larger than the inner diameter of the fitting portion 3b provided adjacent to the open end 3a of the outer shell 3, and the inner bag 4 is held by the outer shell 3 by fitting the fitting portion 4r and the fitting portion 3b. A reduced diameter portion 4f is provided on a side farther from the opening end 5c than the fitting portion 4r. The reduced diameter portion 4f has a smaller outer diameter than the fitting portion 4r.

The outer shell 3 includes an engaging protrusion 3c that protrudes radially outward, at a position closer to the open end 3a than the flange 5b. The engaging protrusions 3c are provided at a plurality of locations (four locations **in** this embodiment) spaced apart **in** the circumferential direction.

### <Details of the structure of the cap 8a>

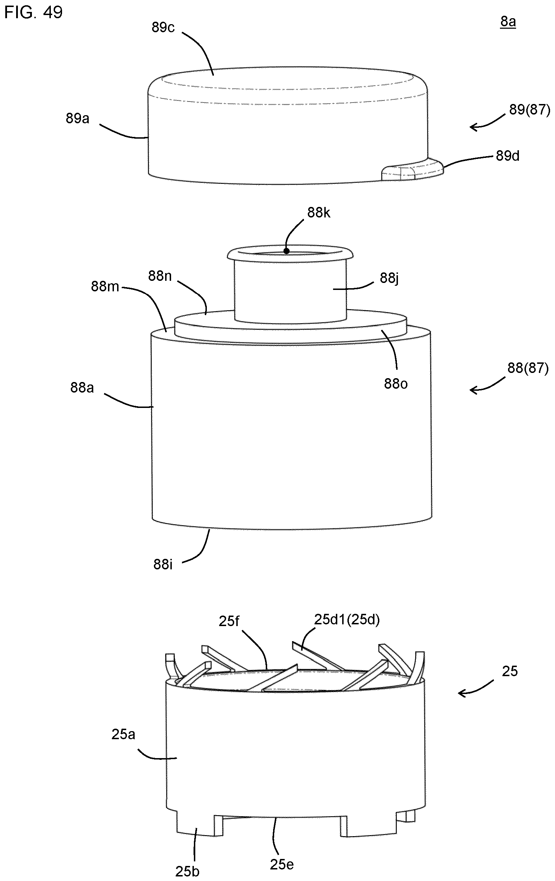

Explanations for the cap 8a are provided using FIGs. 49 to 54. As shown **in** FIG. 49, the cap 8a includes a cam member 25 and a cap main body 87.

### - Cam member 25

As shown **in** FIGs. 49 to 52, the cam member 25 includes a cylindrical portion 25a, an engaging protrusion 25b, a female screw portion 25c, and a biasing portion 25d.

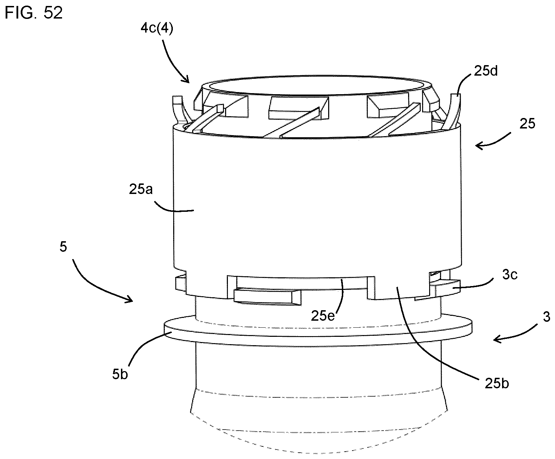

As shown **in** FIG. 52, the cylindrical portion 25a is arranged outside the protrusion 4c. The engaging protrusions 25b protrude **in** the axial direction from the lower end 25e of the cylindrical portion 25a. The engaging protrusions 25b are provided at a plurality of locations (four locations **in** this embodiment) spaced apart **in** the circumferential direction. The engaging protrusions 25b are arranged between the adjacent engaging protrusions 3c, so that the cam member 25 engages with the outer shell 3 **in** the circumferential direction of the mouth portion 5.

The female threaded portion 25c is provided on the inner peripheral surface of the cylindrical portion 25a. The male threaded portion 4c15 and the female threaded portion 25c function as first and second cam portions 69a and 69b that constitute the cam mechanism 69, respectively.

The cam mechanism 69 is configured such that, when the protrusion 4c is rotated with respect to the cam member 25, the protrusion 4c moves outward in the axial direction of the mouth 5 by the action of cam mechanism 69 between cam member 25 and protrusion 4c. More specifically, the cam mechanism 69 includes a first cam portion 69a provided on the protrusion 4c and a second cam portion 69b provided on the cam member 25, and is configured such that, when the protrusion 4c is rotated with respect to the cam member 25, the protrusion 4c moves axially outwards as the first cam portion 69a moves relative to the second cam portion 69b **in** the axial direction.

The biasing portions 25d have a function of biasing the cylindrical portion 25a downward. The biasing portions 25d are preferably provided at the upper end 25f of the cylindrical portion 25a, and are preferably constituted by protrusions 25d1 extending diagonally from the upper end 25f. The protrusions 25d1 are provided at a plurality of locations (eight locations in this embodiment) spaced apart in the circumferential direction. The biasing portions 25d are preferably formed integrally with the cylindrical portion 25a, but may be formed as separate members.

### - Cap body 87

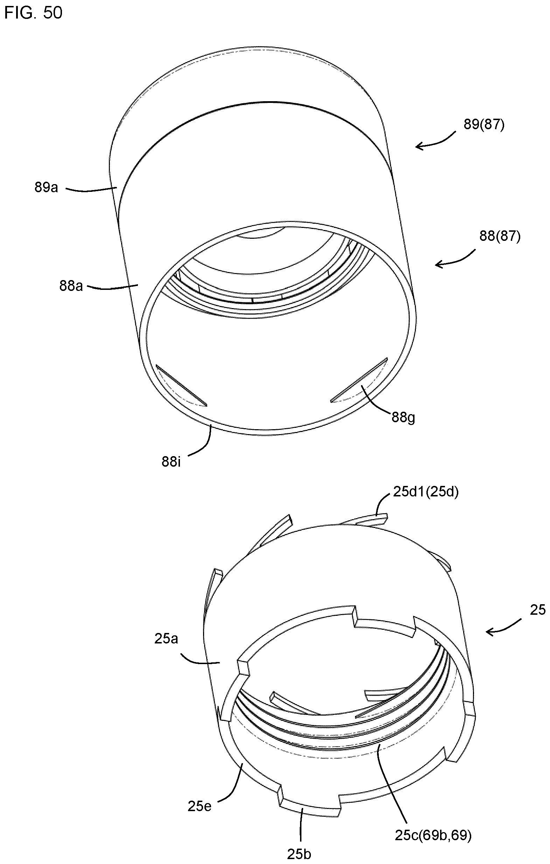

As shown in FIGs. 49 and 50, the cap main body 87 includes a cap trunk portion 88 and a cap lid 89. The cap main body 87 can be switched between an engaged state shown in FIG. 45 and a separated state shown in FIG. 49. In the engaged state, the cap lid portion 89 is engaged with and integrated with the cap trunk portion 88. In the separated state, the cap lid portion 89 is separated from the cap trunk portion 88. In the separated state, the cap lid 89 may be completely separated from the cap trunk portion 88 or may be connected by a hinge or the like. By bringing the cap main body 87 into the engaged state, the contents within the inner bag 4 can be prevented from leaking, and by bringing the cap main body 87 into the separated state, the contents within the inner bag 4 can be discharged.

### - Cap trunk portion 88

As shown in FIGs. 49 to 54, the cap trunk portion 88 includes an outer cylinder 88a, an inner cylinder 88b, an annular protrusions 88c, an engaging protrusion 88d, an engaging protrusion 88g, an inner ring 88l, a first top plate 88m, a second top plate 88n, an upper cylinder 88o, and a nozzle 88j.

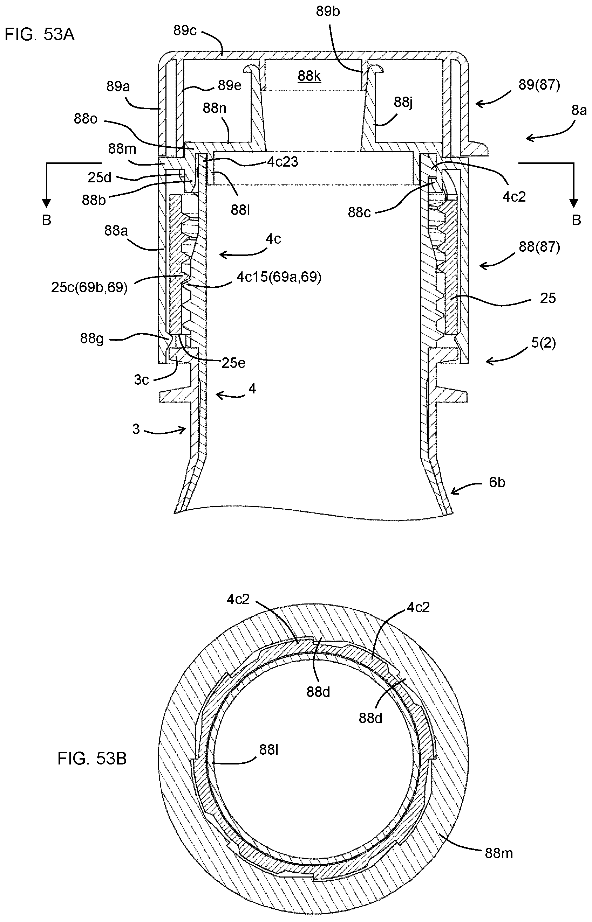

As shown in FIG. 53A, the first top plate 88m is provided on the upper surface of the outer cylinder 88a. An inner cylinder 88b is provided on the lower surface of the first top plate 88m. The inner cylinder 88b has a smaller diameter than the outer cylinder 88a, and is arranged inside the outer cylinder 88a.

As shown in FIG. 51C, the annular protrusion 88c is an annular protrusion provided on the inner peripheral surface of the inner cylinder 88b so as to extend in the circumferential direction. When the annular protrusion 88c engages with the engaging protrusions 4c2 in the axial direction, the cap trunk portion 88 engages with the protrusion 4c of the inner bag 4 in the axial direction. As shown in FIGs. 51C and 53B, the engaging protrusions 88d are provided on the inner peripheral surface of the inner cylinder 88b at a plurality of locations (eight locations in this embodiment) spaced apart in the circumferential direction. The engaging protrusions 88d are located further away from the lower end of the inner cylinder 88b than the annular protrusion 88c. The engaging protrusions 88d are arranged between the adjacent engaging protrusions 4c2, so that the cap trunk portion 88 engages with the protrusion 4c of the inner bag 4 in the circumferential direction.

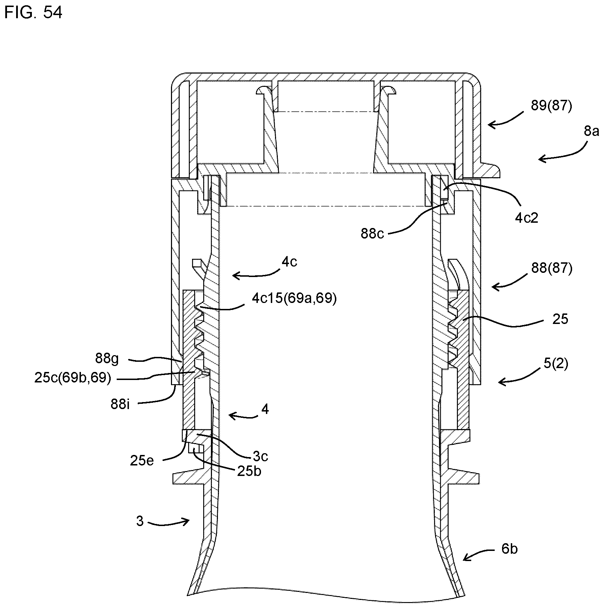

The engaging protrusions 88g is provided on the inner peripheral surface of the outer cylinder 88a. The engaging protrusions 88g are provided at a plurality of locations (four locations in this embodiment) spaced apart in the circumferential direction. The lower end 25e of the cylindrical portion 25a of the cam member 25 disposed inside the cap trunk portion 88 comes into contact with the engaging protrusion 88g, by which the cam member 25 is retained within cap trunk portion 88 before starting to extract inner bag 4. Note that, after starting to extract the inner bag 4, the lower end 25e climbs over the engaging protrusions 88g and protrudes from the lower end 88i of the cap trunk portion 88, as shown in FIGs. 53 and 54.

When the cam member 25 is placed inside the cap trunk portion 88, the upper end 25f of the cylindrical portion 25a climbs over the engaging protrusions 88g, and when the inner bag 4 is extracted, the lower end 25e of the cylindrical portion 25a climbs over the engaging protrusions 88g. Hence, as shown in FIG. 51A, tapered surfaces 88g1 are provided on the upper and lower sides of the engaging protrusions 88g so that the upper end 25f and the lower end 25e can smoothly climb over the engaging protrusions 88g.

As shown in FIG. 49, an upper cylinder 88o is provided on the upper surface of the first top plate 88m, and a second top plate 88n is provided on the upper surface of the upper cylinder 88o. As shown in FIG. 53A, an inner ring 881 is provided on the lower surface of the second top plate 88n. The inner ring 881 has a smaller diameter than the inner cylinder 88b and is arranged inside the inner cylinder 88b. The tip portion 4c23 of the protruding cylinder 4c1 is arranged between the inner cylinder 88b and the inner ring 881. The nozzle 88j is provided on the second top plate 88n. The nozzle 88j is provided with an opening 88k.

### - Cap lid portion 89

As shown in FIGs. 49 and 53, the cap lid portion 89 includes an outer cylinder 89a, an inner cylinder 89e, an inner ring 89b, a top plate 89c, and a knob 89d.

The top plate 89c is provided on the upper surface of the outer cylinder 89a. An inner cylinder 89e and an inner ring 89b are provided on the lower surface of the top plate 89c. The inner cylinder 89e has a smaller diameter than the outer cylinder 89a, and is arranged inside the outer cylinder 89a. The cap lid portion 89 is fixed to the cap trunk portion 88 by fitting the outer peripheral surface of the upper cylinder 88o to the inner peripheral surface of the inner cylinder 89e.

Inner ring 89b has a smaller diameter than inner cylinder 89e, and is arranged inside inner cylinder 89e. The inner ring 89b is configured such that, when the cap 8a is attached to the mouth portion 5, the outer peripheral surface of the inner ring 89b comes into contact with the inner peripheral surface of the nozzle 88j to enable closing the opening 88k. The knob 89d is provided on the outer peripheral surface of the outer cylinder 89a, and can be used to separate the cap lid portion 89 from the cap trunk portion 88 by hooking a finger on the knob 89d.

### <Method for assembling the cap 8a>

It is preferable to assemble the cap 8a before attaching the cap 8a to the mouth portion 5, because this facilitates simplifying the process of attaching the cap 8a on the line for filling the contents.

To assemble the cap 8a, as shown in FIG. 50, the cam member 25 may be inserted into the cap trunk portion 88 from the lower side of the cap trunk portion 88, and the lower end 25e of the cam member 25 may be locked by the engaging protrusion 88g.

Through the above steps, the cap 8a in which the cam member 25 is held by the cap trunk portion 88 is obtained.

### <Method for attaching the cap 8a>

The cap 8a is of a push-in type; the cap 8a is attached to mouth portion 5, as the annular protrusion 88c climbs over the engaging protrusions 4c2 and engages in the axial direction when the cap 8a is placed over the mouth 5 and an axial downward force is applied to the cap 8a to press the cap 8a against the mouth 5.

### <Method for extracting the inner bag 4>

A method for extracting the inner bag 4 is explained below, where the male threaded portion 4c15 and the female threaded portion 25c can be interchangeably read as the first and second cam portions 69a and 69b, respectively, as appropriate.

As shown in FIG. 53A, before starting to extract the inner bag 4, the female threaded portion 25c of the cam member 25 is arranged above the male threaded portion 4c15 of the inner bag 4. The cam member 25 is in a state in which the biasing portions 25d is elastically deformed as the upper side of the biasing portions 25d is pressed against the lower surface of the first top plate 88m of the cap trunk portion 88. The cam member 25 is biased downward by the restoring force of the biasing portions 25d. Then, as the cam member 25 is biased downward, the female threaded portion 25c is pressed against the male threaded portion 4c15.

In this state, the cap trunk portion 88 is rotated. Since the cap trunk portion 88 engages with the protrusion 4c of the inner bag 4 in the circumferential direction, the protrusion 4c rotates as the cap trunk portion 88 rotates. Since the trunk portion 6 of the inner bag 4 is less likely to be rotated than the protrusion 4c, the inner bag 4 is twisted and reduced in diameter as the protrusion 4c rotates. At this time, it is preferable to remove the cap lid 89 before rotating the cap trunk portion 88, since the air inside the inner bag 4 cannot escape and the inner bag 4 is unlikely to be reduced in diameter if the inner bag 4 is sealed with the cap 8a.

Since the female threaded portion 25c is pressed against the male threaded portion 4c15, the cam member 25 tends to rotate as the protrusion 4c rotates. However, as shown in FIG. 52, the cam member 25 is engaged with the outer shell 3 in the circumferential direction as the engaging protrusions 25b engage with the engaging protrusions 3c of the outer shell 3. As a result, the cam member 25 does not rotate even if the protrusion 4c rotates. Hence, as the cap trunk portion 88 rotates, the protrusion 4c rotates relative to the cam member 25.

When the protrusion 4c is rotated with respect to the cam member 25, the female threaded portion 25c and the male threaded portion 4c15 engage with each other, and the protrusion 4c moves outward in the axial direction by the action of the cam mechanism 69. Since the female threaded portion 25c is pressed against the male threaded portion 4c15, the female threaded portion 25c and the male threaded portion 4c15 are prevented from not engaging with each other and rotating idly.

In an initial state before starting to extract the inner bag 4 from the container body 2, the female threaded portion 25c is located closer to the open end 5c than the male threaded portion 4c15. Then, the protrusion 4c moves outward in the axial direction, as the protrusion 4c is rotated with respect to the cam member 25 and the threaded length of the female threaded portion 25c and the male threaded portion 4c15 becomes longer.

Note that the female threaded portion 25c and the male threaded portion 4c15 are configured to be screwed together when the cap 8a is rotated counterclockwise, viewed from above. Hence, the cap trunk portion 88 is rotated counterclockwise to extract the inner bag 4. Note that if the female threaded portion 25c and the male threaded portion 4c15 are configured to be screwed together by rotation in the opposite direction, the cap trunk portion 88 is rotated clockwise to extract the inner bag 4.

In this manner, when the cap trunk portion 88 is rotated, the protrusion 4c moves outward in the axial direction while rotating. Hence, the inner bag 4 moves outward in the axial direction while being twisted, and at least a portion of the shoulder portion 6b of the inner bag 4 moves to the mouth 5 of the outer shell 3. Since the shoulder portion 6b of the inner bag 4 has an enlarged diameter and a relatively large wall thickness, the resistance force when extracting the inner bag 4 tends to be large. However, as the shoulder portion 6b of the inner bag 4 moves to the mouth 5 of the outer shell 3, the resistance force when extracting the shoulder portion 6b of the inner bag 4 is reduced.

As shown in FIG. 54, as the protrusion 4c moves outward in the axial direction, the cam member 25 moves downward relative to the protrusion 4c. The cam member 25 moves downward by climbing over the engaging protrusion 88g, and the lower end 25e is locked by the engaging protrusions 3c.

Then, the cap trunk portion 88 is pulled in a direction to extract the inner bag 4 (i.e., to apply an outward force in the axial direction). Since the cap trunk portion 88 is engaged with the protrusion 4c in the axial direction, the inner bag 4 is extractable from the container body 2 by pulling the cap trunk portion 88.

As described above, according to the present embodiment, the inner bag 4 is easily extractable by simply rotating and pulling the cap trunk portion 88, which is a simple and intuitive operation. Also, since the cap 8a can be attached by pushing-in, it can be attached smoothly on the line for filling the contents.

### 1-2. Method for manufacturing dual container 1

The dual container 1 can be manufactured by attaching the cap 8a to the container body 2. In one example, the container body 2 can be manufactured by carrying out biaxial stretch blow molding on a preform prepared by stacking and assembling an inner preform, which becomes the inner bag 4, and an outer preform, which becomes the outer shell 3. The inner preform and the outer preform each have portions corresponding to the fitting portion 4r and the fitting portion 3b, and the preform can be easily assembled by fitting the fitting portion of the inner preform to the fitting portion of the outer preform. Biaxial stretch blow molding provides an advantage that the inner bag 4 is less likely to come into close contact with the outer shell 3 and the inner bag 4 is easy to extract. In addition, it is preferable that the inner preform includes a portion corresponding to the reduced diameter portion 4f. In this case, the resistance force when inserting the inner preform into the outer preform is reduced. Note that since the shape of the mouth of the preform hardly changes during biaxial stretch blow molding, the shape of the mouth of the preform more or less becomes the shape of the mouth of the container body 2.

### 2. Other embodiments

- In the above embodiment, the cam mechanism 69 was composed of the male threaded portion 4c15 and the female threaded portion 25c, but the cam mechanism 69 may have a different configuration as long as the protrusion 4c moves outward in the axial direction as the protrusion 4c rotates.
- In the above embodiment, the cam member 25 is cylindrical, but the cam member does not need to be cylindrical as long as the cam member can constitute the cam mechanism 69.

### (Fifth perspective)

In the embodiments shown below, the 5A to 5C perspectives of the invention are disclosed. The first and second embodiments relate to the 5A perspective. The third embodiment relates to the 5B to 5C perspectives. The descriptions of the first to third embodiments are mutually applicable unless doing so contradicts the scope of the descriptions. Hence, for example, structures described in the first embodiment and structures described in the third embodiment may be combined.

### 1. First embodiment

### 1-1. Configuration of the dual container 1

### <Basic configuration>

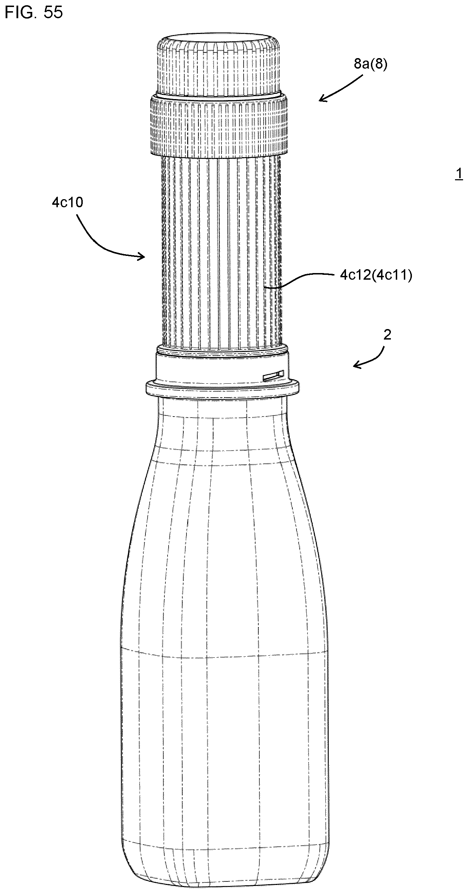

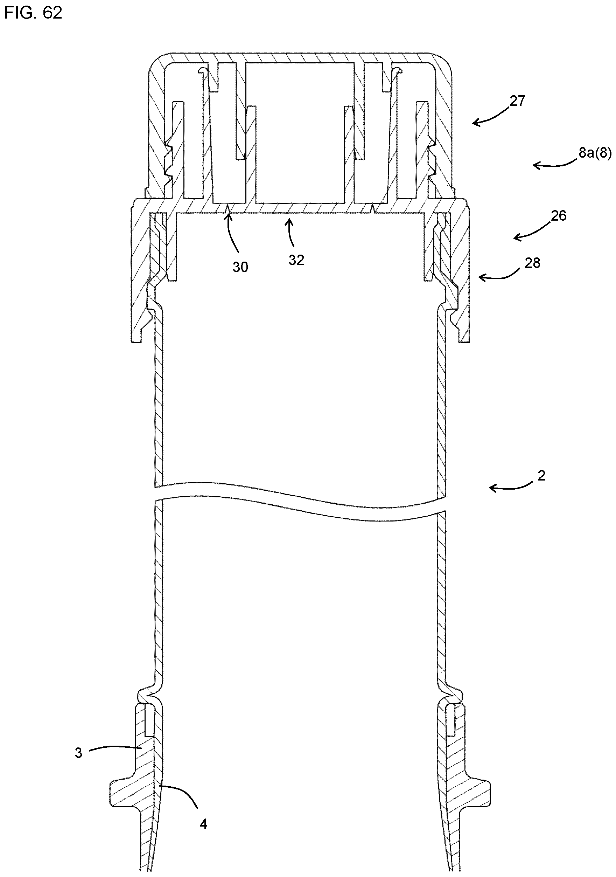

The dual container 1 of this embodiment has a structure shown in FIGs. 55 to 62. Regarding the dual container 1, the descriptions of the first embodiment of the first perspective also apply to this embodiment unless doing so contradicts the scope of the descriptions.

### <Detailed structures of the outer shell 3 and inner bag 4>

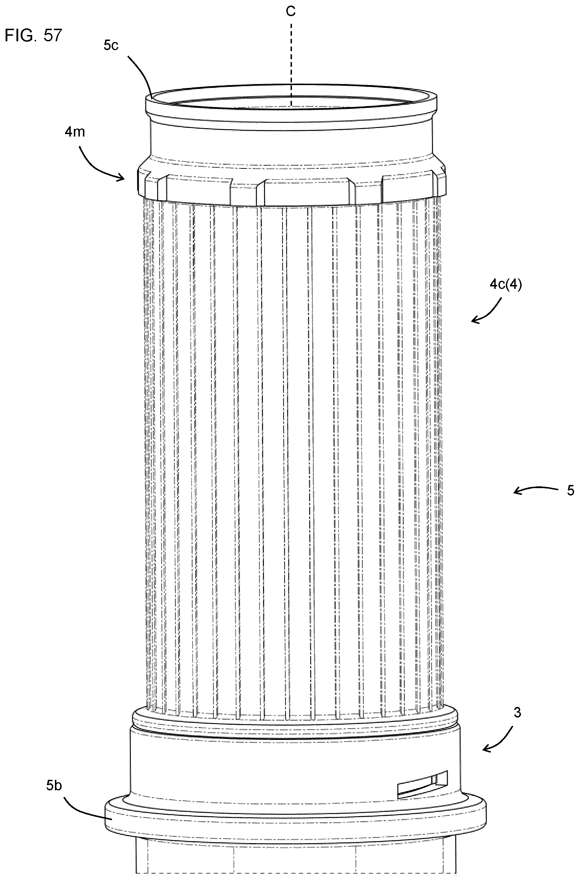

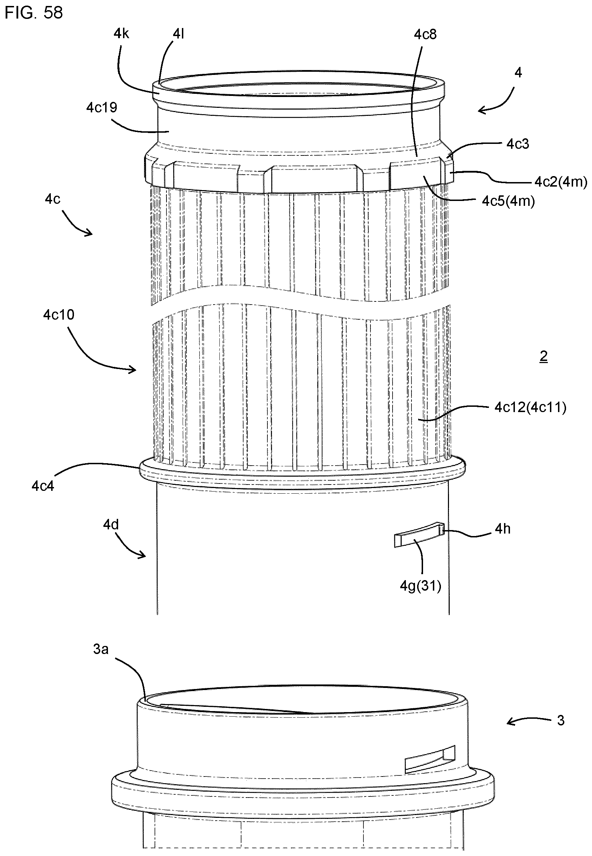

As shown in FIGs. 57 and 58, the inner bag 4 includes a protrusion 4c that protrudes from the open end 3a of the outer shell 3. The protrusion 4c includes an engaging protrusion 4c2, an annular protrusion 4c5, an abutting flange 4c4, a tip cylinder portion 4c19, and a gripping portion 4c10. The annular protrusions 4c5 and the engaging protrusions 4c2 constitute an engaging portion 4m for engaging with the mouth portion attachment 8. The tip cylinder portion 4c19 is arranged closer to the open end 4l than the engaging portion 4m. The gripping portion 4c10 is disposed on a side farther from the opening end 4l than the engaging portion 4m (more specifically, between the engaging portion 4m and the abutting flange 4c4).

The annular protrusions 4c5 engage with the mouth portion attachment 8 in the axial direction. The engaging protrusions 4c2 engage with the mouth portion attachment 8 in the circumferential direction.

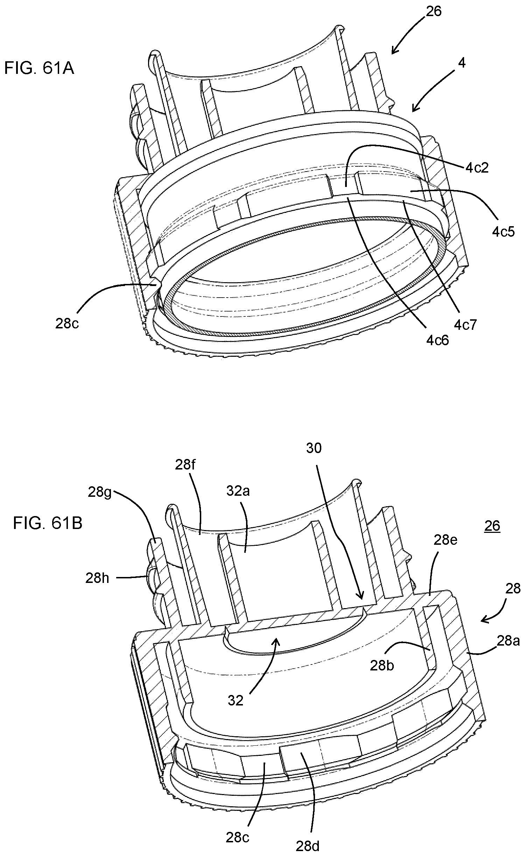

It is preferable that the engaging protrusions 4c2 are provided at a plurality of locations (eight locations in this embodiment) spaced apart in the circumferential direction. The engaging protrusions 4c2 are arranged on the annular protrusions 4c5 so as to protrude radially outward from the annular protrusions 4c5. The annular protrusions 4c5 and the engaging protrusions 4c2 are provided with tapered surfaces 4c8, 4c3 on their upper surfaces. This allows the annular protrusions 28c (shown in FIG. 61A) of the mouth portion attachment 8 to easily climb over the annular protrusions 4c5 and the engaging protrusions 4c2, as described later.

Further, as shown in FIG. 61A, the lower surface 4c6 of the engaging protrusion 4c2 is flush with the lower surface 4c7 of the annular protrusion 4c5, or is positioned closer to the opening end of the inner bag 4 than the lower surface 4c7 of the annular protrusion 4c5. According to such a configuration, the engagement between the mouth portion attachment 8 and the inner bag 4 is reinforced, since the axial engagement between the annular protrusions 4c5 and the mouth portion attachment 8 is reinforced by the engaging protrusion 4c2.

The abutting flange 4c4 is positioned so as to contact the open end 3a. The abutting flange 4c4 is an annular portion whose diameter is larger than that of the gripping portion 4c10. By abutting the abutting flange 4c4 against the open end 3a, the inner bag 4 is prevented from falling into the outer shell 3.

The gripping portion 4c10 is formed with an uneven shape 4c12 as an anti-slip shape 4c11. This makes it easy to rotate and/or pull the inner bag 4 by gripping the gripping portion 4c10. Also, it is preferable that, when the mouth portion attachment 8 is attached to the mouth portion 5, the anti-slip shape 4c11 is not engaged with the mouth portion attachment 8 in the circumferential direction and the gripping portion 4c10 is not covered by the mouth portion attachment 8. This makes it possible to grip the gripping portion 4c10 while the mouth portion attachment 8 is attached. The uneven shape 4c12 is, for example, a knurl. The knurl may be straight or cross knurling. It is preferable that the gripping portion 4c10 has a length that allows the user to easily grip it by hand. The length of the gripping portion 4c10 is, for example, 15 mm or more, preferably 15 to 100 mm, and more preferably 30 to 70 mm. Specifically, this length is, for example, 15, 20, 25, 30, 35, 40, 45, 50, 55, 60, 65, 70, 75, 80, 85, 90, 95, 100 mm; the length may also be set to an arbitrary value between any two of these exemplary values, or equal to or above any of these values.

As shown in FIG. 58, cam protrusions 4g and engaging protrusions 4h are provided on the outer peripheral surface of the inner bag main body 4d. The engaging protrusions 4h are provided on the cam protrusions 4g. The lower surfaces of the cam protrusions 4g and the engaging protrusions 4h are each inclined so as to approach the open end 5c as they proceed counterclockwise when viewed from the open end 5c side of the mouth portion 5.

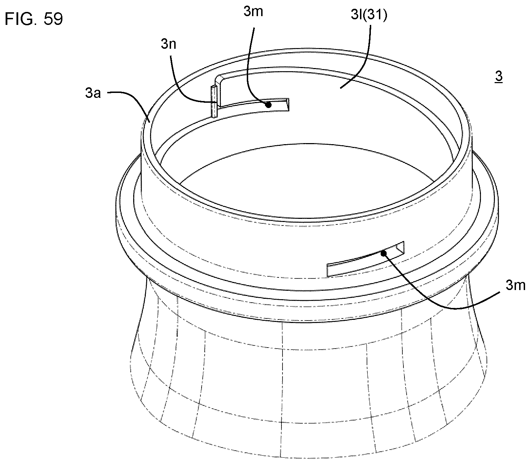

As shown in FIG. 59, the inner peripheral surface of the outer shell 3 is provided with cam rails 3l, engaging recesses 3m, and engaging protrusions 3n. The engaging recesses 3m are provided such that the lower surfaces of the engaging recesses 3m are continuous with the upper surfaces of the cam rails 3l. The upper surfaces of the cam rails 31 and the lower surfaces of the engaging recesses 3m are inclined so as to approach the opening end 3a as they proceed counterclockwise when viewed from the opening end 3a side. The engaging protrusions 3n are positioned adjacent to an engaging recess 3m.

Before the inner bag 4 is extracted from the container body 2, the engaging protrusions 4h are disposed within the engaging recesses 3m, and the lower surfaces of the cam protrusions 4g are in contact with the upper surfaces of the cam rails 3l. A cam mechanism 31 is constituted by the cam protrusions 4g and the cam rails 3l. In this embodiment, the engaging recesses 3m are through holes, but may be non-through holes.

Trying to rotate the inner bag 4 counterclockwise results in the engaging protrusions 4h coming into contact with the engaging protrusions 3n to restrict the rotation. This restriction is not strong; applying a strong torque to the inner bag 4 allows the engaging protrusions 4h to climb over the engaging protrusions 3n to enable the inner bag 4 to freely rotate relative to the outer shell 3. Then, further rotating the inner bag 4 counterclockwise allows the inner bag 4 to move in the direction of coming out of the container body 2 due to the action of the cam mechanism 31. When this occurs, the inner bag 4 is twisted to reduce its diameter.

An enlarged diameter structure 4k is provided at the open end 4l of the inner bag 4. The expanded diameter structure 4k increases the rigidity of the opening 5 of the inner bag 4 and prevents deformation of the opening 5 of the inner bag 4.

### <Pulling out the inner bag 4>

The dual container 1 of this embodiment is configured in such a way that the inner bag 4 moves in the direction of coming out of the container body 2 as the inner bag 4 rotates, due to the action of the cam mechanism 31 provided between the inner bag 4 and the outer shell 3.

Hence, the inner bag 4 can be moved in the direction of coming out of the container body 2 simply by gripping and rotating the gripping portion 4c10, and after that, by gripping and pulling the gripping portion 4c10, the inner bag 4 is extractable from the container body 2. In other words, since the inner bag 4 is extractable simply by turning and pulling the gripping portion 4c10, the operation required to extract the inner bag 4 becomes very simple. Since the gripping portion 4c10 is provided with an anti-slip shape 4c11, it is easy to rotate and/or pull the inner bag 4 by gripping the gripping portion 4c10. Moreover, it is preferable that the rotation of the gripping portion 4c10 at this time is in the loosening direction of right-hand threads (i.e., in the counterclockwise direction when viewed from the upper side of the dual container 1). In this case, there is an advantage that the inner bag 4 moving in the direction of coming out of the container body 2 is intuitively understandable.

Furthermore, since the trunk portion 6 of the container body 2 has a larger outer diameter than the mouth 5, it is not easy to extract the inner bag 4 through the mouth 5 of the outer shell 3 by simply pulling the inner bag 4. However, by rotating the opening 5 of the inner bag 4 and twisting the inner bag 4 to reduce the diameter of the trunk portion 6 of the inner bag 4, the trunk portion 6 of the inner bag 4 can easily pass through the opening 5 of the outer shell 3; thus, the inner bag 4 is easily extractable from the container body 2.

### <Detailed structure of the mouth portion attachment 8>

The mouth portion attachment 8 is configured to be attachable to the mouth 5 of the container body 2 by pushing-in; by pressing the mouth portion attachment 8 in the direction of the bottom portion 7 while the mouth portion attachment 8 is placed over the mouth portion 5, the mouth portion attachment 8 can be engaged with and attached to the mouth portion 5. Since a push-in type mouth portion attachment 8 can be attached by simply pressing, it has the advantage that the process of attaching the mouth portion attachment 8 can be simplified on the line for filling the contents.

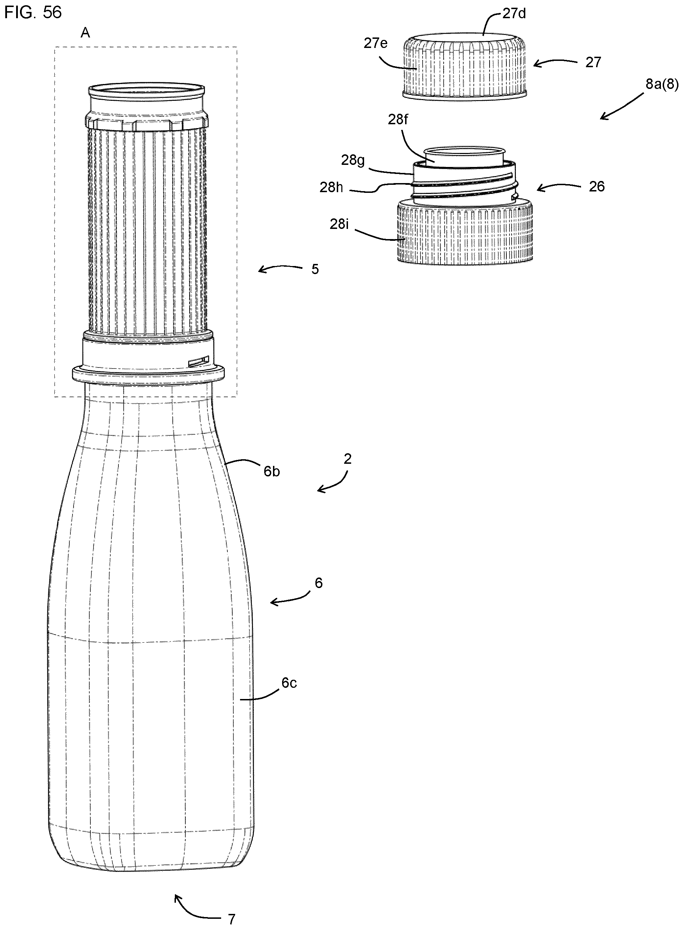

As shown in FIG. 56, in this embodiment, the mouth portion attachment 8 is a cap 8a, and includes an inner plug 26 and an overcap 27. The inner plug 26 is engaged, by pushing-in, with the mouth portion 5 of the inner bag 4 in the circumferential direction and the axial direction. The overcap 27 is screwed onto the inner plug 26.

As shown in FIGs. 56, 60, and 62, the overcap 27 includes an outer cylinder 27a, an intermediate cylinder 27b, an inner cylinder 27c, and a top plate 27d.

A knurl 27e is provided on the outer peripheral surface of the outer cylinder 27a, making it easy to grip and rotate the overcap 27. In this case, the inner bag 4 can be rotated even more easily by gripping both the gripping portion 4c10 of the inner bag 4 and the outer peripheral surface of the outer cylinder 27a and rotating the inner bag 4. Further, since there is a step between the gripping portion 4c10 and the outer peripheral surface of the outer cylinder 27a, the inner bag 4 can be pulled by hooking a finger on the step while gripping the gripping portion 4c10. A female threaded portion 27f is provided on the inner peripheral surface of the outer cylinder 27a. The top plate 27d is provided on the upper surface of the outer cylinder 27a. An intermediate cylinder 27b and an inner cylinder 27c are provided on the lower surface of the top plate 27d. The intermediate cylinder 27b is a so-called inner ring that has a smaller diameter than the outer cylinder 27a and is arranged inside the outer cylinder 27a. The inner cylinder 27c has a smaller diameter than the intermediate cylinder 27b, and is arranged inside the intermediate cylinder 27b.

As shown in FIGs. 56 and 60 to 62, the inner plug 26 includes a main body portion 28 and an opening portion 32. The main body portion 28 and the opening portion 32 are connected to each other via an easy-to-tear connecting portion 30.

The main body portion 28 includes an outer cylinder 28a, an inner cylinder 28b, an annular protrusion 28c, an engaging protrusion 28d, a top plate 28e, a discharge cylinder 28f, and a mounting cylinder 28g. The opening portion 32 and the connecting portion 30 are arranged inside the discharge cylinder 28f and the inner cylinder 28b. The opening portion 32 is provided with an engaging cylinder 32a provided with an engaging portion (not shown), and the inner cylinder 27c and the engaging cylinder 32a are engaged in the circumferential direction and the axial direction. According to such a configuration, by rotating the overcap 27 with respect to the main body portion 28, it becomes possible to rotate the engaging cylinder 32a with respect to the main body portion and break the connecting portion 30. By breaking the connecting portion 30, the opening portion 32 is separated from the main body portion 28, and a flow hole is formed inside the discharge cylinder 28f and the inner cylinder 28b. The contents in the inner bag 4 can be discharged through this flow hole.

A knurl 28i is provided on the outer peripheral surface of the outer cylinder 27a, making it easy to grip and rotate the inner plug 26. The top plate 28e is provided on the upper surface of the outer cylinder 28a. An inner cylinder 28b is provided on the lower surface of the top plate 28e. The inner cylinder 28b is a so-called inner ring that has a smaller diameter than the outer cylinder 28a and is arranged inside the outer cylinder 28a. When the inner plug 26 is attached to the mouth portion 5, the inner cylinder 28b is inserted into the inner bag 4, and the outer peripheral surface of the inner cylinder 28b comes into close contact with the inner peripheral surface of the inner bag 4.

A discharge cylinder 28f and a mounting cylinder 28g are provided on the top surface of the top plate 28e. The contents in the inner bag 4 are discharged through the discharge cylinder 28f. As shown in FIG. 56, a male threaded portion 28h is provided on the outer peripheral surface of the mounting cylinder 28g, and a female threaded portion 28h is provided on the inner peripheral surface of the outer cylinder 27a of the overcap 27; as the male threaded portion 28h engages with the female threaded portion 27f, the overcap 27 is screwed onto the inner plug 26. In this case, the overcap 27 can be attached to and removed from the inner plug 26 by rotating the overcap 27 relative to the inner plug 26. When the overcap 27 is attached to the inner plug 26, the intermediate cylinder 27b is inserted into the discharge cylinder 28f, and the outer peripheral surface of the intermediate cylinder 27b is brought into close contact with the inner peripheral surface of the discharge cylinder 28f. The upper side of the discharge cylinder 28f is closed by the overcap 27.

The annular protrusions 28c are annular protrusions provided on the inner peripheral surface of the outer cylinder 28a in such a way to extend in the circumferential direction. When the annular protrusions 28c engage with the engaging protrusions 4c2 in the axial direction, the main body portion 28 engages with the mouth portion 5 of the inner bag 4 in the axial direction. It is preferable that the engaging protrusions 28d are provided at a plurality of locations (eight locations in this embodiment) spaced apart in the circumferential direction. The engaging protrusions 28d are disposed on the annular protrusions 28c so as to protrude radially inward from the annular protrusion 28c. The engaging protrusions 28d are arranged between the adjacent engaging protrusions 4c2, so that the main body portion 28 engages with the mouth portion 5 of the inner bag 4 in the circumferential direction.

### <Rotation directions of the overcap 27 and inner bag 4>

The overcap 27 is preferably screwed onto the inner plug 26 with right-hand threads. Hence, by rotating the overcap 27 with respect to the inner plug 26 in the loosening direction of right-hand threads, the overcap 27 and the inner plug 26 can be unscrewed from each other. Furthermore, the inner bag 4 is configured to move in the direction of coming out of the container body 2 by rotating the inner bag 4 with respect to the outer shell 3 in the loosening direction of right-hand threads. In this way, the overcap 27 can be removed by rotating the overcap 27 in the loosening direction of right-hand threads, and the inner bag 4 can be lifted up by rotating the inner bag 4 in the loosening direction of right-hand threads. Since both operations are performed in the same direction of rotation, they have the advantage of being simple to operate.

### 1-2. Method for manufacturing dual container 1

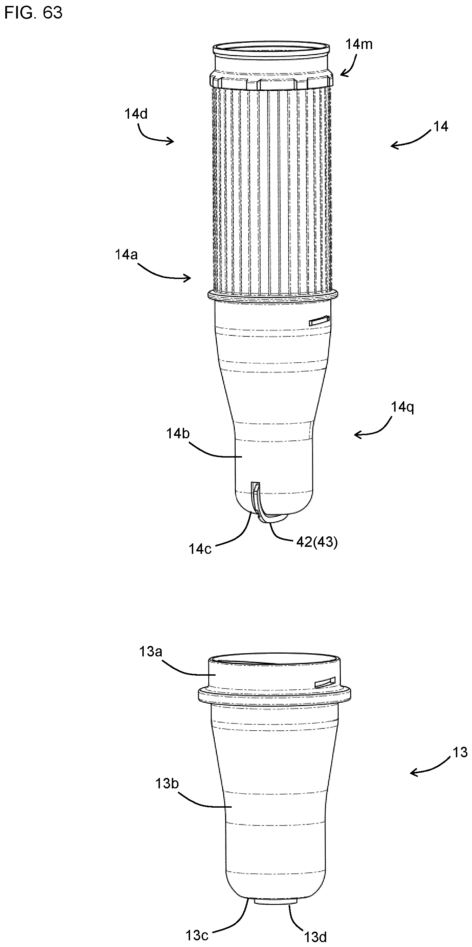

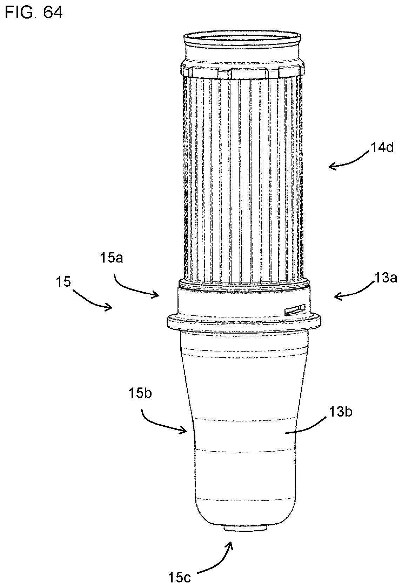

As shown in FIGs. 63 and 64, the container body 2 can be formed by heating the preform 15 and performing biaxial stretch blow molding. Regarding the preform 15, the descriptions of the first embodiment of the first perspective also apply to this embodiment unless doing so contradicts the scope of the descriptions.

### 1-3. Modifications

The present invention can also be implemented in the following forms:
- In the above embodiment, the inner bag 4 is extracted with the mouth portion attachment 8 attached to the mouth 5, but the inner bag 4 may also be extracted after the mouth portion attachment 8 is removed. An example of the removable mouth portion attachment 8 is one with an inner plug 26 having a structure including a removable band portion, as shown in the third embodiment;
- In the above embodiment, the mouth portion attachment 8 is engaged only with the inner bag 4, but the mouth portion attachment 8 may also be engaged only with the outer shell 3 or with both the outer shell 3 and the inner bag 4;
- The mouth portion attachment 8 may be engaged with the mouth 5 of the inner bag 4 only in the circumferential direction;
- The mouth portion attachment 8 may be attached to the mouth 5 by screwing;
- The cam mechanism 31 can be omitted. Even in this case, by twisting the inner bag 4, the diameter of the inner bag 4 is reduced, making it easy to extract; and
- The inner bag 4 may be extracted without twisting.

### 2. Second embodiment

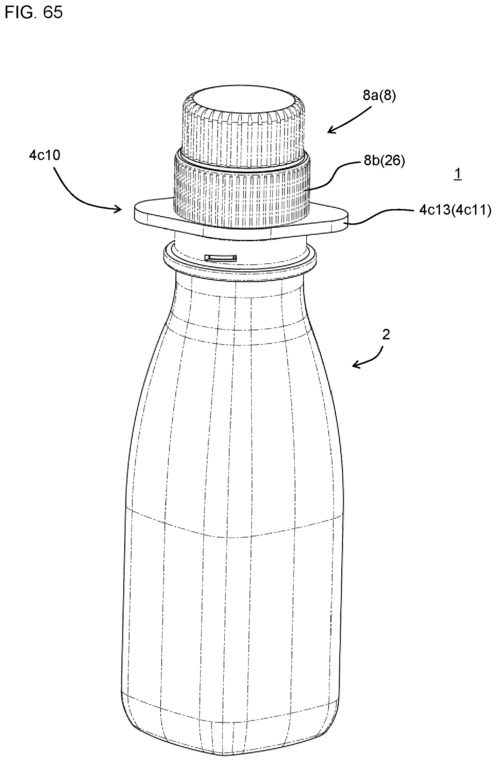

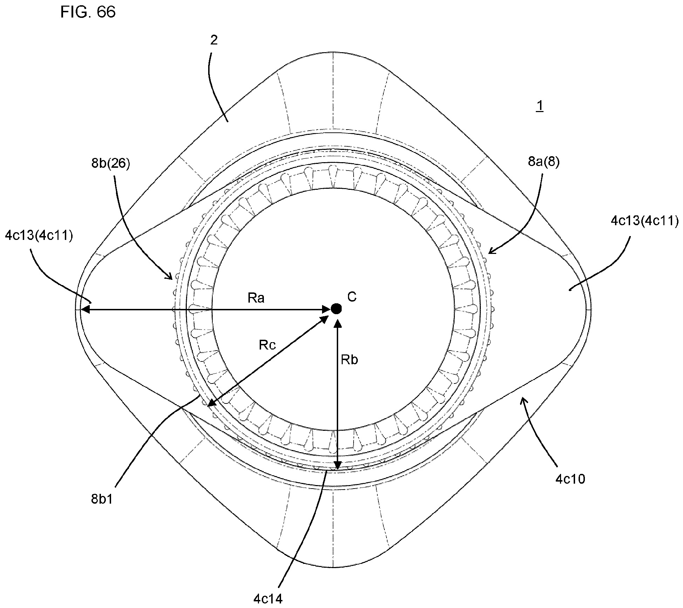

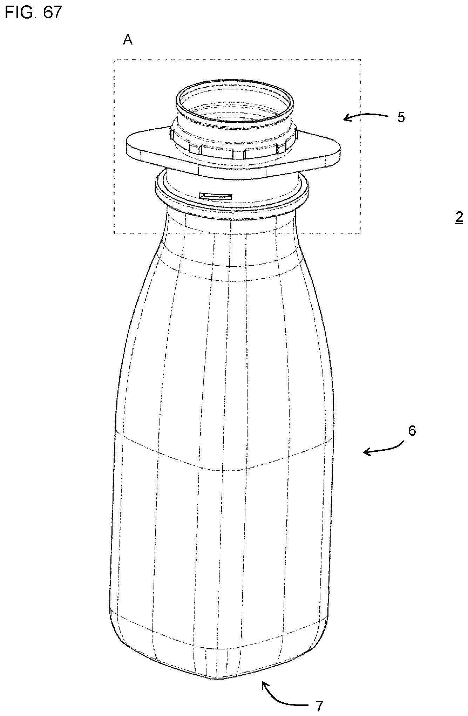

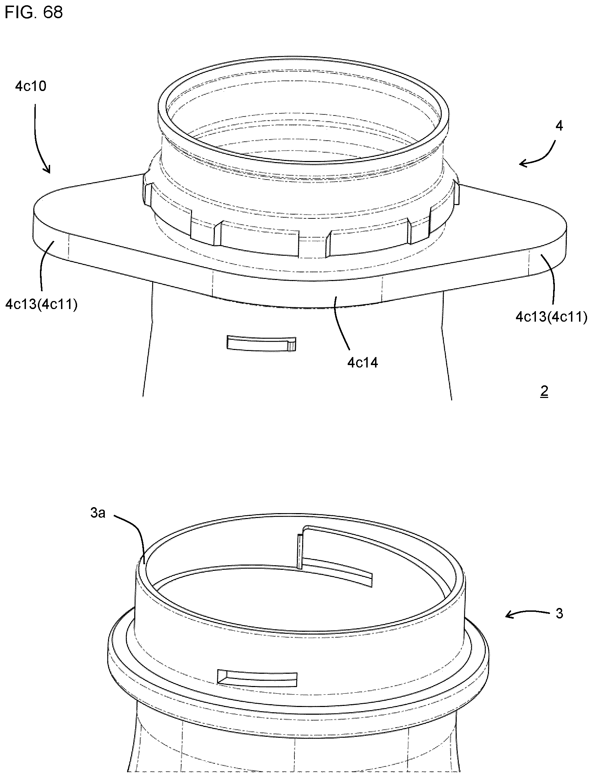

A second embodiment of the present invention is described using FIGs. 65 to 68. This embodiment differs from the first embodiment in terms of the configuration of the gripping portion 4c10 of the inner bag 4, but the other configurations are the same as in the first embodiment.

In this embodiment, as shown in FIGs. 65 to 68, the gripping portion 4c10 has, as an anti-slip shape 4c11, a protrusion 4c13 that protrudes farther in the radial direction than the outer edge 8b1 of the attachment portion 8b (i.e., the inner plug 26 in this embodiment) attached to the mouth portion 5 of the mouth portion attachment 8. Although the number of protrusions 4c13 is two in this embodiment, it may be one or three or more. The number of protrusions 4c13 is, for example, 1 to 20, specifically, for example, 1, 2, 3, 4, 5, 6, 7, 8, 9, 10, 15, 20; the number may also be set to an arbitrary value between any two of these exemplary values. It is preferable that the plurality of protrusions 4c13 are arranged at equal intervals. It is preferable that the protrusions 4c13 are tapered toward their tips. It is preferable that the protrusions 4c13 each have a rounded tip.

By providing the protrusions 4c13 on the gripping portion 4c10, it becomes easy to rotate and/or pull the inner bag 4 by hooking a finger on the protrusions 4c13. This makes it easy to twist and/or extract the inner bag 4 by gripping the gripping portion 4c10.

The inner bag 4 of this embodiment is not provided with the abutting flange 4c4, and the lower surface of the gripping portion 4c10 contacts the open end 3a of the outer shell 3, so that the inner bag 4 is axially positioned with respect to the outer shell 3. In other words, the gripping portion 4c10 also has the function of the abutting flange 4c4 of the first embodiment.

The value of Ra / Rc, wherein Rc is the distance from the central axis C of the mouth portion 5 to the outer edge 8b1, and Ra is the distance from the central axis C of the mouth portion 5 to the outer edge of a protrusion 4c13, is, for example, 1.1 or more, preferably 1.1 to 3, more preferably 1.2 to 1.8, and specifically, for example, 1.1, 1.2, 1.3, 1.4, 1.5, 1.6, 1.7, 1.8, 1.9, 2.0, 2.5, 3.0; the value may also be set to an arbitrary value between any two of these exemplary values.

Moreover, the value of (Ra - Rb) / Rc is, for example, 0.1 or more, preferably 0.1 to 2.0, more preferably 0.2 to 0.8, and specifically, for example, 0.1, 0.2, 0.3, 0.4, 0.5, 0.6, 0.7, 0.8, 0.9, 1.0, 1.1, 1.2, 1.3, 1.4, 1. 5, 2.0; the value may also be set to an arbitrary value between any two of these exemplary values, wherein Rb is the distance from the central axis C to the outer edge of the minimum diameter portion 4c14, which is defined as the portion that is located between adjacent protrusions 4c13 and has the shortest distance from the central axis C.

Further, the value of (Ra - Rc) and the value of (Ra - Rb) are each, for example, 3 mm or more, preferably 5 mm or more, and more preferably 10 mm or more. These values are, for example, 3 to 50 mm, preferably 15 to 40 mm, and specifically, for example, 3, 5, 10, 15, 20, 25, 30, 35, 40, 45, 50 mm, or may also be set to an arbitrary value between any two of these exemplary values.

### 3. Third embodiment

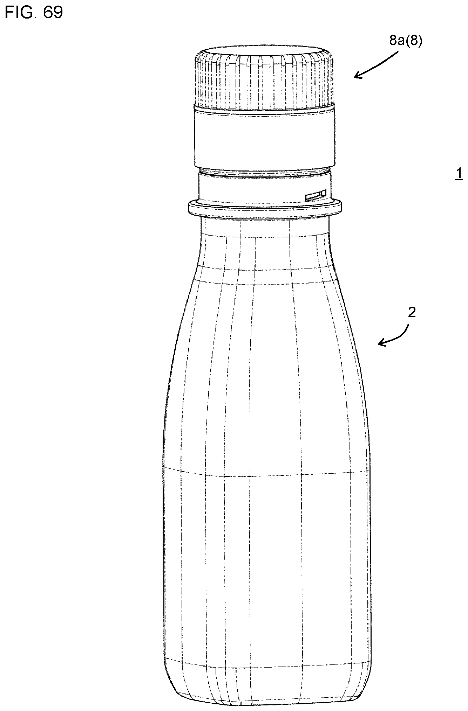

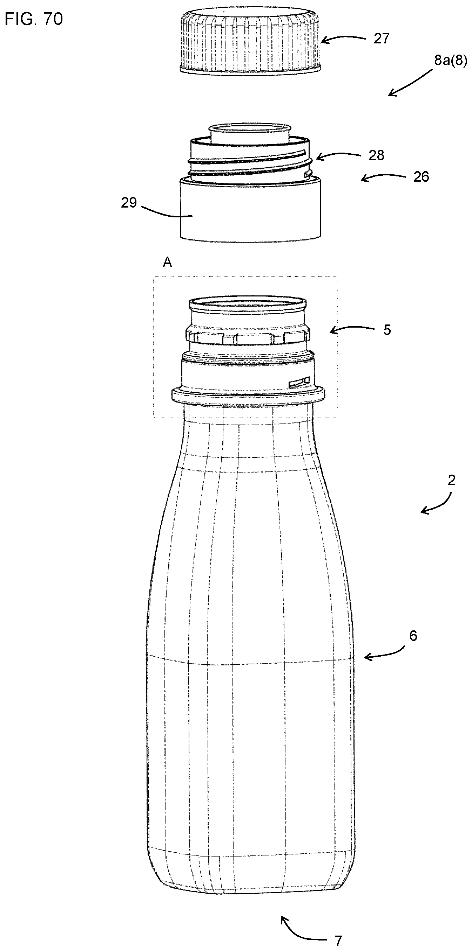

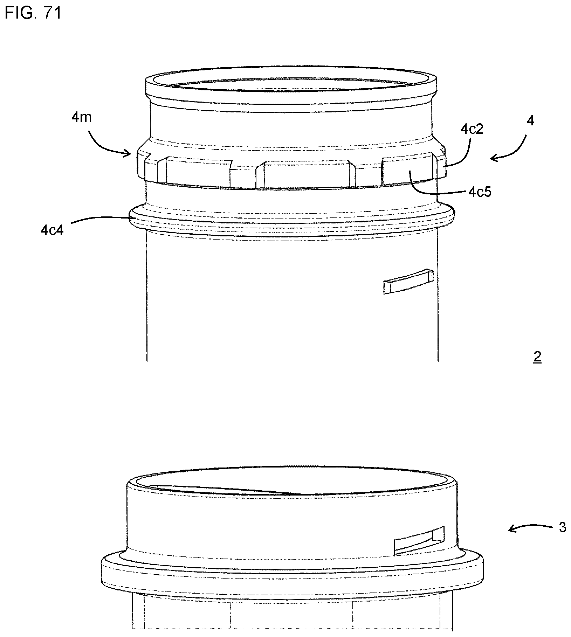

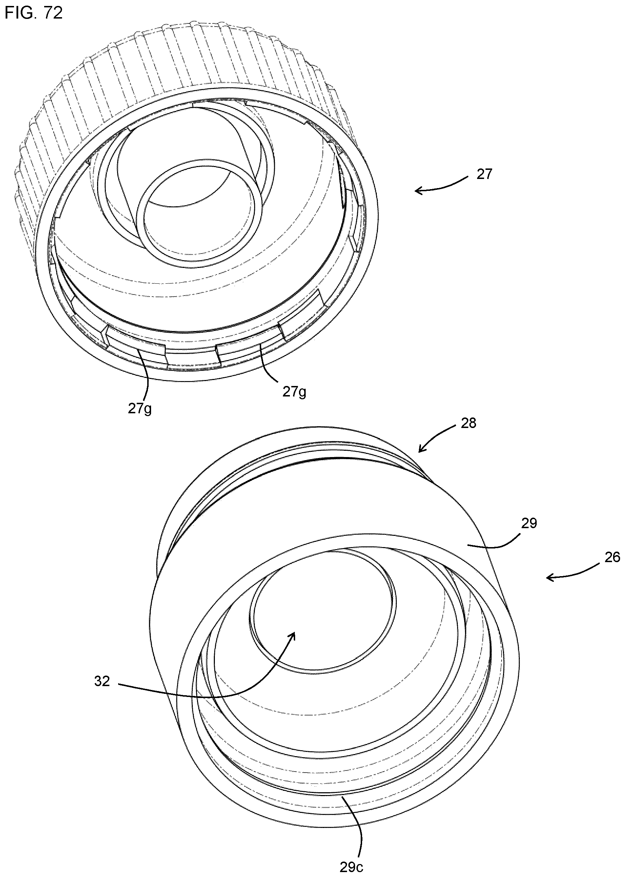

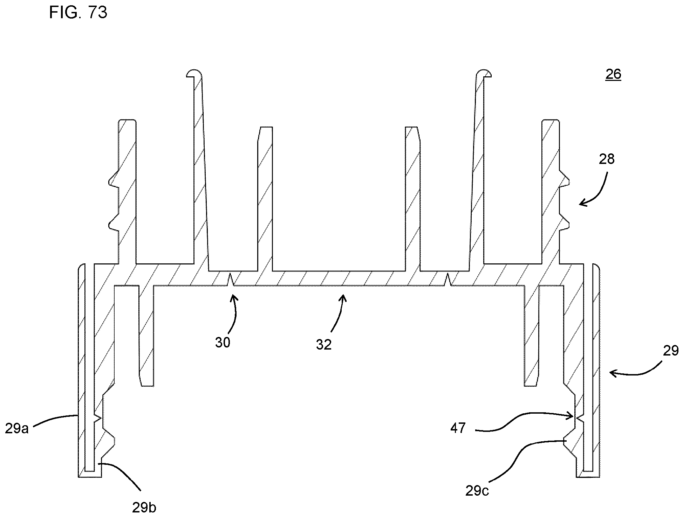

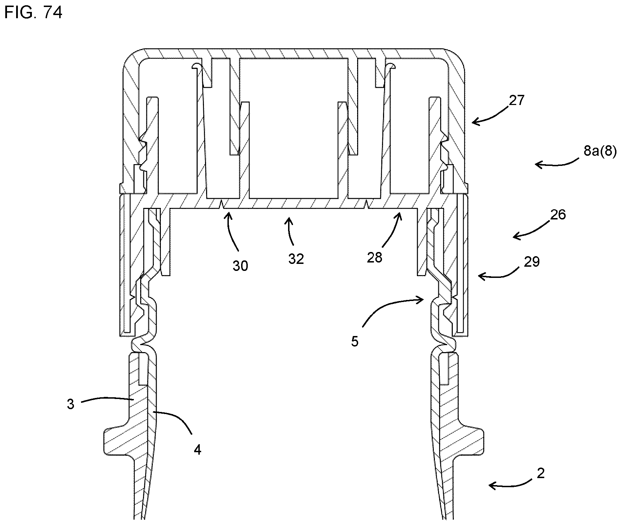

A third embodiment of the present invention is described using FIGs. 69 to 74. This embodiment differs from the first embodiment in terms of the configurations of the mouth portion attachment 8 and the inner bag 4, but the other configurations are similar to those of the first embodiment.

In this embodiment, as shown in FIGs. 69 to 71, the inner bag 4 is not provided with a gripping portion 4c10 having an anti-slip shape 4c11, and the distance between the engaging portion 4m and the abutting flange 4c4 is shorter than that in the first embodiment.

As shown in FIGs. 69 to 70 and 72 to 74, the mouth portion attachment 8 in this embodiment has a cap 8a that includes an inner plug 26 and an overcap 27, which is the same as in the first embodiment, but the structures of the inner plug 26 and the overcap 27 are each different from those of the first embodiment.

In this embodiment, the inner plug 26 includes a main body portion 28, a band portion 29, and an opening portion 32. The main body portion 28 and the band portion 29 are connected to each other via an easy-to-tear connecting portion 47. The main body portion 28 and the opening portion 32 are connected to each other via an easy-to-tear connecting portion 30.

The band portion 29 engages with the mouth portion 5 of the inner bag 4 in the axial direction. Thus, movement of the band portion 29 is restricted in the axial direction with respect to the mouth portion 5 of the inner bag 4. The band portion 29 may or may not be engaged with the mouth portion 5 of the inner bag 4 in the circumferential direction. If the band portion 29 is engaged with the opening portion 5 of the inner bag 4 in the circumferential direction, movement of the band portion 29 is restricted in the circumferential direction with respect to the opening portion 5 of the inner bag 4.

The connecting portion 47 is configured so that it can be torn by applying force (e.g., shearing force, force in the rotating direction, etc.) between the main body portion 28 and the band portion 29. The connecting portion 47 is preferably thinner than the main body portion 28 and the band portion 29.

The band portion 29 includes an outer cylinder 29a and an inner cylinder 29b. The inner cylinder 29b is arranged inside the outer cylinder 29a. The outer cylinder 29a and the inner cylinder 29b are connected at the lower end of the band portion 29, and the inner cylinder 29b is connected to the main body portion 28 via the connecting portion 47. The inner cylinder 29b is arranged so as to surround the annular protrusion 4c5. An annular protrusion 29c extending in the circumferential direction is provided on the inner peripheral surface of the inner cylinder 29b. The annular protrusion 29c engages with the annular protrusions 4c5 in the axial direction, resulting in the band portion 29 engaging with the mouth portion 5 of the inner bag 4 in the axial direction. A tapered surface is provided on the lower side of the annular protrusion 29c, reducing the force required for the annular protrusion 29c to climb over the annular protrusion 4c5.

The outer cylinder 29a of the band portion 29 is provided with a tear initiation portion (not shown). The tear initiation portion is composed of a thin wall portion, a notch, a cut, etc. The band portion 29 can be removed by tearing the connecting portion 47 after tearing at the tear initiation portion is started. Then, by removing the band portion 29, the mouth portion attachment 8 can be removed from the mouth.

The main body portion 28 of this embodiment, in contrast to the main body portion 28 of the first embodiment, does not have an annular protrusion 28c, an engaging protrusion 28d, and a knurl 28i, but other features are similar. The configuration of the cap opening portion 32 of this embodiment is the same as that of the cap opening portion 32 of the first embodiment.

The overcap 27 in this embodiment has engaging protrusions 27g on the inner peripheral surface of the outer cylinder 27a; this is the difference from the first embodiment. It is preferable that the engaging protrusions 27g are provided at a plurality of locations (eight locations in this embodiment) spaced apart in the circumferential direction. The engaging protrusions 27g are engageable with the engaging protrusions 4c2 of the inner bag 4 in the circumferential direction. As described above, in the present embodiment, the engaging protrusions 4c2 and 27g, which enable engagement between the opening 5 of the inner bag 4 and the overcap 27 in the circumferential direction, are provided at each of the mouth portion 5 of the inner bag 4 and the overcap 27.

### <Pulling out the inner bag 4>

In the present embodiment, a method including a step of removing the mouth portion attachment and a step of extracting the inner bag can be used to extract the inner bag 4.

First, in the step of removing the mouth portion attachment, the mouth portion attachment 8 is removed from the mouth portion 5. This step can be carried out, for example, by removing the band portion 29.

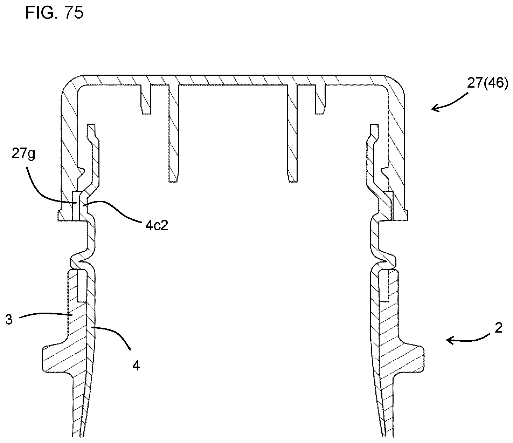

Next, as shown in FIG. 75, in the step of extracting the inner bag, the inner bag is extracted while or after twisting the inner bag 4 by rotating the twisting jig 46, with the opening 5 of the inner bag 4 and the twisting jig 46 engaged in the circumferential direction.

The twisting jig 46 is a jig used to twist the inner bag 4, and is preferably configured to be able to engage with the engaging protrusions 4c2 of the mouth 5 of the inner bag 4. As the twisting jig 46, the overcap 27 can be used. Since the overcap 27 includes engaging protrusions 27g, the inner bag 4 can be twisted by engaging the engaging protrusions 27g of the overcap 27 with the engaging protrusions 4c2 of the inner bag 4 and rotating the overcap 27.

By twisting the inner bag 4, the diameter of the inner bag 4 is reduced, making it easy to extract the inner bag 4. The twisting jig 46 only needs to be engaged with the opening 5 of the inner bag 4 in the circumferential direction, and may or may not be engaged in the axial direction. If engaged in the axial direction, the inner bag 4 is extractable by pulling the twisting jig 46. If not engaged in the axial direction, after twisting the inner bag 4, the twisting jig 46 can be removed from the inner bag 4 and used to twist another inner bag 4, or recycled separately from the inner bag 4.

### (Sixth perspective)

### 1. First embodiment

### 1-1. Configuration of the dual container 1

### <Basic configuration>

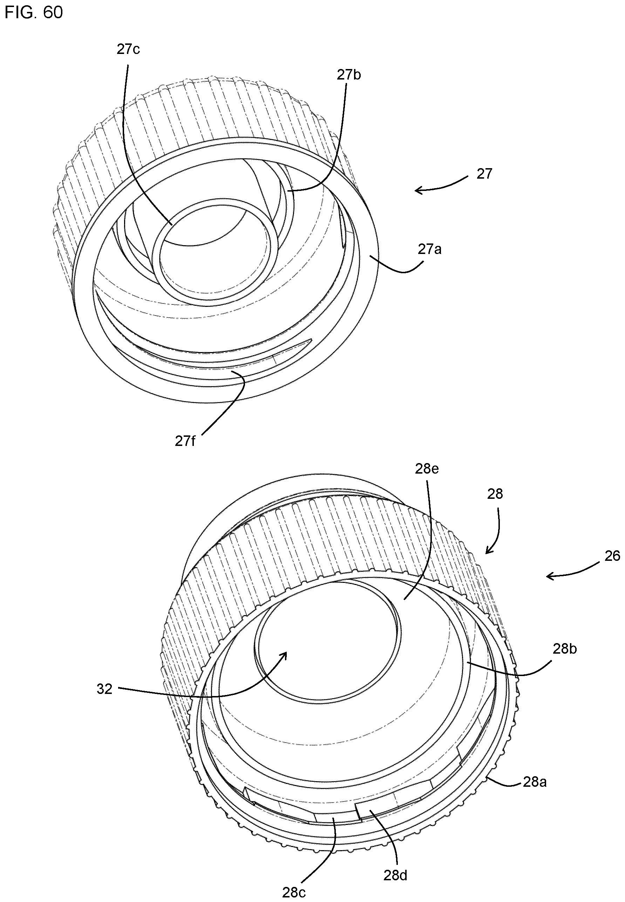

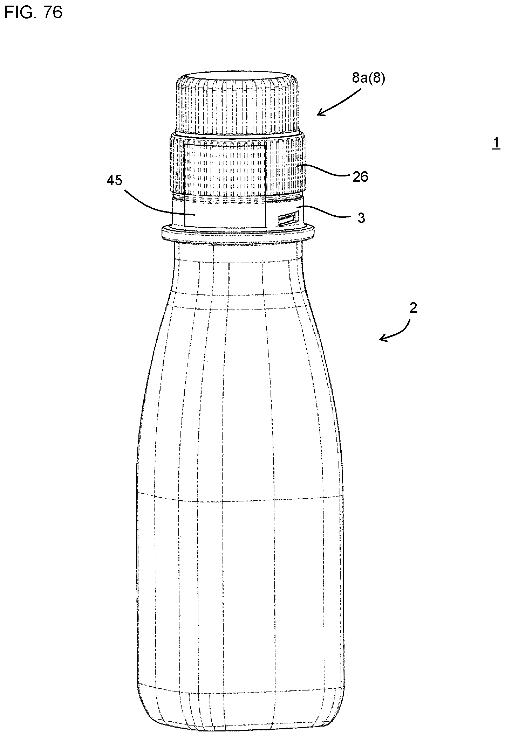

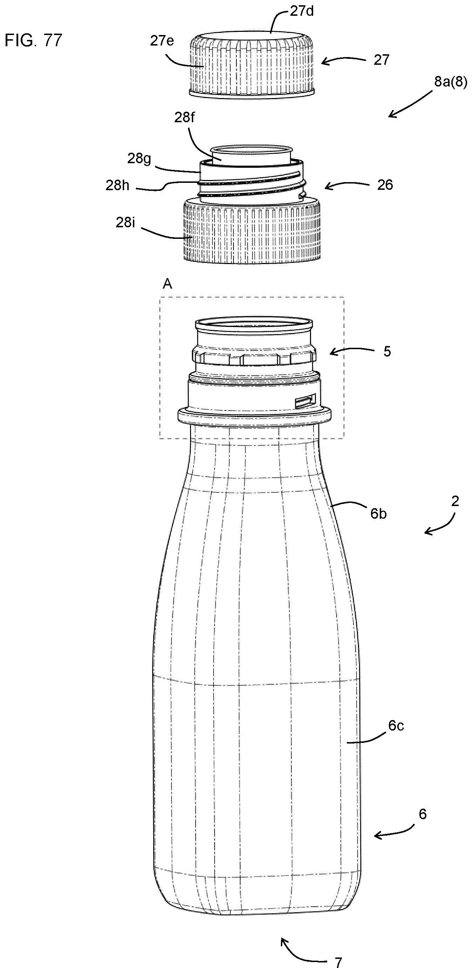

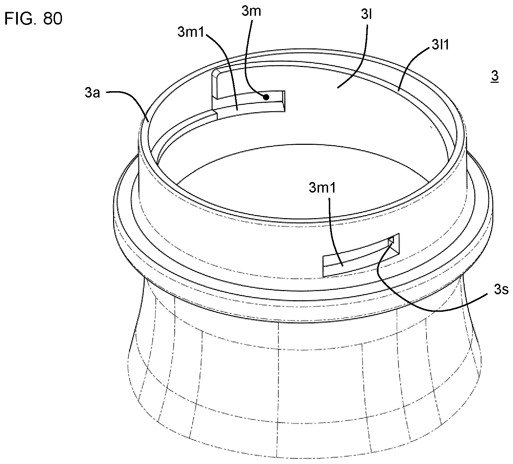

The dual container 1 of this embodiment has the structure shown in FIGs. 76 to 80. Regarding the dual container 1, the descriptions of the first embodiment of the first perspective also apply to this embodiment unless doing so contradicts the scope of the descriptions. The differences are mainly explained below. Also, the mouth portion attachment 8 of this embodiment has the same structure as the first embodiment of the fifth perspective shown in FIGs. 60 to 61.

### <Detailed structures of the outer shell 3 and inner bag 4>

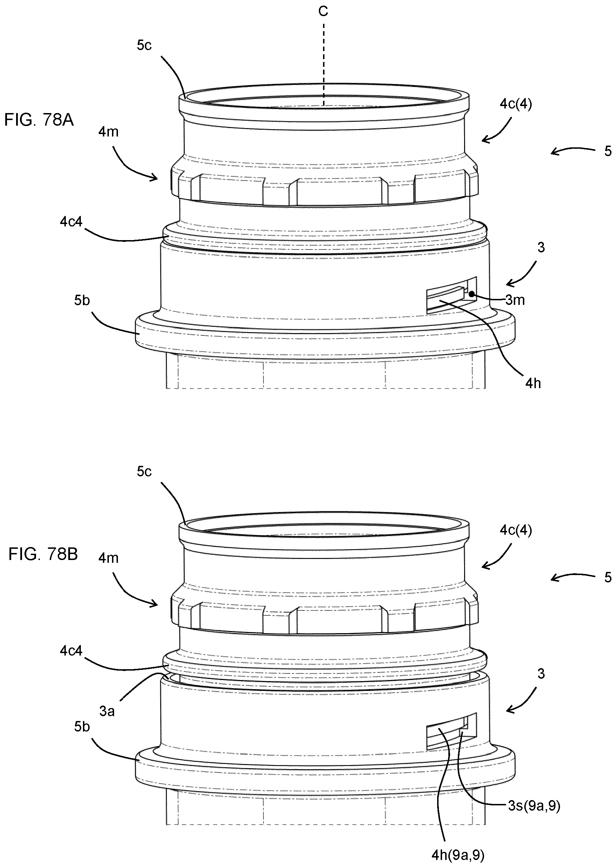

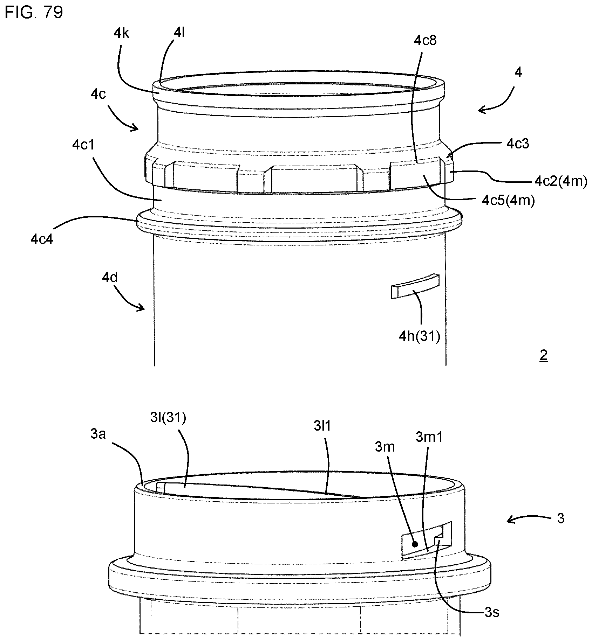

As shown in FIGs. 78 and 79, the inner bag 4 includes a protrusion 4c that protrudes from the open end 3a of the outer shell 3. The protrusion 4c includes a protruding cylinder 4c1, an engaging protrusion 4c2, an annular protrusion 4c5, and an abutting flange 4c4.

The annular protrusion 4c5 engages with the mouth portion attachment 8 in the axial direction. The engaging protrusions 4c2 engage with the mouth portion attachment 8 in the circumferential direction.

It is preferable that the engaging protrusions 4c2 are provided at a plurality of locations (eight locations in this embodiment) spaced apart in the circumferential direction. The engaging protrusions 4c2 are arranged on the annular protrusions 4c5 so as to protrude radially outward from the annular protrusion 4c5. The annular protrusions 4c5 and the engaging protrusions 4c2 are provided with tapered surfaces 4c8 and 4c3 on their upper surfaces. This allows the annular protrusions 28c (shown in FIG. 61A) of the mouth portion attachment 8 to easily climb over the annular protrusions 4c5 and the engaging protrusions 4c2, as described later.

Also, as shown in FIG. 61A, the lower surfaces 4c6 of the engaging protrusions 4c2 are flush with the lower surfaces 4c7 of the annular protrusions 4c5, or are located closer to the opening end of the inner bag 4 than the lower surfaces 4c7 of the annular protrusions 4c5. According to such a configuration, the axial engagement between the annular protrusions 4c5 and the mouth portion attachment 8 is reinforced by the engaging protrusions 4c2, which strengthen the engagement between the mouth portion attachment 8 and the inner bag 4.

The abutting flange 4c4 is an annular portion positioned so as to contact the open end 3a and having a diameter larger than that of the protruding cylinder 4c1. By abutting the abutting flange 4c4 against the open end 3a, the inner bag 4 is prevented from falling into the outer shell 3.

As shown in FIG. 79, engaging protrusions 4h are provided on the outer peripheral surface of the inner bag main body 4d. The lower surfaces of the engaging protrusions 4h are inclined so as to approach the opening end 5c as they proceed counterclockwise, viewed from the opening end 5c side of the mouth portion 5.

As shown in FIGs. 79 to 80, cam rails 31 and engaging recesses 3m are provided on the inner peripheral surface of the outer shell 3. Steps 3s are provided between the lower surfaces 3m1 of the engaging recesses 3m and the upper surfaces 311 of the cam rails 31. The upper surfaces 311 of the cam rails 31 are inclined so as to approach the opening end 3a as they proceed counterclockwise, viewed from the opening end 3a side.

As shown in FIG. 78A, in the normal state before starting the step of extracting the inner bag 4 (i.e., the state in which the abutting flange 4c4 is in contact with the open end 3a), the engaging protrusions 4h are arranged at low positions within the engaging recesses 3m. In this state, the steps 3s are located on the downstream paths, in the counterclockwise direction, of the engaging protrusions 4h. Thus, trying to rotate the inner bag 4 counterclockwise results in the engaging protrusions 4h coming into contact with the steps 3s, preventing the inner bag 4 from rotating. That is, the rotation of the mouth portion 5 of the inner bag 4 with respect to the outer shell 3 is restricted by the locking mechanism 9 constituted by the engaging protrusions 4h and the steps 3s. In this embodiment, the locking mechanism 9 is an inner bag locking mechanism 9a that restricts rotation of the opening 5 of the inner bag 4 by engaging the outer shell 3 and the inner bag 4 in the circumferential direction. As described above, in the normal state, the locking mechanism 9 restricts the rotation of the mouth portion 5 of the inner bag 4 with respect to the outer shell 3, thereby preventing the inner bag 4 from being twisted unexpectedly.

In the state shown in FIG. 78A, there are gaps between the upper surfaces of the engaging protrusions 4h and the upper surfaces of the engaging recesses 3m, and the engaging protrusions 4h are movable upward within the engaging recesses 3m. If the inner bag 4 is pulled from the state shown in FIG. 78A, the abutting flange 4c4 separates from the open end 3a, and the engaging protrusions 4h move upward within the engaging recesses 3m, as shown in FIG. 78B. In this state, the engaging protrusions 4h are disposed at higher positions than the steps 3s (i.e., the lower surfaces of the engaging protrusions 4h are disposed at higher positions than the upper surfaces 311 of the cam rails 31), the steps 3s are not located on the downstream paths, in the counterclockwise direction, of the engaging protrusions 4h. As a result, in the state shown in FIG. 78B, the opening 5 of the inner bag 4 can be rotated with respect to the outer shell 3 without being restricted by the lock mechanism 9. In this way, by displacing the inner bag 4 in the axial direction with respect to the outer shell 3, the lock by the inner bag locking mechanism 9a (lock mechanism 9) is released, and the inner bag 4 becomes rotatable.

When the opening 5 of the inner bag 4 is rotated counterclockwise, the lower surfaces of the engaging protrusions 4h move along the upper surfaces 311 of the cam rails 31. A cam mechanism 31 is constituted by the engaging protrusions 4h and the cam rails 31. As the inner bag 4 rotates, the inner bag 4 moves in the direction of coming out of the container body 2 due to the action of the cam mechanism 31. When this occurs, the inner bag 4 is twisted to reduce its diameter. In this embodiment, the engaging recesses 3m are through holes, but may be non-through holes.

An enlarged diameter structure 4k is provided at the open end 4l of the inner bag 4. The enlarged diameter structure 4k increases the rigidity of the opening 5 of the inner bag 4 and prevents the deformation of the opening 5 of the inner bag 4. In this embodiment, since the inner bag 4 is extracted using the engaging portion 4m (more specifically, the annular protrusions 4c5 and the engaging protrusions 4c2) provided on the inner bag 4, a high load could be applied to the inner bag 4. In that case, it may become difficult to extract the inner bag 4 if the open end 4l of the inner bag 4 is easily deformed, but in this embodiment, the deformation of the open end 4l of the inner bag 4 is prevented, and hence the inner bag 4 is smoothly extractable.

### <Pulling out the inner bag 4 by a simple operation>

The mouth portion attachment 8 is configured to be attachable to the mouth 5 of the container body 2 by pushing-in; by pressing the mouth portion attachment 8 in the direction of the bottom portion 7 while the mouth portion attachment 8 is placed over the mouth portion 5, the mouth portion attachment 8 can be engaged with and attached to the mouth portion 5. Since the push-in type mouth portion attachment 8 can be attached simply by pressing, it has the advantage that the process of attaching the mouth portion attachment 8 can be simplified on the line for filling the contents.

A push-in type mouth portion attachment generally includes a sorting band that is separable from the inner plug, and the mouth portion attachment is configured to be attached to the container body by engaging the engaging portion of the sorting band with the engaging portion of the outer shell. When removing the mouth portion attachment from the mouth portion, the engaging force between the mouth portion attachment and the outer shell is weakened (usually, disengaged) by first tearing off the connection between the inner plug and the separation band and removing the separation band. After that, an operation is performed to remove the mouth portion attachment from the mouth portion. However, it is cumbersome to perform an operation to weaken the engagement force between the mouth portion attachment and the outer shell before removing the mouth portion attachment from the mouth portion. The operation of weakening the engagement force may be an operation of weakening the engagement force between the separation band and the outer shell, for example, by making a notch in the separation band without removing the separation band.

In this embodiment, in order to solve the above problem, the inner bag 4 is configured to move in the direction of coming out of the container body 2 (i.e., to lift the inner bag 4) by rotating the mouth portion attachment 8 with respect to the outer shell 3, and it is possible to rotate the mouth portion attachment 8 relative to the outer shell 3 without performing an operation to weaken the engagement force between the mouth portion attachment 8 and the outer shell 3 before rotating the mouth portion attachment 8 relative to the container body 2. In other words, the mouth portion attachment 8 can be rotated while the mouth portion attachment 8 and the outer shell 3 are engaged with each other when the mouth portion attachment 8 is attached to the mouth portion 5 of the container body 2.

More specifically, the mouth portion attachment 8 is engaged, by pushing-in, with the mouth 5 of the inner bag 4 in the circumferential direction and the axial direction, and as the mouth portion attachment 8 rotates, the inner bag 4 is configured to rotate relative to the outer shell 3. By the action of the cam mechanism 31 provided between the inner bag 4 and the outer shell 3, the inner bag 4 is configured to move in the direction of coming out of the container body 2 as the inner bag 4 rotates.

According to such a configuration, the inner bag 4 can be moved in the direction of coming out of the container body 2 simply by rotating the mouth portion attachment 8 without performing troublesome operations such as removing the sorting band in advance. After that, the inner bag 4 is extractable from the container body 2 by pulling the mouth portion attachment 8. In other words, since the inner bag 4 is extractable simply by turning and pulling the mouth portion attachment 8, the operation required to extract the inner bag 4 becomes very simple. The rotation of the mouth portion attachment 8 at this time is preferably rotation in the loosening direction of right-hand threads (i.e., in the counterclockwise direction when viewed from the top of the dual container 1). In this case, there is an advantage that it is intuitively understandable that the inner bag 4 moves in the direction of coming out of the container body 2.

Also, since the trunk portion 6 of the container body 2 has a larger outer diameter than the mouth 5, it is not easy to extract the inner bag 4 through the mouth 5 of the outer shell 3 by simply pulling the inner bag 4. However, by rotating the opening 5 of the inner bag 4 and twisting the inner bag 4 to reduce the diameter of the trunk portion 6 of the inner bag 4, it becomes easy for the trunk portion 6 of the inner bag 4 to pass through the opening 5 of the outer shell 3, and the inner bag 4 is easily extractable from the container body 2.

### <Rotation directions and torque of the overcap 27 and inner plug 26>

The overcap 27 is preferably screwed onto the inner plug 26 with right-hand threads. Thus, by rotating the overcap 27 with respect to the inner plug 26 in the loosening direction of right-hand threads, the overcap 27 and the inner plug 26 can be unscrewed from each other. In addition, by rotating the inner plug 26 with respect to the outer shell 3 in the loosening direction of right-hand threads, the inner bag 4 is configured to move in the direction of coming out of the container body 2. In this way, the overcap 27 can be removed by rotating the overcap 27 in the loosening direction of right-hand threads, and by rotating the inner plug 26 in the loosening direction of right-hand threads, the inner bag 4 can be lifted up. Since both operations are performed in the same direction of rotation, they have the advantage of being simple to operate.

On the other hand, in the case of the above configuration, when the container body 2 and the overcap 27 are gripped and the overcap 27 is rotated in the loosening direction of right-hand threads, the overcap 27 does not rotate relative to the inner plug 26; instead, the overcap 27 and the inner plug 26 rotate together relative to the container body 2, and as a result, there is a concern that the inner bag 4 may float up.

In order to prevent the occurrence of such problems, in this embodiment, the rotation of the mouth portion 5 of the inner bag 4 with respect to the outer shell 3 is restricted by the lock mechanism 9.

Provided that T1 is the overcap rotational torque required to rotate the overcap 27 for the first time with respect to the inner plug 26 in the loosening direction of right-hand threads, then the value of T1 is, for example, 40 to 120 N·cm, preferably 60 to 100 N·cm. Specifically, the value of T1 is, for example, 40, 50, 60, 70, 80, 90, 100, 110, 120 N cm, or may also be set to an arbitrary value between any two of these exemplary values, or equal to or below any of these exemplary values, or equal to or above any of these exemplary values.

In the present embodiment, the overcap rotation torque T1 is the torque necessary to break the connecting portion 30 and separate the opening portion 32 from the main body portion 28. In another embodiment, instead of providing the opening portion 32 on the inner plug 26, the overcap 27 is provided with an opening ring via an easy-to-tear connecting portion, and the opening ring engages the inner plug 26 in the circumferential direction. In such a configuration, the torque required to break the thin wall portion and separate the opening ring from the overcap 27 is the overcap rotation torque T1. Also, in another embodiment, a rotation restriction structure is provided that restricts rotation of the overcap 27 with respect to the inner plug 26; when the rotation restriction by the rotation restriction structure is released at a predetermined torque (e.g., when rotation is restricted as the protrusion of the overcap 27 and the protrusion of the inner plug 26 come into contact with each other, and the restriction on rotation is released as the protrusion of the overcap 27 climbs over the protrusion of the inner plug 26), the torque required to release the restriction is the overcap rotation torque T1.

Furthermore, provided that T3 is the overturn torque required to rotate the inner plug 26 for the first time in the loosening direction of right-hand threads with respect to the inner bag 4, then T3 is, for example, 200 N·cm or more, and preferably 200 to 1000 N·cm. Specifically, for example, T3 is 200, 250, 300, 350, 400, 500, 1000 N·cm, or may also be set to an arbitrary value between any two of these exemplary values, or equal to or above any of these exemplary values. In this embodiment, the overturn torque T3 is the torque necessary for the engaging protrusions 28d to climb over the engaging protrusions 4c2.

### <Prevention of erroneous operations using the rotation prevention seal 45>

The rotation of the opening 5 of the inner bag 4 with respect to the outer shell 3 can be restricted by the above-mentioned locking mechanism 9. However, instead of the locking mechanism 9, or together with the locking mechanism 9, the regulation can also be done with a rotation prevention seal 45.

In this embodiment, as shown in FIG. 76, the rotation prevention seal 45 is attached across the outer shell 3 and the mouth portion attachment 8. The rotation prevention seal 45 restricts rotation of the mouth portion attachment 8 with respect to the outer shell 3. Since the mouth portion attachment 8 engages with the inner bag 4 in the circumferential direction, eventually, the rotation of the inner bag 4 with respect to the outer shell 3 is restricted by the rotation prevention seal 45. The restriction by the rotation prevention seal 45 can be released by removing the rotation prevention seal 45 or breaking the rotation prevention seal 45.

If the mouth portion attachment 8 includes the inner plug 26 and the overcap 27, the rotation prevention seal 45 can be attached across the outer shell 3 and the inner plug 26. This makes it possible to restrict the rotation of the inner plug 26 with respect to the outer shell 3, thereby preventing the inner plug 26 from being accidentally gripped and rotated when the overcap 27 is intended to be gripped and rotated.

### 1-2. Method for manufacturing dual container 1

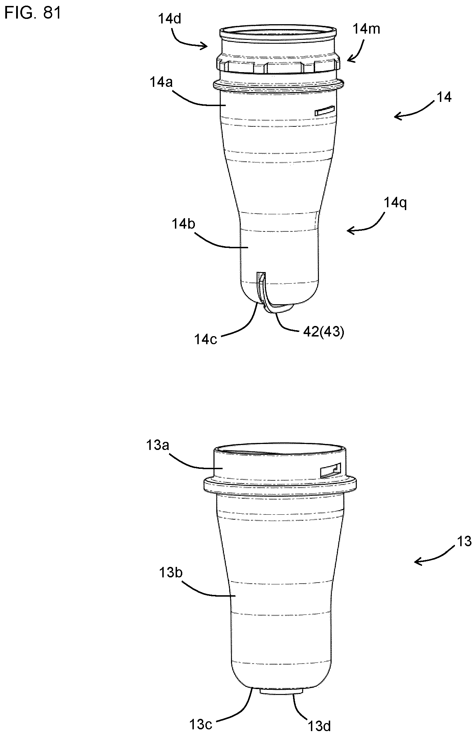

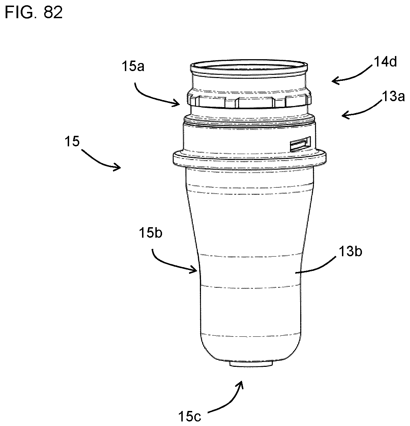

As shown in FIGs. 81 and 82, the container body 2 can be formed by heating the preform 15 and performing biaxial stretch blow molding. With respect to the preform 15, the descriptions of the first embodiment of the first perspective also apply to this embodiment unless doing so contradicts the scope of the descriptions.

### 2. Other embodiments

The present invention can also be implemented in the following forms:
- By engaging the mouth portion attachment 8 with the mouth portion 5 of the inner bag 4 in the circumferential direction, and by engaging the outer shell 3 and the mouth portion attachment 8 in the circumferential direction, a locking mechanism 9 may be configured to restrict rotation of the mouth portion 5 of the inner bag 4 with respect to the outer shell 3. In this case, the lock by the locking mechanism 9 can be released by, for example, displacing the mouth portion attachment 8 in the axial direction with respect to the outer shell 3;
- The axial displacement for releasing the lock by the locking mechanism 9 may be displacement in either the upward or downward direction;
- The lock by the locking mechanism 9 may be released by a method other than the axial movement of the inner bag 4 or the mouth portion attachment 8. For example, this may be done by displacing the inner bag 4 or the mouth portion attachment 8 in the radial direction;

- The mouth portion attachment 8 may be engaged with the mouth 5 of the inner bag 4 only in the circumferential direction;
- The mouth portion attachment 8 may be attached to the mouth 5 by screwing;
- It is not essential to use the mouth portion attachment 8; the inner bag 4 may be held directly, or a jig other than the mouth portion attachment 8 may be used to rotate or extract the inner bag 4;
- The rotation prevention seal may be attached across the inner bag 4 and outer shell 3; and
- The cam mechanism 31 can be omitted. Even in this case, by twisting the inner bag 4, the diameter of the inner bag 4 is reduced, making it easy to extract.

### (Seventh perspective)

In the embodiments shown below, the 7A to 7C perspectives of the invention are disclosed. The first embodiment relates to the 7A and 7C perspectives. The second and third embodiments relate to the 7B and 7C perspectives. The descriptions of the first to third embodiments are mutually applicable unless doing so contradicts the scope of the descriptions.

### 1. First embodiment

### 1-1. Configuration of the dual container 1

### <Basic configuration>

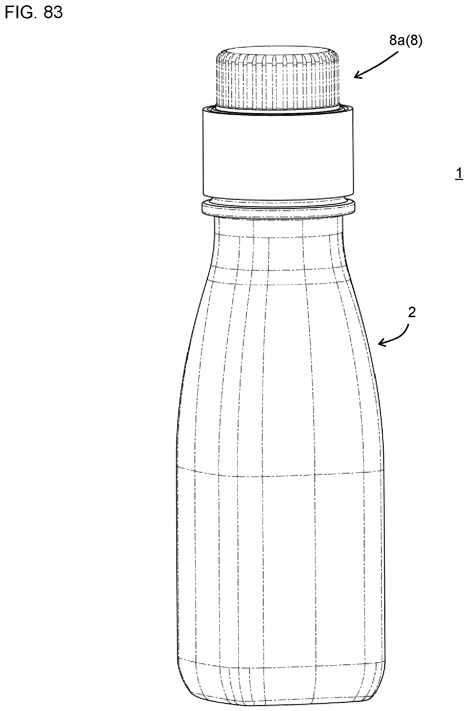

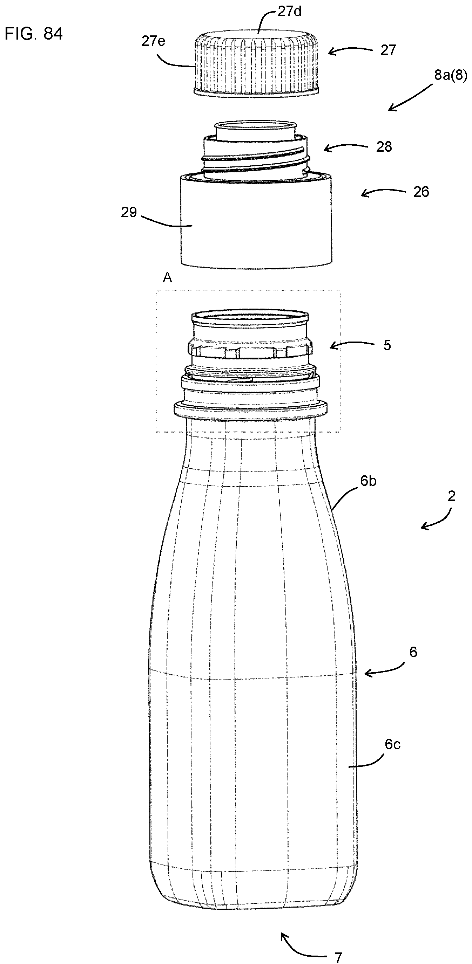

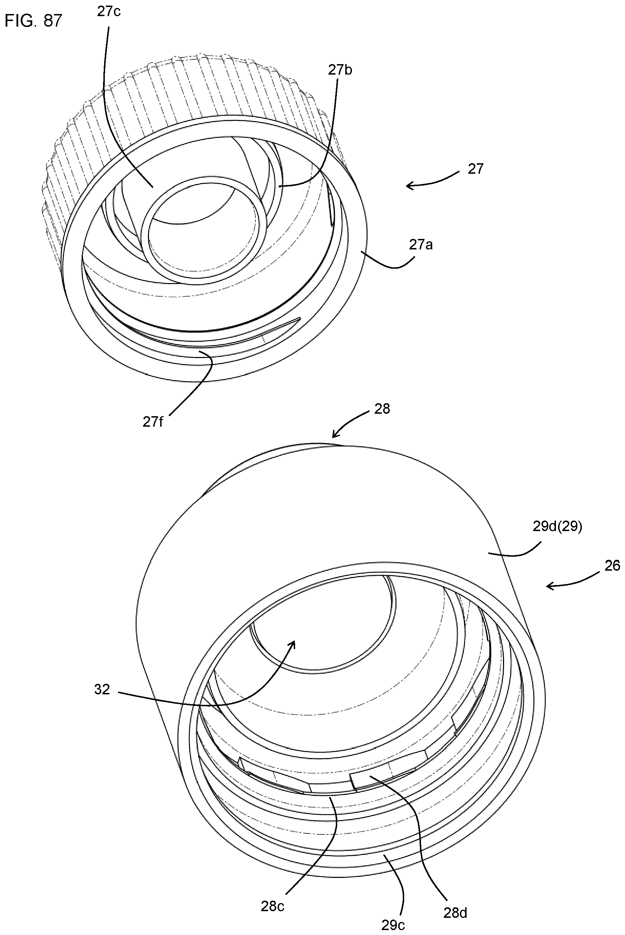

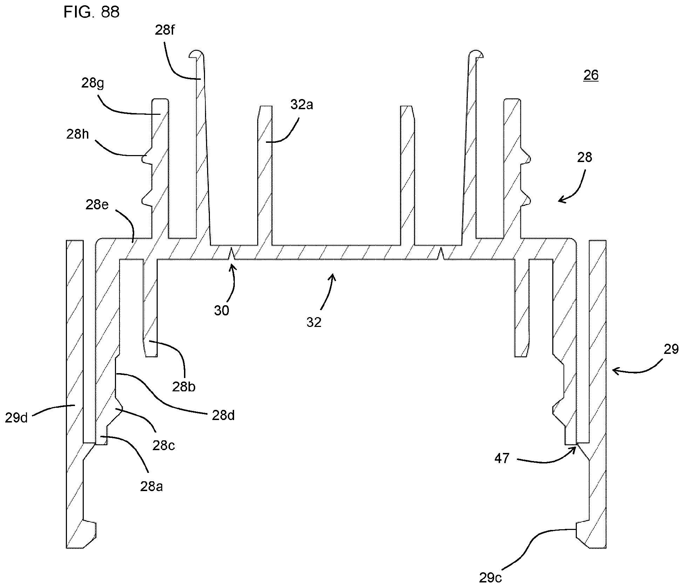

The dual container 1 of this embodiment has the structure shown in FIGs. 83 to 89. Regarding the dual container 1, the descriptions of the first embodiment of the first perspective also apply to this embodiment unless doing so contradicts the scope of the descriptions. The differences are mainly explained below.

In this embodiment, the mouth portion 5 includes an engaging portion 4m and an annular protrusion 3o to which a mouth portion attachment 8 such as a cap or a pump can be attached.

### <Detailed structures of the outer shell 3 and inner bag 4>

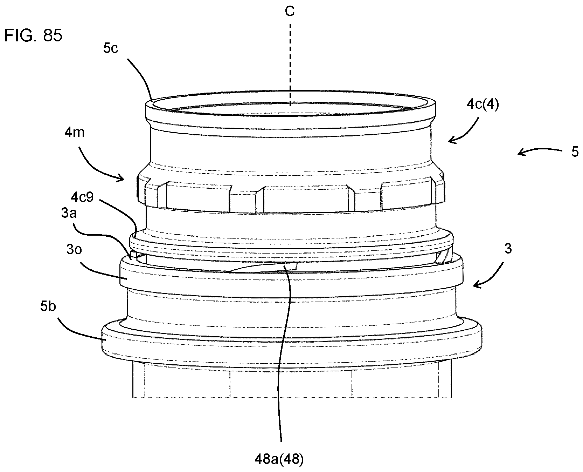

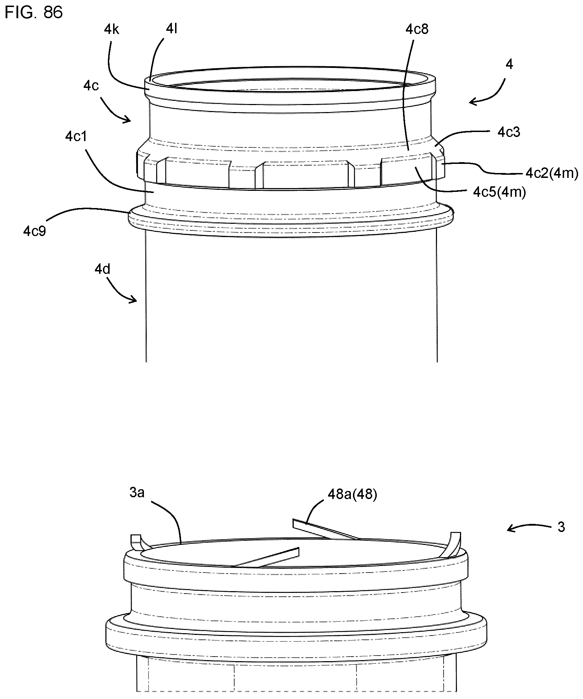

As shown in FIGs. 85 and 86, the inner bag 4 includes a protrusion 4c that protrudes from the open end 3a of the outer shell 3. The protrusion 4c includes a protruding cylinder 4c1, an engaging protrusion 4c2, an annular protrusion 4c5, and an enlarged diameter portion 4c9.

The annular protrusions 4c5 engage with the mouth portion attachment 8 in the axial direction. The engaging protrusions 4c2 engage with the mouth portion attachment 8 in the circumferential direction.

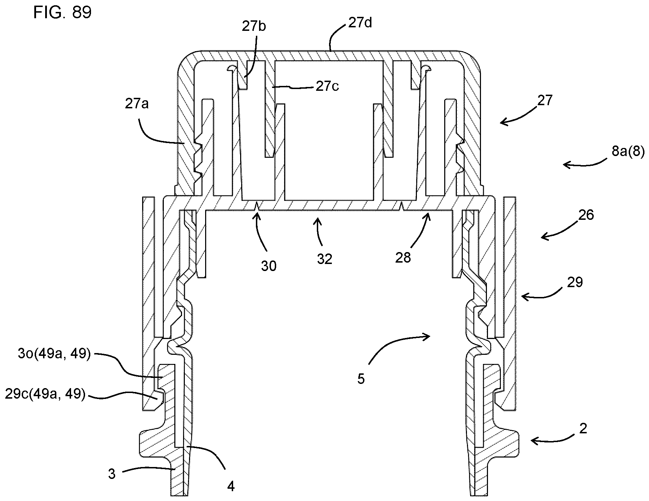

It is preferable that the engaging protrusions 4c2 are provided at a plurality of locations (eight locations in this embodiment) spaced apart in the circumferential direction. The engaging protrusions 4c2 are arranged on the annular protrusions 4c5 so as to protrude radially outward from the annular protrusions 4c5. The annular protrusions 4c5 and the engaging protrusions 4c2 are provided with tapered surfaces 4c8, 4c3 on their upper surfaces. This allows the annular protrusions 28c (shown in FIG. 89A) of the mouth portion attachment 8 to easily climb over the annular protrusions 4c5 and the engaging protrusions 4c2, as described later.

The enlarged diameter portion 4c9 is a portion whose diameter is larger than that of the protruding cylinder 4c1, and is, for example, annular. The enlarged diameter portion 4c9 is arranged at a position facing the open end 3a. Biasing portions 48 are provided between the open end 3a and the enlarged diameter portion 4c9 to apply a biasing force to the inner bag 4 in the direction of coming out of the container body 2. In this embodiment, the biasing portions 48 are spring portions 48a provided at the open end 3a. The spring portions 48a elastically apply a biasing force to the inner bag 4 in the direction of coming out of the container body 2.

The spring portions 48a have a shape shown in FIG. 86 in their natural state in which no external forces are applied. On the other hand, when the mouth portion attachment 8 is attached to the mouth 5, the spring portions 48a are in a state where they are pressed toward the opening end 3a and compressed, as shown in FIG 85, and their restoring forces apply a biasing force to the inner bag 4. On the other hand, as shown in FIG. 89, the movement of the inner bag 4 due to this biasing force is restricted by the restricting portion 49, and hence the inner bag 4 does not move at this point. In this embodiment, the restricting portion 49 has an engaging portion 49a engaging the mouth portion attachment 8 and the outer shell 3. The mouth portion 5 of the outer shell 3 is provided with an annular protrusion 3o, and as shown in FIG. 89, the annular protrusion 29c of the mouth portion attachment 8 and the annular protrusion 3o of the outer shell 3 constitute the engaging portion 49a. In other words, the axial movement of the annular protrusion 29c is restricted by the annular protrusion 3o, thereby restricting the axial movement of the inner bag 4.

When the restriction by the restriction portion 49 is released, the inner bag 4 becomes movable in the axial direction, and the inner bag 4 moves in the direction of coming out of the container body 2 due to the biasing force by the biasing portions 48. This movement causes the inner bag 4 to float away from the outer shell 3, making it easy to extract the inner bag 4. By releasing the engagement between the mouth portion attachment 8 and the outer shell 3, the restriction by the restriction portion 49 can be released. The engagement between the mouth portion attachment 8 and the outer shell 3 can be achieved by removing the band portion 29 from the mouth portion attachment 8, as described below.

An enlarged diameter structure 4k is provided at the open end 4l of the inner bag 4. The enlarged diameter structure 4k increases the rigidity of the opening 5 of the inner bag 4 and prevents the deformation of the opening 5 of the inner bag 4.

### <Detailed structure of the mouth portion attachment 8>

The mouth portion attachment 8 of this embodiment has the structure shown in FIGs. 83, 84, and 87 to 89. With respect to the mouth portion attachment 8, the descriptions of the first embodiment of the first perspectiv also apply to this embodiment unless doing so contradicts the scope of the descriptions. The differences are mainly explained below.

The band portion 29 engages with the mouth portion 5 of the outer shell 3 in the axial direction. Hence, movement of the band portion 29 in the axial direction with respect to the mouth portion 5 of the outer shell 3 is restricted. The band portion 29 may or may not engage the mouth portion 5 of the outer shell 3 in the circumferential direction.

The main body portion 28 engages with the mouth portion 5 of the inner bag 4 in the axial direction. Thus, movement of the main body portion 28 in the axial direction with respect to the mouth portion 5 of the inner bag 4 is restricted. The main body portion 28 may or may not be engaged with the mouth portion 5 of the inner bag 4 in the circumferential direction. If the main body 28 is engaged with the opening 5 of the inner bag 4 in the circumferential direction, the movement of the main body 28 in the circumferential direction with respect to the opening 5 of the inner bag 4 is restricted.

The band portion 29 includes a cylindrical portion 29d. The cylindrical portion 29d is connected to the main body portion 28 via the connecting portion 47. An annular protrusion 29c extending in the circumferential direction is provided on the inner peripheral surface of the cylindrical portion 29d. By axially engaging the annular protrusion 29c with the annular protrusion 3o, the band portion 29 engages with the mouth portion 5 of the outer shell 3 in the axial direction, thereby forming an engaging portion 49a. The axial movement of the mouth portion attachment 8 is restricted by the engaging portion 49a. Moreover, since the inner bag 4 is engaged with the mouth portion attachment 8 in the axial direction, when the axial movement of the mouth portion attachment 8 is restricted, the axial movement of the inner bag 4 is also restricted. A tapered surface is provided on the lower side of the annular protrusion 29c, reducing the force required for the annular protrusion 29c to climb over the annular protrusion 3o.

The cylindrical portion 29d of the band portion 29 is provided with a tear initiation portion (not shown). The tear initiation portion is composed of a thin wall portion, a notch, a cut, etc. The band portion 29 can be removed by tearing the connecting portion 47 after starting tearing at the tear initiation portion. Then, by removing the band portion 29, the mouth portion attachment 8 can be removed from the mouth portion.

The main body portion 28 includes an outer cylinder 28a, an inner cylinder 28b, an annular protrusion 28c, an engaging protrusion 28d, a top plate 28e, a discharge cylinder 28f, and a mounting cylinder 28g.

The annular protrusions 28c are annular protrusions provided on the inner peripheral surface of the outer cylinder 28a so as to extend in the circumferential direction. When the annular protrusions 28c engage with the engaging protrusions 4c2 in the axial direction, the main body portion 28 engages with the mouth portion 5 of the inner bag 4 in the axial direction. It is preferable that the engaging protrusions 28d are provided at a plurality of locations (eight locations in this embodiment) spaced apart in the circumferential direction. The engaging protrusions 28d are disposed on the annular protrusions 28c so as to protrude radially inward from the annular protrusions 28c. The engaging protrusions 28d are arranged between the adjacent engaging protrusions 4c2, and hence the main body portion 28 engages with the mouth portion 5 of the inner bag 4 in the circumferential direction.

### <Method for extracting the inner bag 4>

In the state before starting to extract the inner bag 4, the main body portion 28 of the mouth portion attachment 8 and the band portion 29 are connected, and the band portion 29 engages with the mouth portion 5 of the outer shell 3 in the axial direction. Thus, in this state, the inner bag 4 is not extractable from the container body 2. Thus, first, the connecting portion 47 is torn off and the band portion 29 is removed. As a result, the engagement between the mouth portion attachment 8 and the mouth 5 of the outer shell 3 is released, allowing the inner bag 4 to be extracted, and the inner bag 4 moves in the direction of coming out of the container body 2 due to the biasing force of the biasing portions 48 and floats away from the outer shell 3.

Next, the inner bag 4 is extracted from the container body 2 by pulling the inner bag 4. The inner bag 4 may be extracted after or while being twisted, or may be extracted without being twisted. Also, the inner bag 4 may be extracted by pulling the mouth portion attachment 8, or the inner bag 4 may be extracted by directly grasping and pulling the inner bag 4. In either case, since the inner bag 4 has already floated away from the outer shell 3, the inner bag 4 is easily extractable.

### 1-2. Method for manufacturing dual container 1

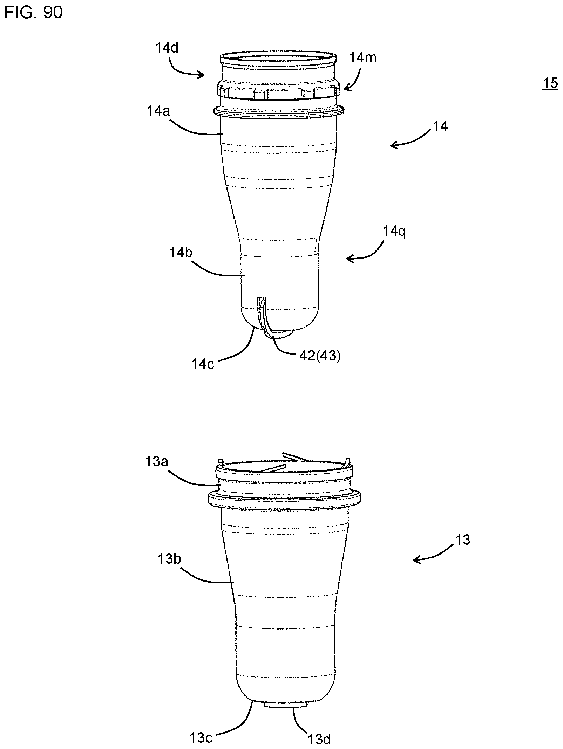

As shown in FIG. 90, the container body 2 can be formed by heating the preform 15 and performing biaxial stretch blow molding. With respect to the preform 15, the descriptions of the first embodiment of the first perspective also apply to this embodiment unless doing so contradicts the scope of the descriptions .

### 2. Second embodiment

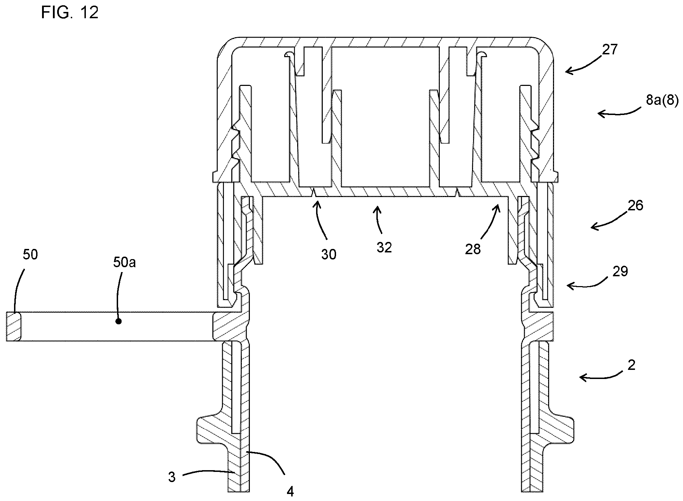

The dual container 1 of this embodiment has the same structure as the second embodiment of the first perspective, as shown in FIGs. 9 to 12. In this embodiment, the biasing portions 48 are not provided, and the mouth portion attachment 8 engages only with the inner bag 4, and the inner bag 4 is provided with a hook portion 50 having an annular portion 50a; these are the main differences from the first embodiment. The differences are mainly explained below.

### <Structures of the container body 2 and mouth portion attachment 8>

The mouth portion attachment 8 differs from the first embodiment in that the main body portion 28 is not provided with the annular protrusions 28c and the engaging protrusion 28d, and that the structure of the band portion 29 is different; other configurations are similar to those of the first embodiment.

### 3. Third embodiment

The dual container 1 of this embodiment has the same structure as the first embodiment of the first perspective shown in FIGs. 1 to 7. In this embodiment, the hook portion 50 is provided on the mouth portion attachment 8, which is the main difference from the second embodiment. The difference is mainly explained below.

### <Structures of the container body 2 and mouth portion attachment 8>

In this embodiment, the inner bag 4 is not provided with the hook portion 50 but is provided with an abutting flange 4c4. By abutting the abutting flange 4c4 against the open end 3a, the inner bag 4 is prevented from falling into the outer shell 3.

In the mouth portion attachment 8 of this embodiment, a hook portion 50 is provided on the overcap 27, which is different from the second embodiment; the other features are similar to the second embodiment.

### <Method for extracting the inner bag 4>

In this embodiment, the inner bag 4 is extractable from the container body 2 by placing the hook portion 50 in an upright position as shown in FIG. 7B and hooking a finger on the annular portion 50a and pulling it.

### 4. Method for extracting the inner bag of the dual container

The method for extracting the inner bag 4 of the dual container 1 according to an embodiment of the present invention includes a step of extracting the inner bag 4 from the container body 2 and a twist angle of the inner bag 4 during the extracting is 45 degrees or less. The twist angle is the rotation angle of the opening 5 of the inner bag 4 with respect to the bottom portion 7 of the inner bag 4. The larger the twist angle is, the smaller the diameter of the inner bag 4 becomes and the easier it becomes to extract the inner bag 4, but since the additional operation of twisting is required, the operation of extracting the inner bag 4 becomes more complicated.

In this method, since the twist angle is 45 degrees or less, the inner bag 4 is extracted with little or no twisting of the inner bag 4. Although the force required to extract the inner bag 4 tends to be larger than when twisting the inner bag 4, by adopting the configurations shown in the first to third embodiments described above, the ease of extraction can be improved. The twist angle is, for example, 0 to 45 degrees, and is specifically, for example, 0, 5, 10, 15, 20, 25, 30, 35, 40, 45 degrees, or may also be set to an arbitrary value between any two of these exemplary values.

1: dual container, 2: container main body, 3: cuter shell, 3a: opening end, 3b: fitting portion, 3c: engaging protrusion, 3l: cam rail, 3l1: top surface, 3m: engaging recess, 3m1: lower surface, 3n: engaging protrusion, 3o: annular protrusion, 3p: air introduction portion, 3p1: through hole, 3q: sealing flange, 3r: protruding strip, 3s: step, 4: inner bag, 4c: protrusion, 4c1: protruding cylinder, 4c10: gripping portion, 4c11: anti-slip shape, 4c12: uneven shape, 4c13: protrusion, 4c14: minimum diameter portion, 4c15: male threaded portion, 4c19: tip cylinder portion, 4c2: engaging protrusion, 4c21: lower cylinder, 4c22: upper cylinder, 4c23: tip portion, 4c3: tapered surface, 4c4: abutting flange, 4c5: annular protrusion, 4c6: lower surface, 4c7: lower surface, 4c8: tapered surface, 4c9: enlarged diameter portion, 4d: inner bag main body, 4e: step, 4f: reduced diameter portion, 4g: cam protrusion, 4h: engaging protrusion, 4k: enlarged diameter structure, 4l: open end, 4m: engaging portion, 4m1: tapered surface, 4q: engaging protrusion, 4r: fitting portion, 5: mouth portion, 5b: flange, 5c: open end, 6: trunk portion, 6b: shoulder portion, 6c: trunk portion main body, 7: bottom portion, 8: mouth portion attachment, 8a: cap, 8b: attachment portion, 8b1: outer edge, 8c: engaging portion, 8d: portion, 8e: cylinder portion, 8f: through hole, 9: locking mechanism, 9a: inner bag locking mechanism, 13: outer preform, 13a: mouth portion, 13b: trunk portion, 13c: bottom portion, 13d: annular protrusion, 13e: through hole, 13f: protruding strip, 13g: lower end, 13h: lower end, 13i: open end, 13j: portion, 14: inner preform, 14a: mouth portion, 14b: trunk portion, 14c: bottom portion, 14d: protrusion, 14m: engaging portion, 14q: main body portion, 14r: inwardly curved portion, 15: preform, 15a: mouth portion, 15b: trunk portion, 15c: bottom portion, 15d: gap, 16: outer preform main body, 16b: male threaded portion, 17: engaging member, 25: cam member, 25a: cylinder, 25b: engaging protrusion, 25c: female threaded portion, 25d: biasing portion, 25d1: protrusion, 25e: lower end, 25f: upper end, 26: inner plug, 26a: outer cylinder, 26b: inner ring, 26c: annular protrusion, 26d: engaging protrusion, 26e: first top plate, 26f: nozzle, 26f1: opening, 26g: upper cylinder, 26h: second top plate, 26i: engaging protrusion, 26i1: tapered surface, 26j: male threaded portion, 26k: lower end, 26l: opening, 27: overcap, 27a: outer cylinder, 27b: intermediate cylinder, 27c: inner cylinder, 27d: top plate, 27e: knurl, 27f: female threaded portion, 27g: engaging protrusion, 27h: recess, 28: main body portion, 28a: outer cylinder, 28b: inner cylinder, 28c: annular protrusion, 28d: engaging protrusion, 28e: top plate, 28f: discharge cylinder, 28g: mounting cylinder, 28h: male threaded portion, 28i: knurl, 28j: flow hole, 29: band portion, 29a: outer cylinder, 29b: inner cylinder, 29c: annular protrusion, 29d: cylinder portion, 30: connecting portion, 31: cam mechanism, 32: opening portion, 32a: engaging cylinder, 33: outer shell main body, 33b: male threaded portion, 33c: female threaded portion, 33d: engaging protrusion, 34: engaging member, 34a: protrusion, 34b: female threaded portion, 34c: recess, 34d: male threaded portion, 42: protruding seal portion, 43: seal portion, 45: rotation prevention seal, 46: jig, 47: connecting portion, 48: biasing portion, 48a: spring portion, 49: restricting portion, 49a: engaging portion, 50: hook portion, 50a: annular portion, 50b: hinge, 51: tear initiation portion, 52: treatment target member, 53: closed space, 54: valve member, 54a: cylindrical body, 54b: movable body, 55: intermediate space, 69: cam mechanism, 69a: first cam portion, 69b: second cam portion, 87: cap main body, 88: cap trunk portion, 88a: outer cylinder, 88b: inner cylinder, 88c: annular protrusion, 88d: engaging protrusion, 88d1: tapered surface, 88e: top plate, 88f: opening, 88g: engaging protrusion, 88g1: tapered surface, 88h: female threaded portion, 88i: lower end, 88j: nozzle, 88k: opening, 88l: inner ring, 88m: first top plate, 88n: second top plate, 88o: upper cylinder, 89: cap lid portion, 89a: outer cylinder, 89b: inner ring, 89c: top plate, 89d: knob, 89e: inner cylinder

## Claims

1. A dual container, comprising:
a container body; and
a mouth portion attachment,
wherein
the container body includes an inner bag and an outer shell that is disposed to cover the inner bag;
the inner bag is configured to be extractable from the container body; and
the mouth portion attachment is attached to a mouth portion of the inner bag and is configured to be removable from the mouth portion.

2. The dual container of Claim 1, wherein
the mouth portion attachment is attached to the mouth portion of the inner bag by pushing-in.

3. The dual container of Claim 1, wherein
the mouth portion attachment includes an engaging portion that engages with the inner bag; and
the mouth portion attachment is configured to be removable from the mouth portion by removing a portion having the engaging portion from the mouth portion attachment.

4. A method for extracting an inner bag of the dual container of any one of Claims 1 to 3, comprising:
a step of removing the mouth portion attachment from the mouth portion after extracting the inner bag from the container body.

5. A method for producing regenerated resin from a dual container as a raw material, comprising
a regeneration step,
wherein
in the regeneration step, regenerated resin is produced by carrying out a regeneration treatment on a treatment target member;
the dual container includes a container body and a mouth portion attachment;
the container body includes an inner bag and an outer shell that is disposed to cover the inner bag;
the mouth portion attachment is attached to a mouth portion of the inner bag; and
the treatment target member is a member in which the mouth portion attachment is attached to the inner bag.

6. The method of Claim 5, wherein
main resin of the inner bag and main resin of the mouth portion attachment are similar resins.

7. The method of Claim 6, wherein
a ratio of all different resins, calculated by [(Ac+Bc)/(A+B)], is 10% by mass or less,
wherein
A represents mass of the inner bag, Ac represents mass of different resins excluding the main resin in the inner bag, B represents mass of the mouth portion attachment, and Bc represents mass of different resins excluding the main resin in the mouth portion attachment.

8. The method of Claim 7, wherein
a ratio of different resins in the inner bag, calculated by Ac/A, is 5% by mass or more.

9. The method of Claim 8, wherein
the ratio of different resins in the inner bag is 10% by mass or more; and
the ratio of all different resins is 5% by mass or less.

10. The method of any one of Claims 5 to 9, wherein
main resin of the inner bag and main resin of the mouth portion attachment are polyolefin-based resins.

11. A preform formed by covering an inner preform with an outer preform, wherein
Di_{0.2}/Do_{0.2} is 0.70 or less,
wherein
Di_{0.2} represents an outer diameter of the inner preform at a position 0.2H from a lower end of the outer preform, H represents a total height of the outer preform, and Do_{0.2} represents an outer diameter of the outer preform.

12. The preform of Claim 11, wherein
the inner preform includes an inwardly curved portion that curves so as to protrude inwardly.

13. The preform of Claim 12, wherein
Hc/H is 0.10 or more,
wherein
Hc represents a height range of the inwardly curved portion.

14. The preform of Claim 12, wherein
a gap between the inner preform and the outer preform is maximized at the inwardly curved portion within a range of 0.2H to 1.0H from the lower end of the outer preform.

15. The preform of Claim 11, wherein
Di_{0.2/}Di is 0.60 or less,
wherein
Di represents an outer diameter of the inner preform at an opening end of the outer preform.

16. The preform of any one of Claims 11 to 15, wherein
Do_{0.2}/Do is 0.95 or less,
wherein
Do represents an outer diameter of the outer preform at an opening end of the outer preform.

17. A preform formed by covering an inner preform with an outer preform, wherein
a mouth portion of the outer preform comprises a through hole; and
an inner surface of the mouth portion of the outer preform comprises a protruding strip extending toward a bottom side of the outer preform.

18. The preform of Claim 17, wherein
the outer preform is formed by injection molding; and
the inner preform is formed by direct blow molding.

19. The preform of Claim 17 or 18, wherein
a lower end of the protruding strip is positioned at 0.8H or less from a lower end of the outer preform, wherein
H represents a total height of the outer preform.

20. A dual container, comprising:
a container body,
wherein
the container body includes an inner bag and an outer shell that is disposed to cover the inner bag; the outer shell includes an outer shell main body and an engaging member that is connected to the outer shell main body;
the inner bag engages with the engaging member in an axial direction; and
the outer shell main body is configured to be separable from the engaging member.

21. The dual container of Claim 20, wherein
the engaging member is screwed to the outer shell main body.

22. A dual container, comprising:
a container body; and
a cap,
wherein
the container body includes an inner bag and an outer shell that is disposed to cover the inner bag;
the cap is attached to a mouth portion of the container body;
the cap includes an inner plug and a cap main body;
the inner plug is engaged with the inner bag in the axial direction of the mouth portion, and has an opening that communicates with an inside of the inner bag;
the cap main body is attached to the inner plug;
the cap is configured to be able to switch from a closed state to a released state while the cap main body is attached, by moving the cap main body relative to the inner plug in the axial direction, to the inner plug;
the closed state is a state in which closing of the opening is achieved by the cap main body; and
the released state is a state in which the closing is released.

23. The dual container of Claim 22, wherein
the inner plug is engaged with a mouth portion of the inner bag in a circumferential direction of the mouth portion; and
the inner plug is configured to rotate integrally with the cap main body in the released state.

24. The dual container of Claim 23, wherein
a cam mechanism is provided that displaces the inner bag so that the inner bag comes out of the container body when the inner bag is rotated with respect to the outer shell.

25. The dual container of any one of Claims 22 to 24, wherein
the cap main body is attached to the inner plug by screwing; and
rotating the cap main body with respect to the inner plug causes moving of the cap main body in the axial direction, and as a result of the moving, the closed state is switched to the released state.

26. A dual container, comprising:
a container body; and
a mouth portion attachment,
wherein
the container body includes an inner bag and an outer shell that is disposed to cover the inner bag;
the mouth portion attachment is attached to a mouth portion of the inner bag; and
the dual container is configured so as to allow air inside the inner bag to be discharged when the inner bag is extracted from the container body while the mouth portion attachment is attached to the mouth portion.

27. A method for extracting an inner bag, comprising:
a step of extracting the inner bag,
wherein
extracting of the inner bag from a container body having the inner bag and an outer shell is performed in the step of extracting the inner bag; and
the extracting is performed while a mouth portion attachment is attached to a mouth portion of the inner bag and air inside the inner bag is dischargeable.

28. A dual container, comprising:
a container body; and
a cap,
wherein
the container body includes an inner bag and an outer shell that is disposed to cover the inner bag;
the cap is attached to a mouth portion of the container body;
the inner bag in the mouth portion includes a protrusion that protrudes from the outer shell;
the cap includes a cam member and a cap trunk portion;
the cam member is engaged with the outer shell in a circumferential direction of the mouth portion;
the protrusion is configured to move outward in an axial direction of the mouth portion due to action of a cam mechanism between the cam member and the protrusion, when the protrusion is rotated with respect to the cam member; and
the cap trunk portion engages with the protrusion in the axial direction and the circumferential direction.

29. The dual container of Claim 28,
wherein
the cam mechanism includes a first cam portion provided on the protrusion and a second cam portion provided on the cam member; and
the first cam portion moves relative to the second cam portion in an axial direction when the protrusion is rotated with respect to the cam member, allowing the protrusion to move outward in the axial direction.

30. The dual container of Claim 29,
wherein
the second cam portion is located closer to an opening end of the protrusion than the first cam portion in an initial state before starting to extract the inner bag from the container body; and
the second cam portion is pressed toward the first cam portion in the initial state.

31. The dual container of Claim 29 or 30,
wherein
the first cam portion is a male threaded portion, and the second cam portion is a female threaded portion.

32. A dual container, comprising:
a container body; and
a mouth portion attachment,
wherein
the mouth portion attachment is attached to a mouth portion of the container body;
the container body includes an inner bag and an outer shell that is disposed to cover the inner bag;
the inner bag includes a protrusion that protrudes from an opening end of the outer shell; and
the protrusion is provided with a gripping portion having an anti-slip shape.

33. The dual container of Claim 32,
wherein
in the state where the mouth portion attachment is attached to the mouth portion, the anti-slip shape is not engaged with the mouth portion attachment in a circumferential direction, and the gripping portion is not covered by the mouth portion attachment.

34. The dual container of Claim 32 or 33,
wherein
the anti-slip shape is an uneven shape.

35. The dual container of Claim 32 or 33,
wherein
the anti-slip shape includes a protrusion that protrudes in a radial direction beyond an outer edge of an attachment portion that is a portion of the mouth portion attachment and is attached to the mouth portion.

36. A dual container, comprising:
a container body; and
a mouth portion attachment,
wherein
the mouth portion attachment includes an inner plug that is attached to a mouth portion of the container body, and an overcap that is attached to the inner plug;
the container body includes an inner bag and an outer shell that is disposed to cover the inner bag;
the mouth portion attachment is configured to be removable from the mouth portion; and
a mouth portion of the inner bag and the overcap each comprise an engaging protrusion that allows the mouth portion of the inner bag to engage with the overcap in a circumferential direction.

37. The dual container of Claim 36,
wherein
the inner plug is attached to the mouth portion of the inner bag.

38. A method for extracting an inner bag of a dual container,
wherein
the dual container includes a container body and a mouth portion attachment;
the mouth portion attachment is attached to a mouth portion of the container body;
the container body includes an inner bag and an outer shell that is disposed to cover the inner bag;
the method includes a step of removing the mouth portion attachment and a step of extracting the inner bag; in the step of removing the mouth portion attachment, the mouth portion attachment is removed from the mouth portion; and
in the step of extracting the inner bag, the inner bag is removed while or after the inner bag is twisted by rotating a twisting jig while a mouth portion of the inner bag are engaged with the twisting jig in a circumferential direction.

39. The method of Claim 38,
wherein
the mouth portion attachment includes an inner plug that is attached to the mouth portion of the container body, and an overcap that is attached to the inner plug; and
the twisting jig is the overcap.

40. The method of Claim 39,
wherein
the inner plug is attached to the mouth portion of the inner bag.

41. A dual container, comprising:
a container body; and
a mouth portion attachment,
wherein
the container body includes an inner bag and an outer shell that is disposed to cover the inner bag;
the mouth portion attachment is attached to a mouth portion of the container body;
restriction of rotation of a mouth portion of the inner bag with respect to the outer shell is performed by a locking mechanism or a rotation prevention seal; and
the restriction is released by releasing lock of the locking mechanism or by removing or breaking the rotation prevention seal.

42. The dual container of Claim 41,
wherein
rotation of the mouth portion of the inner bag with respect to the outer shell is restricted by the locking mechanism; and
the locking mechanism is an inner bag locking mechanism that restricts rotation of the mouth portion of the inner bag by circumferential engagement between the outer shell and the inner bag.

43. The dual container of Claim 42,
wherein
the inner bag locking mechanism is configured in such a way that lock by the inner bag locking mechanism is releasable by displacing the inner bag in an axial direction with respect to the outer shell.

44. The dual container of any one of Claims 41 to 43,
wherein
the mouth portion attachment engages with the inner bag in a circumferential direction;
rotation of the inner bag relative to the outer shell is restricted by the rotation prevention seal; and
the rotation prevention seal is attached across the outer shell and the mouth portion attachment.

45. A dual container, comprising:
a container body; and
a mouth portion attachment,
wherein
the mouth portion attachment is attached to a mouth portion of the container body;
the container body includes an inner bag and an outer shell that is disposed to cover the inner bag;
the inner bag includes a protrusion that protrudes from an opening end of the outer shell;
the dual container includes a biasing portion that applies a biasing force to the inner bag in a direction of coming out of the container body; and
the dual container includes a restricting portion that restricts movement of the inner bag due to the biasing force.

46. The dual container of Claim 45,
wherein
the inner bag includes an enlarged diameter portion facing the opening end of the outer shell; and
the biasing portion is provided between the opening end of the outer shell and the enlarged diameter portion.

47. The dual container of Claim 45 or 46,
wherein
the restricting portion has an engaging portion by which the mouth portion attachment is engaged with the outer shell; and
restriction by the restricting portion is released by releasing engagement between the mouth portion attachment and the outer shell.

48. A dual container, comprising:
a container body; and
a mouth portion attachment,
wherein
the mouth portion attachment is attached to a mouth portion of the container body;
the container body includes an inner bag and an outer shell that is disposed to cover the inner bag; and
the inner bag or the mouth portion attachment comprises a hook portion having an annular portion.

49. The dual container of Claim 48,
wherein
the hook portion is provided on the inner bag.

50. The dual container of Claim 48 or 49,
wherein
the hook portion is provided on the mouth portion attachment.

51. A method for extracting an inner bag of a dual container,
wherein
the dual container includes a container body;
the container body includes an inner bag and an outer shell that is disposed to cover the inner bag;
the method includes a step of extracting the inner bag from the container body; and
a twist angle of the inner bag during the extracting is 45 degrees or less.
